# EUROPÄISCHE PATENTANMELDUNG

(11) **EP 1 602 661 A2**
(43) Veröffentlichungstag der Anmeldung: **07.12.2005**
(21) Anmeldenummer: 05010841.4
(22) Anmeldetag: 19.05.2005
(51) Int. Cl.: C07F 15/04, C07F 3/00

(54) **Dinukleare Übergangsmetallkomplexe**

(30) Priorität: 27.05.2004 DE 102004025938
(71) Anmelder: LANXESS Deutschland GmbH, 51369 Leverkusen (DE)
(72) Erfinder: Arndt-Rosenau, Michael, Dr., 41539 Dormagen (DE)

(57) **Zusammenfassung**

Die Erfindung betrifft Verbindungen mit zwei Metallzentren, ein Verfahren zur ihrer Herstellung, die Verwendung der Verbindungen als Katalysatoren, ein Verfahren zur Herstellung von Homo-, Co- und Oligo-Polymerisaten unter Verwendung dieser Verbindungen, Polymerisate erhältlich aus olefinischen Monomeren und den Verbindungen, die Verwendung der Polymere für Formteile aller Art sowie Formteile erhältlich aus den entsprechenden Polymeren.

## Beschreibung

Die Erfindung betrifft Verbindungen mit zwei Metallzentren, ein Verfahren zur ihrer Herstellung, die Verwendung der Verbindungen als Katalysatoren, ein Verfahren zur Herstellung von Homo-, Co- und Oligo-Polymerisaten unter Verwendung dieser Verbindungen, Polymerisate erhältlich aus olefinischen Monomeren und den Verbindungen, die Verwendung der Polymere für Formteile aller Art sowie Formteile erhältlich aus den entsprechenden Polymeren.

Es besteht ein großer Bedarf an mehrkernigen Verbindungen, die eine besonders hohe Aktivität bei der Polymerisation von Olefinen gegenüber herkömmlichen Katalysatoren zeigen.

In Bull. Chem. Soc. Jpn. 62, (1989), 1325 - 1327, beschreiben M.Jacob et al. die Synthese von Eisenkomplexen aus Phenylendiaminen und Pyridincarbaldehyd. Sie konnten zeigen, dass bei Verwendung von para-Phenylendiamin und meta-Phenylendiamin zweikernige Komplexe gebildet werden, die die katalytische Epoxidierung von Norbornen besser katalysieren als die entsprechende einkernige Struktur, die bei Verwendung von ortho-Phenylendiamin gebildet wird. Es wurden keine Versuche zur Polymerisationskatalyse durchgeführt. Im Gegensatz zu den erfindungsgemäßen Verbindungen werden die beiden Eisenzentren in den von Jacob et al. beschriebenen Versuchen durch zwei Liganden miteinander verknüpft.

R. Ziessel et al. beschreiben in Chem. Rev. 216-217 (2001), 195-223 die Bildung supramolekularer Aggregate unter Verwendung von Di-, Oligo- und Polypyridinaldehyde mit Iminfunktionalitäten. Auch in ihren Verbindungen sind die Metallzentren durch mindestens zwei der Liganden miteinander verknüpft.

Ein Vergleich zwischen einem mono und einem binuklearen Pyridylimin-Komplex des Palladiums ([N-Dodecyl-pyridyl-2-methanimin]palladiumdichlorid und ({[N,N'-µ-1,2-dodecandiyl]bis[pyridyl-2-methanimin]}palladiumdichlorid), wobei die Verbrückung der Pyridylimineinheiten über eine Alkylkette erfolgt und somit eine elektronische Wechselwirkung zwischen den beiden Metallzentren nicht auftreten kann, wird von R. Chen et al. in J. Mol. Catal. A: Chem. 193 (2003); 33-40 beschrieben. Die Komplexe wurden vergleichend in der Polymerisation von Ethen getestet und es wurde gefunden, dass der dinukleare Komplex eine niedrigere Polymerisationsaktivität aufweist.

In US-A 2002/0082162 offenbaren Y. Li et al. die Synthese und Verwendung von polynuklearen α-Diimin-Nickel-Komplexen und deren Verwendung als Polymerisationskatalysatoren. In ihren Fall sind die Substruktureinheiten, die die Nickel-Zentren komplexieren über eine Gruppe miteinander verbunden, die einen substituierten Kohlenwasserstoff repräsentiert. Die Einführung dieser Gruppe unterbindet wiederum die elektronische Kopplung der katalytisch aktiven Zentren.

T. Kanbara et al. beschreiben dagegen in Macromolecules 33 (2000), 657-659 und in J. Polym. Sci.: Part A: Polym. Chem. 40 (2002), 2637-2647 Palladium und Platin Komplexe mit Poly-(arylendiphosphin)-, Poly(arylendiphosphinoxid)- und Poly(arylendiphosphinsulfid)-Liganden, bei denen para-Phenylensubstituenten die Phosphorzentren des Liganden miteinander verbinden. Die so gebildeten polymeren Katalysatoren zeigen im Vergleich zu den entsprechenden mononuklearen Spezies keine verbesserten katalytischen Aktivitäten in organischen Kupplungsreaktionen.

Die Aufgabe der vorliegenden Erfindung ist es daher dinukleare Verbindungen bereit zu stellen, die eine verbesserte katalytische Aktivität bei der Oligo- und Polymerisation von Olefinen zeigen als die analogen mononuklearen Verbindungen.

Die Aufgabe wird gelöst durch Verbindungen der Formel (I), 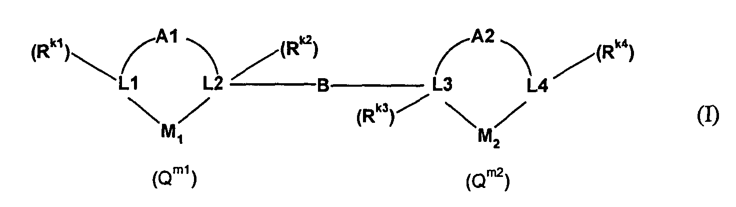 worin
- M₁ und M₂: gleich oder verschieden sein können und unabhängig voneinander ausgewählt sind aus der Gruppe bestehend aus Übergangsmetallen der 3. bis 11. Gruppe des Periodensystems, Al und B und
- L1, L2, L3, L4: gleich oder verschieden sein können und unabhängig voneinander ausgewählt sind aus der Gruppe bestehend aus N, P, S, O, C, Si, Se, As und Sb und
- A1 und A2: gleich oder verschieden sein können und unabhängig voneinander ausgewählt sind aus Gruppen und/oder Atomen, die die Zentren L1 mit L2 und L3 mit L4 über eine kovalente Bindung verbrücken können und optional weitere koordinierende Gruppen für M₁ und M₂ enthalten können und
- B: eine Gruppe ist, die die Zentren L2 mit L3 elektronisch über kovalente Bindungen miteinander verknüpft und
- m1: die Anzahl und den Unterschied der einzelnen Liganden Q wiedergibt und für alle Werte zwischen 1 bis 6 steht und
- m2: die Anzahl und den Unterschied der einzelnen Liganden Q wiedergibt und für alle Werte zwischen 1 bis 6 und
- Q: für eine Gruppe von 1 bis 6 Liganden, die an M₁ gebunden sind und für eine Gruppe von 1 bis 6 Liganden, die an M₂ gebunden sind, steht, wobei sowohl die Q-Liganden, die an M₁ als auch die Q-Liganden, die an M₂ gebunden sind gleich oder verschieden sein können und unabhängig voneinander ausgewählt werden aus der Gruppe bestehend aus monoanionischen, dianionischen und neutralen Liganden und
- k1: die Anzahl und die Unterschiede der einzelnen Substituenten R, die an L1 gebunden sind, wiedergibt und für alle Werte zwischen 0 bis s¹-1 steht, wobei s¹ die Valenz von L1 ist und
- k2: die Anzahl und die Unterschiede der einzelnen Substituenten R, die an L2 gebunden sind, wiedergibt und für alle Werte zwischen 0 bis s²-2 steht, wobei s² die Valenz von L2 ist und
- k3: die Anzahl und die Unterschiede der einzelnen Substituenten R, die an L3 gebunden sind, wiedergibt und für alle Werte zwischen 0 bis s³-2 steht, wobei s³ die Valenz von L3 ist und
- k4: die Anzahl und die Unterschiede der einzelnen Substituenten R, die an L4 gebunden sind, wiedergibt und für alle Werte zwischen 0 bis s⁴-1 steht, wobei s⁴ die Valenz von L4 ist und
- R: für eine Gruppe von 0 bis s¹-1 Substituenten, die an L1 gebunden sind, eine Gruppe von 0 bis s²-2 Substituenten, die an L2 gebunden sind, eine Gruppe von 0 bis s³-2 Substituenten, die an L3 gebunden sind und für eine Gruppe von 0 bis s⁴-1 Substituenten, die an L4 gebunden sind, steht, wobei diese gleich oder verschieden sein können und unabhängig voneinander ausgewählt sind aus der Gruppe bestehend aus Hydrid, C₁₋₂₀-Alkyl-, C₁₋₂₀- Alkenyl-, C₅₋₂₀ -Cycloalky-l, C₆₋₂₀ -Aryl-, C₁₋₂₀ -Heteroaryl-, Alkylarylgruppen mit C₁₋₂₀ Gruppierungen im Alkylrest und C₆₋₂₀ Gruppierungen im Arylrest, -OD¹, -ND²D³, PD⁶D⁷D⁸ und -BD⁹D¹⁰,
wobei D¹ bis D¹⁰ gleich oder verschieden sein kann und unabhängig voneinander ausgewählt ist aus der Gruppe bestehend aus H, C₁₋₂₀ -Alkyl-, C₆₋₂₀ -Cycloalkyl-, C₆₋₂₀-Aryl-, Alkylarylgruppen mit C₁₋₂₀ Gruppierungen im Alkylrest und C₆₋₂₀ Gruppierungen im Arylrest und Arylalkylgruppen mit C₁₋₂₀ Gruppierungen im Alkylrest und C₆₋₂₀ Gruppierungen im Arylrest.
Vorteilhaft sind die erfindungsgemäßen Verbindungen dann, wenn
- L1, L2, L3 und L4: gleich oder verschieden sind und unabhängig voneinander ausgewählt sind aus der Gruppe bestehend aus N, O, P und S.

Vorteilhaft sind Verbindungen der Formel (II), 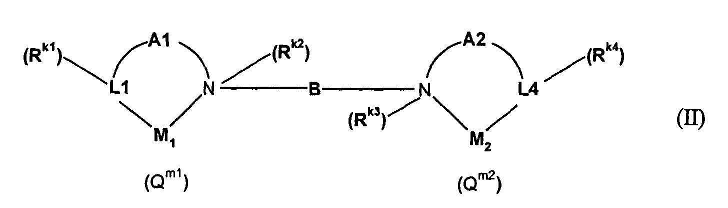 wobei L2 und L3 Stickstoffzentren sind.

Vorteilhaft sind die erfindungsgemäßen Verbindungen dann wenn
- A1 und A2: gleich oder verschieden sind und unabhängig voneinander ausgewählt sind aus der Gruppe bestehend aus gesättigten oder ungesättigten Kohlenwasserstoffresten mit 1 bis 20 C-Atomen, cyclischen gesättigten oder ungesättigten Kohlenwasserstoffresten mit 4 bis 20 C-Atomen, heterocyclischen gesättigten oder ungesättigen Verbindungen mit 3 bis 20 C-Atomen, stickstoffhaltigen Gruppen, phosphorhaltigen Gruppen, siliziumhaltigen Gruppen, zinnhaltigen Gruppen, germaniumhaltigen Gruppen und borhaltigen Gruppen , wobei all diese Gruppen noch weitere Substituenten tragen können.

Vorteilhafte sind Verbindungen der Formel (III), 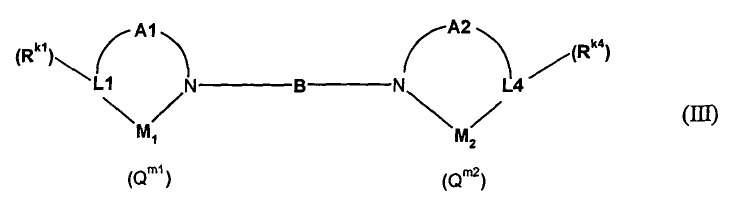 wobei L2 und L3 Stickstoffatome sind, die über eine Doppelbindung an die zugehörigen Fragmente A1 und A2 gebunden sind.

Vorteilhaft sind ferner Verbindungen bei denen B aromatische oder heteroaromatische Gruppe ist, die weitere Substituenten tragen können.

Vorteilhaft sind Verbindungen der Formel (IV), 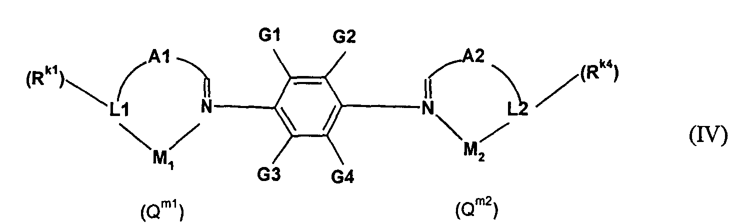 wobei L2 und L3 Stickstoffzentren sind, die zu A1 und A2 über eine Doppelbindung verknüpft sind und wobei B ein para-substituierter aromatischer Sechsring ist, der mit Substituenten

G1, G2, G3, G4 die gleich oder verschieden sind und ausgewählt sind aus der Gruppe bestehend aus Halogenid, Hydrid, C₁₋₂₀ -Alkyl-, C₁₋₂₀ -Alkenyl-, C₅₋₂₀ -Cycloalkyl-, C₆₋₂₀ -Aryl-, Alkylarylgruppen mit C₁₋₂₀ Gruppierungen im Alkylrest und C₆₋₂₀ Gruppierungen im Arylrest,-OT¹, -OT¹T², -NT³T⁴, -NT⁵T⁶T⁷, -PT⁸T⁹, -PT¹⁰T¹¹T¹², wobei T¹bis T¹² gleich oder verschieden sind und unabhängig voneinander ausgewählt sind aus der Gruppe bestehend aus H, C₁₋₂₀ -Alkyl-, C₅₋₂₀ -Cycloalkyl-, C₆₋₂₀ -Aryl-, C₁₋₂₀ -Heteroaryl-, Alkylarylgruppen mit C₁₋₂₀Gruppierungen im Alkylrest und C₆₋₂₀ Gruppierungen im Arylrest und Arylalkylgruppen mit C₁₋₂₀ Gruppierungen im Alkylrest und C₆₋₂₀ Gruppierungen im Arylrest.

Vorteilhaft sind Verbindungen bei denen L1 gleich L4 ist und das unsubstituierte Grundgerüst von A1 gleich dem unsubstituierten Grundgerüst von A2 ist.

Vorteilhaft sind Verbindungen der Formel (V), 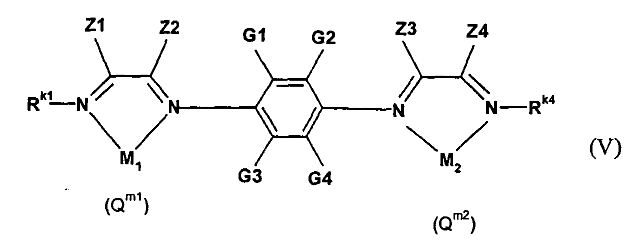 wobei
- Z1, Z2, Z3, Z4: gleich oder verschieden sind und unabhängig voneinander ausgewählt sind aus der Gruppe bestehend aus Halogenid, Hydrid, C₁₋₂₀ -Alkyl-, C₁₋₂₀ -Alkenyl-, C₅₋₂₀ -Cycloalkyl-, C₆₋₂₀ -Alkylarylgruppen mit C₁₋₂₀ Gruppierungen im Alkylrest und C₆₋₂₀ Gruppierungen im Arylrest, -OT¹, -OT¹T², -NT³T⁴, -NT⁵T⁶T⁷, -PT⁸T⁹ und -PT¹⁰T¹¹T¹², wobei zwei benachbarte Z-Substituenten gemeinsam einen gesättigten oder ungesättigten Ring bilden können, der weitere Substituenten tragen kann.

Vorteilhaft sind Verbindungen der Formel (V) bei denen
- R^{k1} und R^{k4}: für eine Gruppe von 1 bis s¹-2 Substituenten steht, die an L1 gebunden sind und für eine Gruppe von 1 bis s⁴-2 Substituenten steht, die an L4 gebunden sind wobei diese gleich oder verschieden sind und unabhängig voneinander ausgewählt sind aus der Gruppe bestehend aus ungesättigten C₆₋₂₀ Ringsystemen, die weitere Substituenten enthalten können, wobei die Substituenten gleich oder verschieden sein können und unabhängig voneinander ausgewählt sind aus der Gruppe bestehend aus Halogenid, Hydrid, C₁₋₂₀ -Alkyl-, C₁₋₂₀ Alkenyl-, C₅₋₂₀ -Cycloalkyl-, C₆₋₂₀-Alkylarylgruppen mit C₁₋₂₀ Gruppierungen im Alkylrest und C₆₋₂₄ Gruppierungen im Arylrest, -OT¹, -OT¹T², -NT³T⁴, -NT⁵T⁶T⁷, -PT⁸T⁹ und -PT¹⁰T¹¹T¹² und zwei benachbarte Substituenten gemeinsam einen gesättigten oder ungesättigten Ring bilden können, der weitere Substituenten tragen kann.

Vorteilhaft sind die erfindungsgemäßen Verbindungen bei denen die Substituenten R der Gruppen R^{k1} und R^{k4} jeweils ausgewählt sind aus der Gruppe von substituierten Aryl- und/oder Heteroarylgruppen.

Vorteilhaft sind Verbindungen der Formel (V) bei denen
- M₁ und M₂: gleich oder verschieden sind und unabhängig voneinander ausgewählt sind aus der Gruppe bestehend aus Ti, Zr, Hf, V, Cr, Mo, W, Mn, Fe, Ru, Co, Rh, Ni, Pd, Pt, Cu, Zn, Al und B
- m1: die Anzahl und den Unterschied der einzelnen Liganden Q wiedergibt und für alle Werte zwischen 1 bis 6 steht und
- m2: die Anzahl und den Unterschied der einzelnen Liganden Q wiedergibt und für alle Werte zwischen 1 bis 6 steht und
- Q: für eine Gruppe von 1 bis 6 Liganden, die an M₁ gebunden sind und für eine Gruppe von 1 bis 6 Liganden, die an M₂ gebunden sind, steht, wobei sowohl die Q-Liganden, die an M₁ auls auch die Q-Liganden, die an M₂ gebunden sind unabhängig voneinander ausgewählt werden aus der Gruppe bestehend aus Halogenid, Hydrid, C₁₋₂₀ -Alkyl-, C₁₋₂₀ -Alkenyl-, C₅₋₂₀ -Cycloalkyl-, C₆₋₂₀ -Aryl-, C₁₋₂₀ -Heteroaryl-, Alkylarylgruppen mit C₁₋₂₀ Gruppierungen im Alkyrest und C₆₋₂₀ Gruppierungen im Arylrest, OT¹, OT¹T², -NT³T⁴, -NT⁵T⁶T⁷, -PT⁸T⁹, -PT¹⁰T¹¹T¹², 1,2-Alkandiyl-Verbindungen, 1,4-Alkandiyl-Verbindungen, 1,5-Alkandiyl-Verbindungen, 1,ω-Alkandiyl-Verbindungen, Dialkoholate, Dithiolate, Diamide, Ether, Amine, Phosphine, Phosphinoxide, Olefine, Acetylene, Kohlenmonoxid, Stickstoff (N₂), Wasserstoff (H₂), Carbene, Stickstoff-, Kohlenstoff- und Phosphorylide.

Vorteilhaft sind Verbindungen der Formel (V) bei denen
- M₁ und M₂: gleich oder verschieden sind und unabhängig voneinander ausgewählt sind aus der Gruppe bestehend aus Ti, Zr, Hf, Fe, Ru, Co, Ni, Pd und Al.

Vorteilhaft ist die Verbindung gemäß Formel (VI)

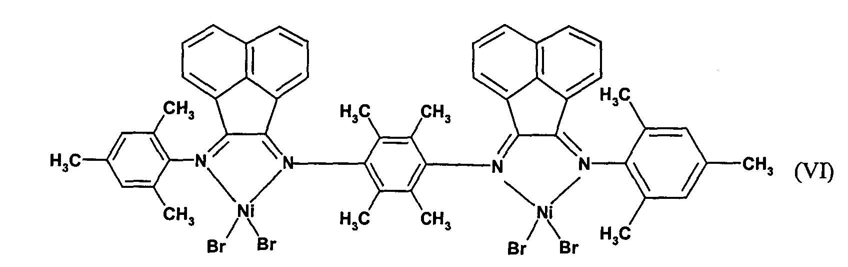

Ein weiterer Gegenstand der Erfindung ist ein Verfahren zur Herstellung der Verbindungen der Formel (I), umfassend die Schritte
a) Herstellung einer Verbindung der Formel (VII), 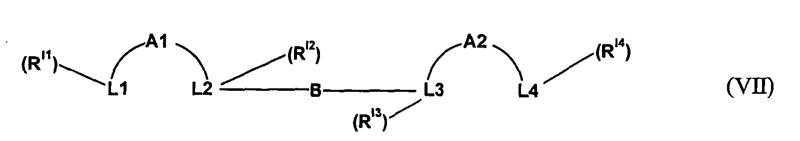 , wobei 11 größer oder gleich k1, 12 größer oder gleich k2, 13 größer oder gleich k3 und 14 größer oder gleich k4 ist;
b) anschließende Umsetzung der Verbindung der Formel (VII) entweder
   I) mit einer metallischen Verbindung der Formel M₁(Q^{m1}) und weitere Umsetzung mit einer metallischen Verbindung der Formel M₂(Q^{m2}) oder
   II) mit einer metallischen Verbindung der Formel M₃(Q^{o3}), dann Umsetzung mit einer metallischen Verbindung der Formel M₁(Q^{m1}) und weitere Umsetzung mit einer metallischen Verbindung der Formel M₂(Q^{m2}) oder
   III) mit einer metallischen Verbindung der Formel M₁(Q^{m1}), dann Umsetzung mit einer metallischen Verbindung der Formel M₃(Q^{o3}) und weitere Umsetzung mit einer metallischen Verbindung der Formel M₂(Q^{m2}) oder
   IV) mit einer metallischen Verbindung der Formel M₃(Q^{o3}), dann Umsetzung mit einer metallischen Verbindung der Formel M₁(Q^{m1}), dann wiederum einer Umsetzung mit einer metallischen Verbindung der Formel M₃(Q^{o3}) und weitere Umsetzung mit einer metallischen Verbindung der Formel M₂(Q^{m2}) oder
   V) mit einer mehreren metallischen Verbindungen der Formel M₃(Q^{o3}), dann Umsetzung mit einer metallischen Verbindung der Formel M₄(Q^{o4}), anschließender Umsetzung mit einer metallischen Verbindung der Formel M₁(Q^{m1}) und anschließende Umsetzung mit einer metallischen Verbindung der Formel M₂(Q^{m2}) oder
   VI) mit einer metallischen Verbindung der Formel M₁(Q^{m1}), dann Umsetzung mit einer metallischen Verbindung der Formel M₃(Q^{o3}), anschließende Umsetzung mit einer metallischen Verbindungen der Formel M₄(Q^{o4}) und anschließende Umsetzung mit einer metallischen Verbindung der Formel M₂(Q^{m2}) oder
   VII) mit einer metallischen Verbindung der Formel M₃(Q^{o3}), dann Umsetzung mit einer metallischen Verbindung der Formel M₄(Q^{o4}), dann Umsetzung mit einer metallischen Verbindung der Formel M₁(Q^{m1}), anschließend wieder Umsetzung mit einer metallischen Verbindung der Formel M₃(Q^{o3}), dann wieder Umsetzung mit einer metallischen Verbindung M₄(Q^{o4}) und anschließende Umsetzung mit einer metallischen Verbindung der Formel M₂(Q^{m2}),
wobei o3 die Anzahl und die Unterschiede der einzelnen Liganden Q wiedergeben, die an M₃ gebunden sind und o3 eine Zahl zwischen 1 und 8 ist und o4 für die Anzahl und die Unterschiede der einzelnen Liganden Q wiedergibt, die an M₄ gebunden sind und o4 eine Zahl zwischen 1 und 8 ist und wobei
- M₃ und M₄: gleich oder verschieden sein können und unabhängig von einander ausgewählt sind aus der Gruppe bestehend aus Übergangsmetallen der 3. bis 11. Gruppe des Periodensystems, Al und B.

Ein weiterer Gegenstand der Erfindung ist die Verwendung der erfindungsgemäßen Verbindungen als Katalysator.

Vorteilhaft werden die Verbindungen in Gegenwart von Lewis-Säuren oder -Basen verwendet.

Ein weiterer Gegenstand der Erfindung ist das Zwischenprodukt erhältlich durch Umsetzung einer der erfindungsgemäßen Verbindungen mit einer Lewis-Säure oder einer Lewis-Base.

Ein weiterer Gegenstand der Erfindung ist ein Verfahren zur Herstellung von Homo-, Co- und/oder Oligo-Polymeren, wobei die erfindungsgemäßen Verbindungen oder die Zwischenprodukte mit olefinischen Monomeren umgesetzt werden.

Vorteilhaft werden in diesem Verfahren die olefinischen Monomere ausgewählt aus der Gruppe bestehend aus Ethen, Propen, 1-Buten, 2-Buten, Isobuten, 1-Penten, 2-Penten, 1-Hexen, 2-Hexen, 3-Hexen, 1-Hepten, 1-Octen, 1-Decen, 1-Dodecen, Cyclopenten, Norbomen, Styrol, p-Methylstyrol, Methylacrylat, Methylmethacrylat, Vinylacetat, Acrylnitril und Methacrylnitril oder Mischungen derselben.

Ein weiterer Gegenstand der Erfindung sind die Polymere erhältlich durch ein Verfahren, in dem die erfindungsgemäßen Verbindungen eingesetzt werden.

Ein weiterer Gegenstand der Erfindung ist die Verwendung der Polymere, die mit Hilfe der erfindungsgemäßen Verbindungen hergestellt wurden, zur Herstellung von Formteilen aller Art.

Ein weiterer Gegenstand der Erfindung sind die Formteile erhältlich durch Verarbeitung der Polymere, die mit Hilfe der erfindungsgemäßen Verbindungen hergestellt werden.

Bei den erfindungsgemäßen Verbindungen der Formel (I) sind M₁ und M₂ gleich oder verschieden und unabhängig voneinander ausgewählt aus der Gruppe bestehend aus Übergangsmetallen der 3.-11.-Gruppe des Periodensystems, Al und B.

Bevorzugt sind Titan, Zirkonium, Hafnium, Vanadium, Chrom, Molybdän, Wolfram, Mangan, Eisen, Ruthenium, Cobalt, Rhodium, Nickel, Palladium, Platin, Kupfer, Zink, Aluminium und Bor.

Besonders bevorzugt werden Titan, Zirkonium, Hafnium, Eisen, Ruthenium, Cobalt, Nickel, Palladium, Kupfer, Zink und Aluminium.

Ganz besonders bevorzugt werden Titan, Zirkonium, Hafnium, Eisen, Ruthenium, Cobalt, Nickel, Palladium.

Insbesondere ganz besonders bevorzugt wird Nickel.

L1, L2, L3 und L4 sind gleich oder verscheiden und unabhängig voneinander ausgewählt aus der Gruppe bestehend aus N, P, S, O, C, Si, Se, As und Sb.

Bevorzugt sind C, N, O, P und S.

Besonders bevorzugt sind für L2 und L3 Stickstoff.

Wenn L2 und L3 gleich N sind, dann sind L1 und L4 bevorzugt ausgewählt aus der Gruppe C, N, O, S und P.

Insbesondere ganz besonders bevorzugt sind L1, L2, L3 und L4 alle Stickstoff.

L1, L2, L3 und L4 können mit weiteren Resten R^{k1}, R^{k2}, R^{k3} und R^{k4} substituiert sein, wobei k1, k2, k3 und k4 für eine Vielzahl - in Abhängigkeit der Valenz von L1, L2, L3 und L4 - von gleichen und/ oder unterschiedlichen Substituenten aus der Gruppe von R-Substituenten, steht und diese weiteren Substituenten an R^{k1}, R^{k2}, R^{k3} und R^{k4} können gleich oder verschieden sein und sind unabhängig voneinander ausgewählt aus der Gruppe bestehend aus Hydrid, C₁₋₂₀-Alkyl-, C₁₋₂₀ -Alkenyl-, C₅₋₂₀ -Cycloalkyl-, C₆₋₂₀ -Aryl-, C₁₋₂₀ -Heteroaryl-, Alkylarylgruppen mit C₁₋₂₀ Gruppierungen im Alkylrest und C₆₋₂₀ Gruppierungen im Arylrest, -OD¹, -ND²D³, -PD⁶D⁷D⁸ und -BD⁹D¹⁰, wobei D¹ bis D¹⁰ gleich oder verschieden sein können und unabhängig voneinander ausgewählt sind aus der Gruppe bestehend aus H, C₁₋₂₀ -Alkyl-, C₅₋₂₀₋ Cycloalkyl-, C₆₋₂₀ -Aryl-, Alkylarylgruppen mit C₁₋₂₀Gruppierungen im Alkylrest und C₆₋₂₀ Gruppierungen im Arylrest und Arylalkylgruppen mit C₁₋₂₀ Gruppierungen im Alkylrest und C₆₋₂₀Gruppierungen im Arylrest.
- Unter C₁₋₂₀-Alkylgrupen: werden sämtliche dem Fachmann bekannte lineare oder verzweigte Alkylreste mit 1 bis 20 C-Atomen verstanden. Bevorzugt sind Methyl-, Ethyl-, n-Propyl-, i-Propyl-, n-Butyl-, i-Butyl-, t-Butyl-, n-Pentyl-, i-Pentyl-, neo-Pentyl-, Hexyl-, Heptyl-, Oktyl-, Nonyl-und Decylgruppen, die ihrerseits wiederum substituiert sein können. Als mögliche Substitueten der C₁₋₂₀ -Alkylgreste sind alle dem Fachmann für Alkylgruppen bekannten Substituenten möglich. Bevorzugte Substituenten sind Halogen, Nitro-, Hydroxyl-, C₁₋₂₀-Alkyl-, C₅₋₂₀-Cycloalkyl-, C₆₋₂₀-Arylgruppen. Besonders bevorzugte Substituenten der C₁₋₂₀-Alkylgruppe sind Benzoyl, Trimethylphenyl, Ethylphenyl, Chlormethyl, Chlorethyl und Nitromethyl.
- Unter C₁₋₂₀-Alkenylgruppen: werden sämtliche dem Fachmann bekannte lineare oder verzweigte Alkenylreste mit 1 bis 20 C-Atomen verstanden. Bevorzugt sind Methyliden-, Ethyliden-, Propyliden- und Cyclohexenylgruppen.
- Unter C₅-C₂₀- Cycloalkylgruppen: werden sämtliche dem Fachmann bekannte ein- oder mehrkemige substituierte und unsubstituierte Cycloalkylreste mit 5 bis 20 C-Atomen verstanden. Bevorzugt sind Cyclopentyl, Cyclohexyl, Cycloheptyl, Cyclooctyl, Cyclononyl sowie teil- oder vollhydriertes Fluorenyl, wobei alle Cycloalkyle ihrerseits wiederum substituiert sein können. Als Substituenten der C₅₋₁₄ Cycloalkyle sind alle dem Fachmann für Cycloalkylgruppen bekannten Substituenten möglich. Bevorzugte Substituenten sind Halogen, Nitro-, C₁₋₁₀-Alkoxy-, C₁₋₁₀-Alkyl-, C₆₋₁₂-Cycloalkyl-, C₆₋₁₂-Arylgruppen. Besonders bevorzugte Substituenten der C₅-C₁₄- Cycloalkylgruppe sind Methylcyclohexyl, Chlorcyclohexyl und Nitrocyclohexyl.
- Unter C₆₋₂₀-Arylgruppen: werden sämtliche dem Fachmann bekannte ein- oder mehrkernige, substituierte und unsubstituierte Arylreste mit 6 bis 20 C-Atomen verstanden. Bevorzugt sind Phenyl, Naphthyl und Fluorenyl, die ihrerseits wiederum substituiert sein können. Als Substituenten der C₆₋₂₀-Arylgruppen sind alle dem Fachmann für Arylgruppen bekannten Substituenten möglich. Bevorzugte Substituenten sind Halogen-, Trifluormethyl-, Nitro-, C₁-C₂₀-Alkoxy-, C₁₋₂₀-Alkyl-, C₅₋₂₀-Cycloalkyl-, C₆₋₂₀-Arylgruppen. Besonders bevorzugte Substituenten der C₆₋₂₀-Arylgruppe sind 3,5-Dimethylphenyl, 4-tert-Butylphenyl-, 4-Methoxyphenyl- , Chloro-, Bromo-, Methyl-, Ethyl-, Propyl- Isopropyl-, tert. Butyl-, Toloyl- und Nitrophenylgruppen.
- Unter C₁₋₂₀-Heteroarylgruppen: werden sämtliche dem Fachmann bekannten ein- oder mehrkernigen substituierte oder unsubstituierte heterozyklischen Aromaten mit 1 bis 20 C-Atomen verstanden. Bevorzugt sind Thiophenyl-, Pyridyl-, Furanyl-, Pyranyl-, Thiazolyl-, Pyrrolyl-, Oxazolyl-, Isoxazolyl-, Pyrazolyl-, Imidazolyl-, 1.2.3-Triazolyl-, 1.2.4-Triazolyl-, Benzofuranyl-, Thianaphthenyl-, Dibenzofuranyl-, Indolyl-, Benzimidazolyl-, Indazolyl-, Chinolyl- Isochinolylgruppen, die ihrerseites weitere Substituenten tragen können. Als Substituenten für die C₁₋₂₀-Heteroarylgruppen sind alle dem Fachmann für Heteroarylgruppen bekannten Substituenten möglich. Bevorzugte Substituenten sind Wasserstoff, Halogene, Nitro-, C₁₋₂₀-Alkoxy-, C₁₋₂₀-Alkyl-, C₁₋₂₀-Heteroaryl-, C₅₋₂₀-Cycloalkyl- und C₆₋₂₀-Arylgruppen. Besonders bevorzugte Substituenten der C₁₋₂₀-Heteroarylgruppe sind 2,4-Dimethylfuran-3-yl-, N-Methyl-2-Phenyl-Pyrrol-4-ylgruppen.
- Unter Alkylarylgruppen mit C₁₋₂₀: Gruppierungen im Alkylrest und C₆₋₂₀ Gruppierungen im Arylrest werden sämtliche dem Fachmann bekannten substituierten und unsubstituierten Alkylaryle mit 1 bis 20 C-Atomen im Alkylrest und 6-20 C-Atomen im Arylrest verstanden. Bevorzugt sind Benzyl- und alkylsubstituierte Benzylgruppen.
- Die C₁₋₂₀ -Alkyl-, C₅₋₂₀ -Cycloalkyl-, C₆₋₂₀ -Aryl-, Alkylarylgruppen mit C₁₋₂₀Gruppierungen im: Alkylrest und C₆₋₂₀ Gruppierungen im Arylrest und Arylalkylgruppen mit C₁₋₂₀ Gruppierungen im Alkylrest und C₆₋₂₀ Gruppierungen im Arylrest für die Reste D¹ bis D¹⁰ in -OD¹, -ND²D³, -PD⁶D⁷D⁸ und -BD⁹D¹⁰ besitzen die gleiche Bedeutung wie oben. Besonders bevorzugte Verbindungen sind für -OD¹ Methoxy-, Ethoxy-, Propoxy-, Isopropoxy-, Butoxy-, tertiärButoxy-, Phenoxy-, 2,6-Diphenylphenoxy-, 2,6-Dimethylphenoxy-, 2,6-Dichlorphenoxy-, 2,6-Dibromphenoxy-, 2,6-Diiodphenoxygruppen, für -ND²D³ Dimethylamino-, Diethylamino-, Diisopropylamino-, Dipropylamino-, Dibutylamino-, Ditertbutylamino-, Diphenylamino-, Methylphenylamino-, Ethylphenylamino-, 2,6-Dimethylanilino-, 2,6-Diethylanilino-, 2,6-Diisopropylanilino, 2,6-Dichloranilino-, 3,5-Dimethylanilinogruppen, für -PD⁶D⁷D⁸ Tricyclohexylphosphino-, Triphenylphosphino-, Tritertbutylphosphino-, Triethylphosphino-, Trimethylphosphino-, Dicyclohexylphosphino-, Duphenylphosphino- und für -BD⁹D¹⁰ Dichloroboranyl-, Dimethylboranyl-, Diethylboranyl-, Diphenylboranyl-, Bis(2,3,4,5,6-pentaflourphenyl)boranyl-, Dihydroxyboranyl-, Dimethoxyboranyl-, Diethoxyboranyl.

Bevorzugt sind die Gruppen R^{k1} und R^{k4} ausgewählt aus der Gruppe von substituierten Aryl- und/oder Heteroarylgruppen.

Ganz besonders bevorzugt sinddie Gruppen R^{k1} und R^{k4} ausgewählt aus der Gruppe der folgenden substituierten Aromaten der Formeln 1 bis 106 wobei die gestrichelte Line den Verknüpfungspunkt zu L1, L2, L3 und/oder L4 darstellt:

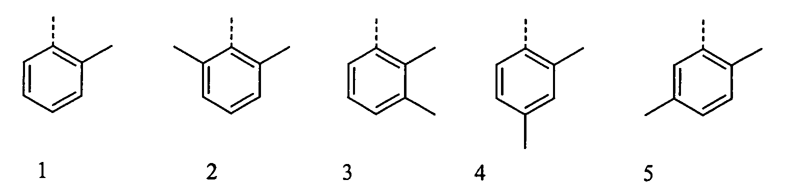

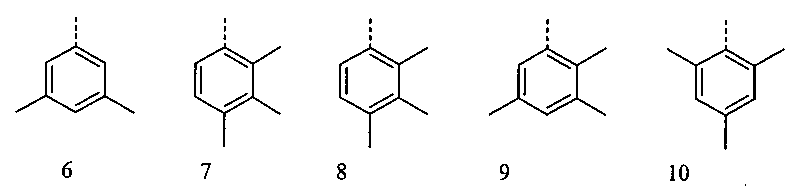

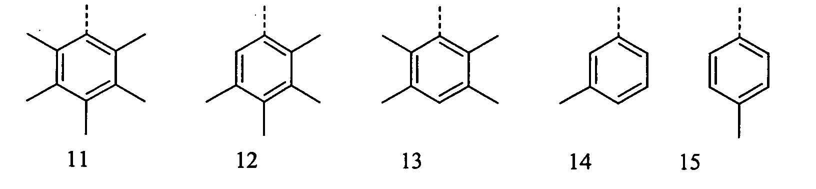

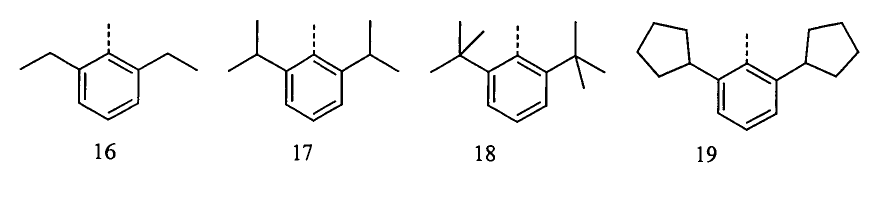

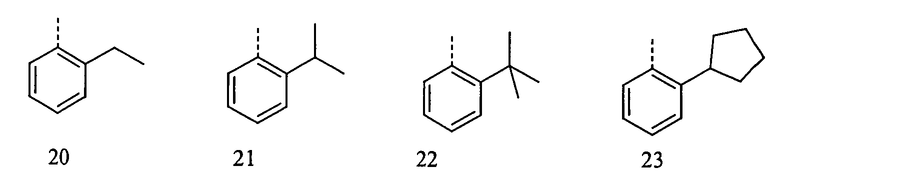

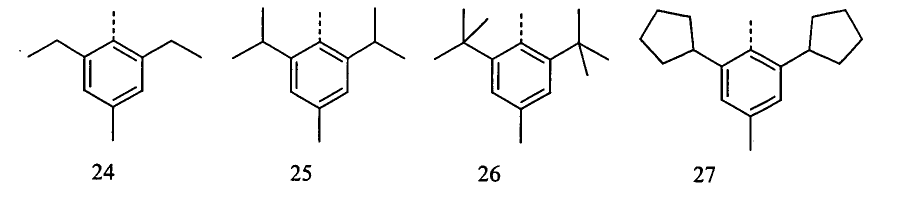

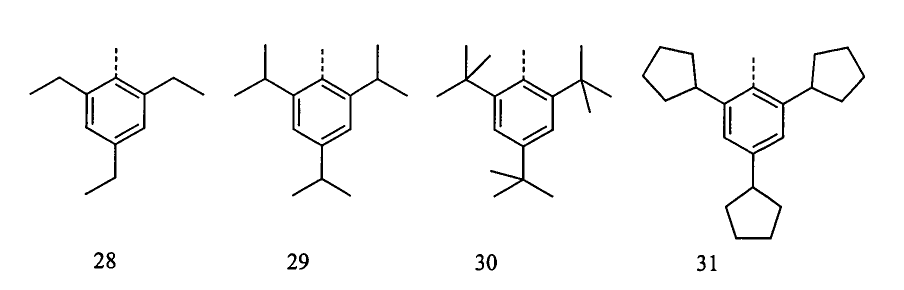

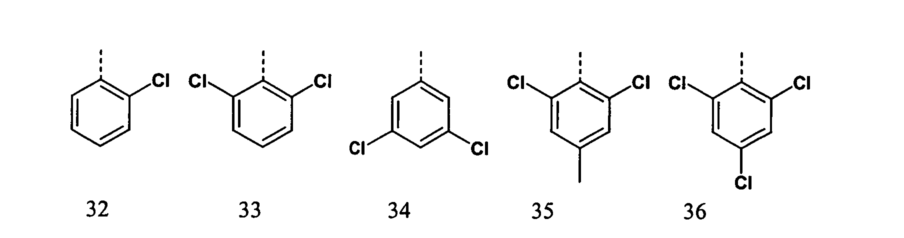

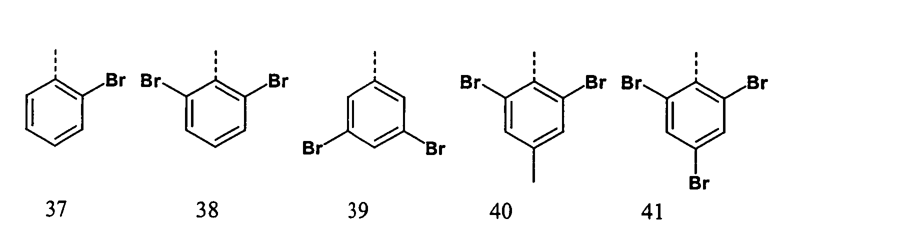

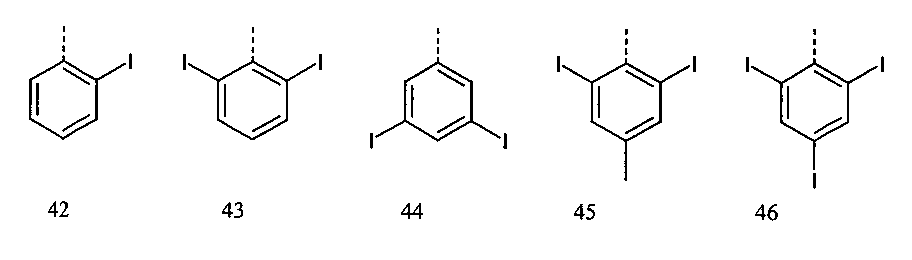

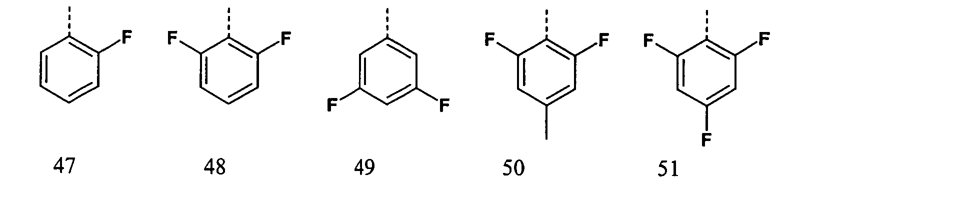

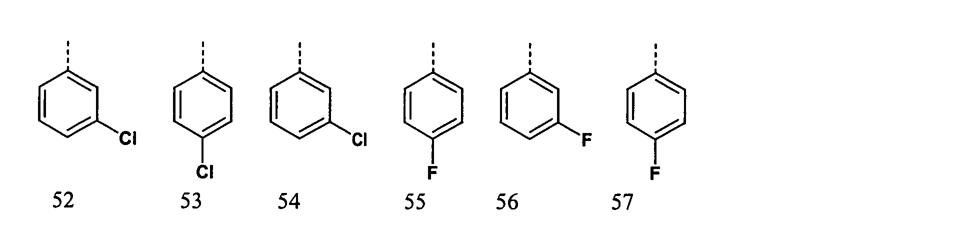

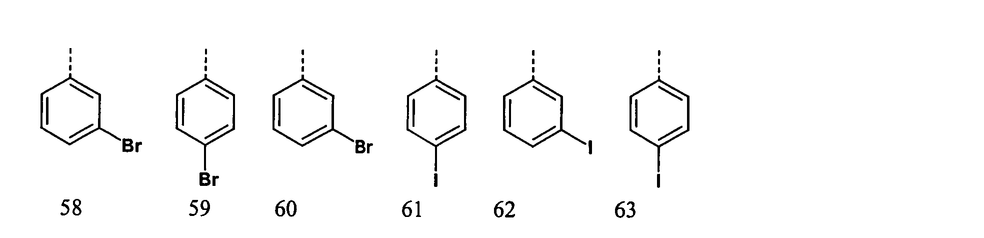

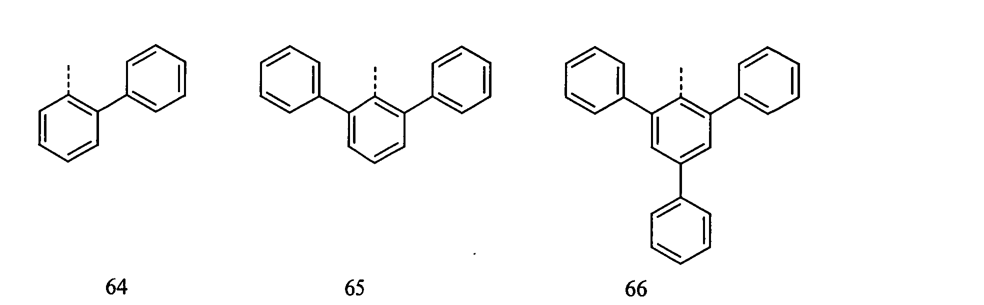

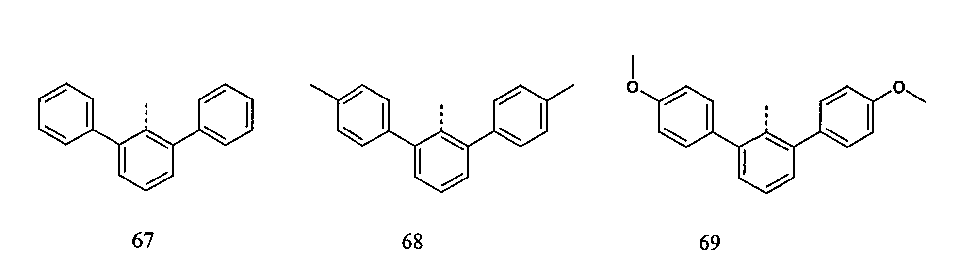

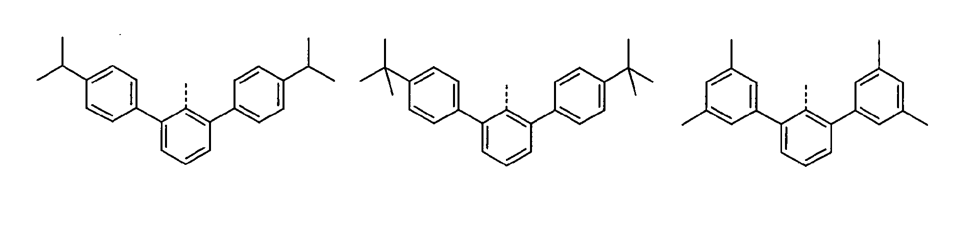

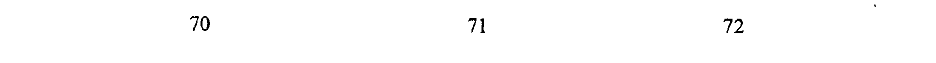

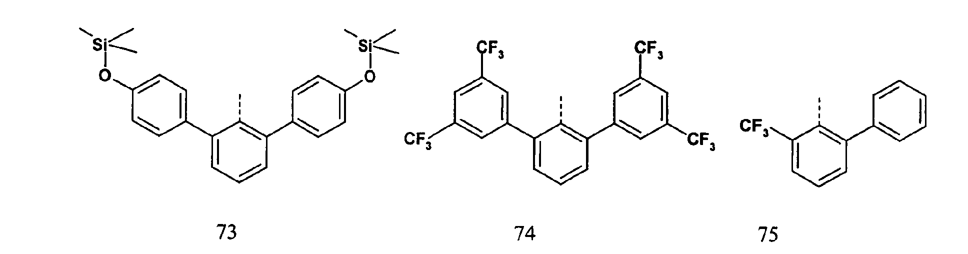

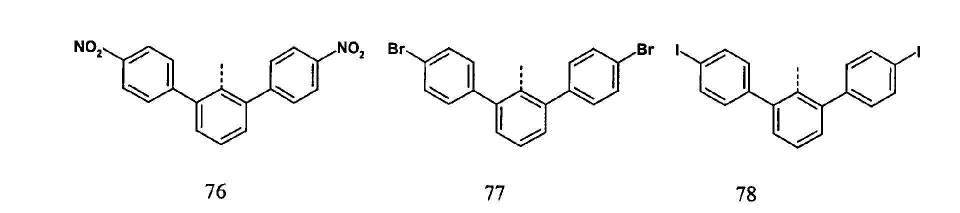

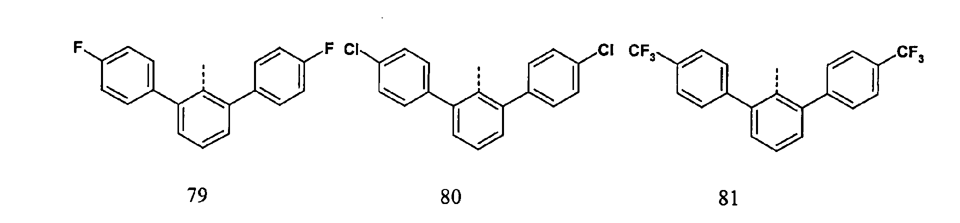

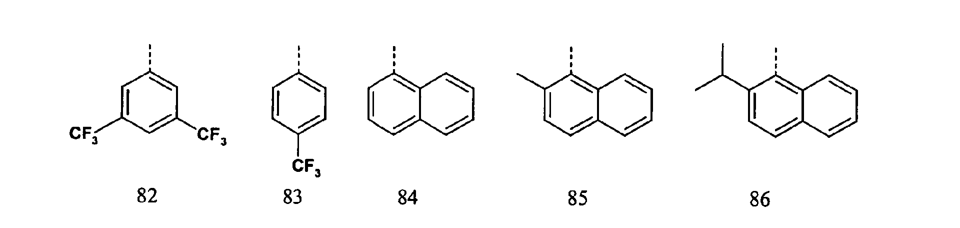

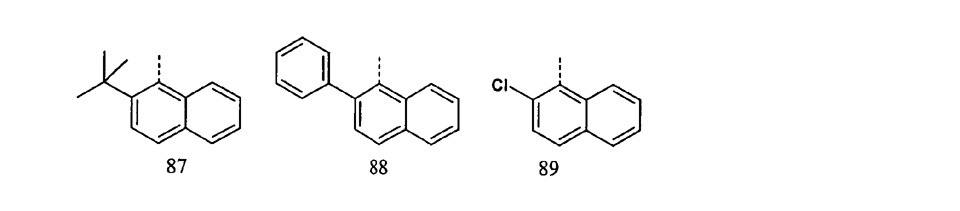

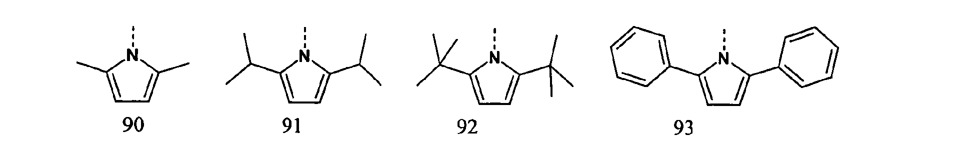

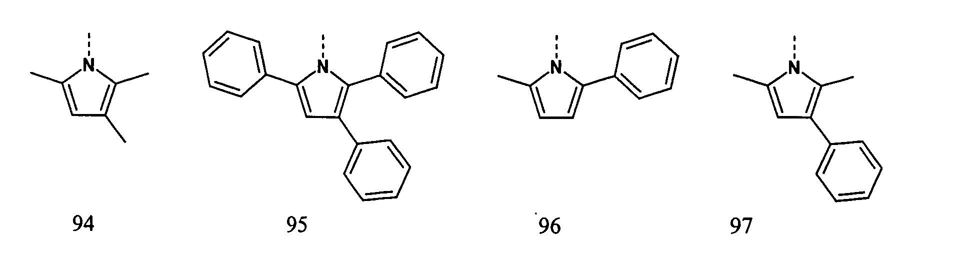

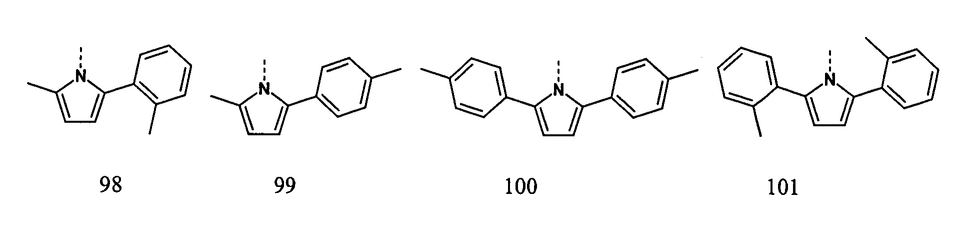

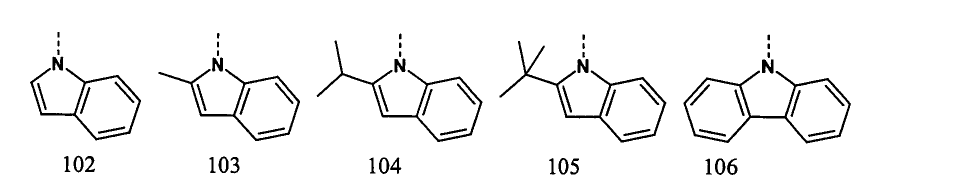

Unter Q sind alle dem Fachmann bekannten monoanionischen, dianionischen oder neutralen Liganden zu verstehen, die entweder kovalent oder über eine koordinative Bindungen an M₁ und/oder M₂ gebunden sind, wobei der Index m1 und m2 verdeutlicht, dass sowohl mehrere gleiche als auch unterschiedliche Q-Liganden aus der Gruppe von Q an einem M₁ oder M₂ gebunden sein können.

Bevorzugt werden die monoanionische Liganden ausgewählt aus der Gruppe bestehend aus Halogenid, Hydrid, C₁₋₂₀-Alkyl-, C₁₋₂₀-Alkenyl-, C₅-C₂₀-Cycloalkyl-, C₆₋₂₀-Aryl-, C₁₋₂₀-Heteroaryl-, Alkylarylgruppen mit C₁₋₂₀-Gruppierung im Alkylrest und C₆₋₂₀-Gruppierung im Arylrest, -OT¹, -OT¹T², -NT³T⁴, -NT⁵T⁶T⁷, -PT⁸T⁹, -PT¹⁰T¹¹T¹², wobei T¹ bis T¹² gleich oder verschieden sind und unabhängig voneinander ausgewählt sind aus der Gruppe bestehend aus H, C₁₋₂₀-Alkyl-, C₆₋₂₀-Cycloalkyl-, C₆₋₂₀-Aryl-, C₆₋₂₀ -Alkylarylgruppen mit C₁₋₂₀ -Gruppierungen im Alkylrest und C₆₋₂₀-Gruppierungen im Arylrest.

Unter Halogeniden sind Fluor, Chlor, Brom oder Jod, bevorzugt Chlor und Brom zu verstehen.

Bevorzugte C₁₋₂₀-Alkyl-, C₁₋₂₀-Alkenyl-, C₅-C₂₀-Cycloalkyl-, C₆₋₂₀-Aryl-, C₁₋₂₀-Heteroaryl-, und Alkylarylgruppen mit C₁₋₂₀-Gruppierung im Alkylrest und C₆₋₂₀-Gruppierung im Arylrest sind die gleichen wie oben für die Reste R aufgeführt.

Bevorzugt werden die dianionischen Liganden ausgewählt aus der Gruppe bestehend aus 1,3-Alkandiyl-Verbindungen, 1,4-Alkandiyl-Verbindungen, 1,5-Alkandiyl-, 1,ω-Alkandiyl-Verbindungen, Dialkoholaten, Dithiolaten und Diamiden. Ganz besonders bevorzugte dianionische Liganden sind 1,4-Butandiyl-, 1,5-Pentandiyl-, 1,2-Ethandiolato-, 1,2-Ethandithiolato-, 1,2-Ethandiamidoverbindungen und 1,2-Bishydroxylatobenzol.

Bevorzugt werden die neutralen Liganden ausgewählt aus der Gruppe bestehend aus Ethern, Aminen, Phosphinen und Phosphinoxiden, Olefinen und Acetylenen, Kohlenmonoxid, Stickstoff (N₂), Wasserstoff (H₂), Carbene, sowie Phosphoryliden. Bevorzugte Ether sind Diethylether, Diisopropylether, Tetrahydrofuran und 1,2-Dimethoxyethan. Bevorzugte Amine sind Ammoniak, Triethylamin, Pyridin, Bipyridin, Cyclohexylamin. Bevorzugte Phosphine und Phosphinoxide sind Tri-tert.-butylphosphin, Tri-n-butylphosphin, Triphenylphosphin, Triphenylphosphinoxid, Bis(diphenylphosphino)-ethan. Bevorzugte Olefine und Acetylene sind Ethen, Propen, Hexen, Cyclopenten, Styrol, Stilben, Butadien, Isopren, Phenylacetylen.

Bevorzugte Phosphorylide sind Verbindungen der Formel, 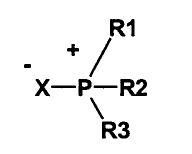 wobei R1,R2,R3 ausgewählt aus der Gruppe von R und X ausgewählt wird aus Sauerstoff, -N-T¹ und -CT¹T², wobei T¹ bis T¹² gleich oder verschieden sind und unabhängig voneinander ausgewählt sind aus der Gruppe bestehend aus H, C₁₋₂₀-Alkyl-, C₆₋₂₀-Cycloalkyl-, C₆₋₂₀-Aryl-, C₆₋₂₀-Alkylarylgruppen mit C₁₋₂₀ -Gruppierungen im Alkylrest und C₆₋₂₀ -Gruppierungen im Arylrest.

Unter Halogeniden sind Fluor, Chlor, Brom oder Jod, bevorzugt Chlor und Brom zu verstehen.

Bevorzugte C₁₋₂₀-Alkyl-, C₁₋₂₀-Alkenyl-, C₅-C₂₀-Cycloalkyl-, C₆₋₂₀-Aryl-, C₁₋₂₀-Heteroaryl-, und Alkylarylgruppen mit C₁₋₂₀-Gruppierung im Alkylrest und C₆₋₂₀-Gruppierung im Arylrest sind die gleichen wie oben für die Reste R aufgeführt.

Besonders bevorzugt sind R1=R2=R3=Phenyl-, Cyclohexyl-, Methyl-, Ethyl-, Isopropyl-, Methoxy-, Phenoxy- oder Dimethylaminoreste und X= CH₂, Benzyl-, Cyclopropan-1,1-diyl, Fulvenyl-, Phenylimin-, Trimethylsilylimin-, tert.Butylimin-, Ethan-1.1-diyl- oder Oxogruppen.

Aus der Gruppe der monoanionischen, dianionischen und nicht-anionischen Liganden werden die monoanionischen Liganden bevorzugt. Ganz besonders bevorzugt sind die Halogenide und Acetylacetonatderivate.

Unter A1 und A2 sind alle dem Fachmann bekannte Brücken aus einem substituierten oder unsubstituiertem Atom und/oder Gruppen, die die Zentren L1 mit L2 bzw. L3 mit L4 verknüpfen,
wobei A1 und A2 noch weitere Koordinationsstellen für die Metallzentren M₁ und M₂ enthalten können, zu verstehen.

Bevorzugt sind A1 und A2 gleich oder verschieden und unabhängig voneinander ausgewählt aus der Gruppe bestehend aus gesättigten oder ungesättigten Kohlenwasserstoffresten mit 1 bis 20 C-Atomen, cyclischen gesättigten oder ungesättigten Kohlenwasserstoffresten mit 4 bis 20 C-Atomen, wobei dann L1 und L2 oder L3 und L4 direkt an dem Ring gebunden sind, heterocyclischen gesättigten oder ungesättigen Verbindungen mit 3 bis 20 C-Atomen, stickstoffhaltigen Gruppen, phosphorhaltigen Gruppen, siliziumhaltigen Gruppen, zinnhaltigen Gruppen, germaniumhaltigen Gruppen und borhaltigen Gruppen , wobei all diese Gruppen noch weitere einfach gebundene Substituenten Z₁ bis Z₁₀ und/oder doppelt gebundene Substituenten E₁ bis E₂ tragen können.

Bevorzugte gesättigte oder ungesättigte Kohlenwasserstoffreste mit 4 bis 20 C-Atomen sind die Strukturen der Formeln 107 bis 145 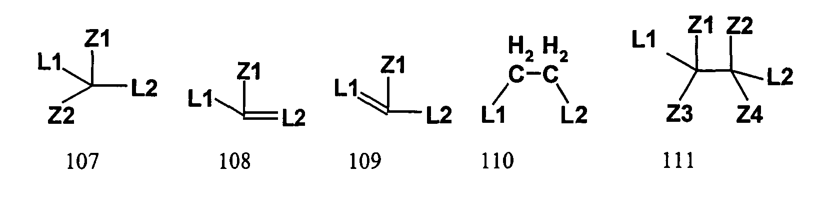 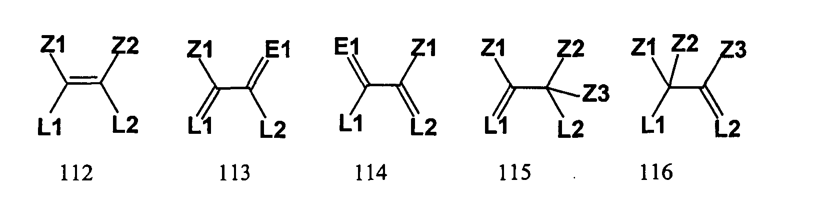 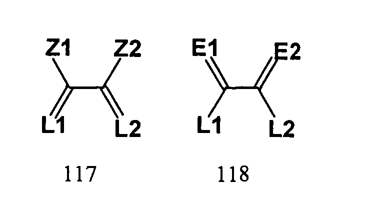 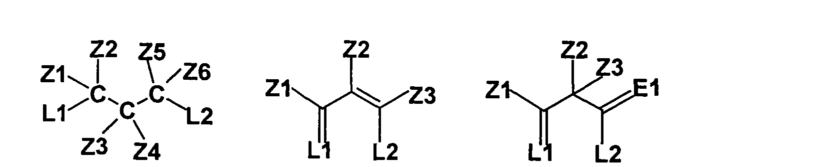 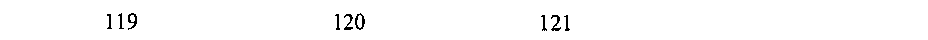 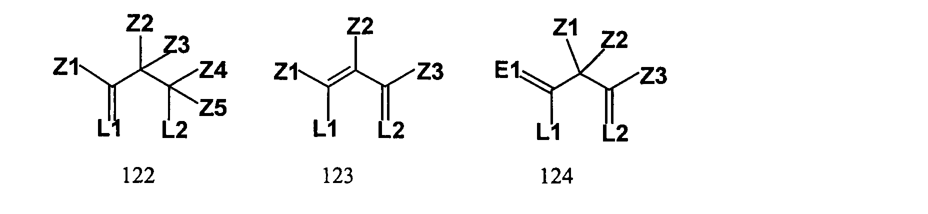 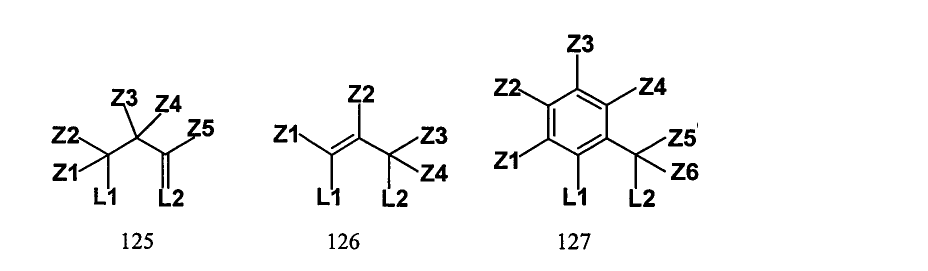 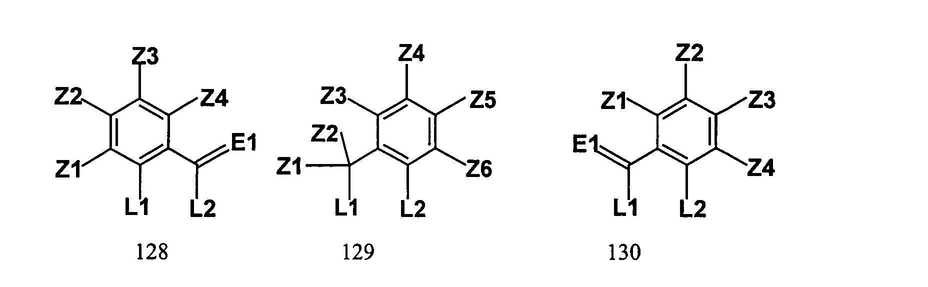 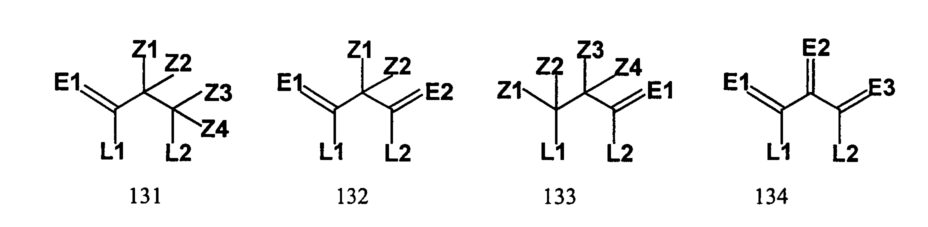 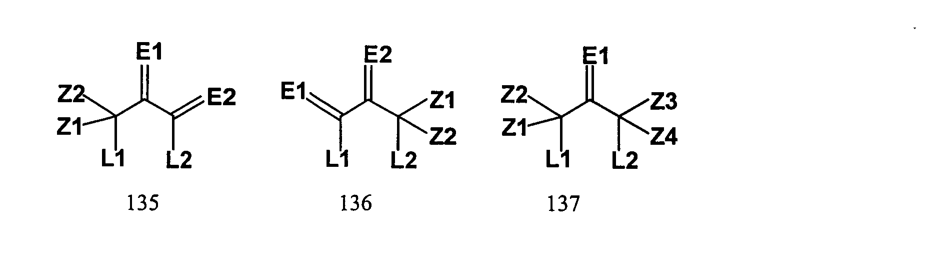 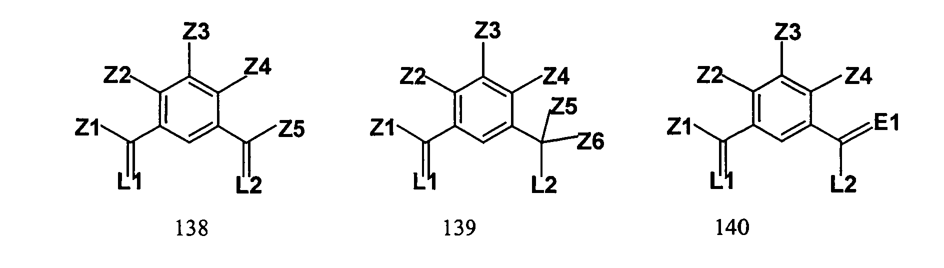 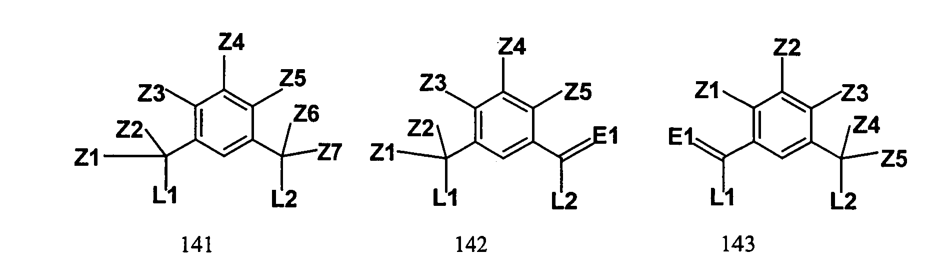 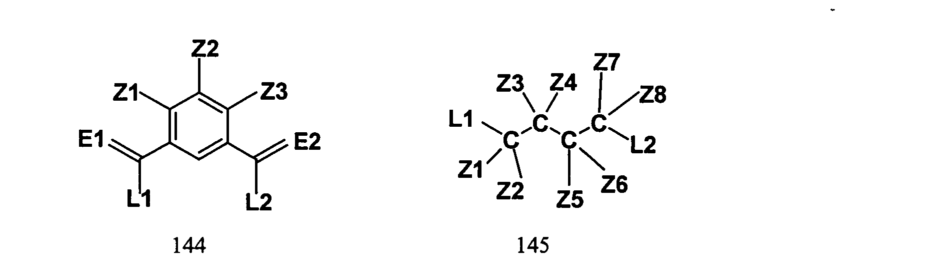 wobei A1 als verbrückendes Element von L1 oder L2 dargestellt ist; für A2 müssen L1 und L2 durch L3 und L4 ersetzt werden.

Bevorzugte cyclische gesättigte oder ungesättigte Kohlenwasserstoffgruppen mit 4-20 Kohlenstoffatomen, bei denen L1 und L2 bzw. L3 und L4 direkt am Ring gebunden sind, sind substituierte oder unsubstituierte Benzol-, Naphthol- und Anthracenringe der Formeln 146 bis 157 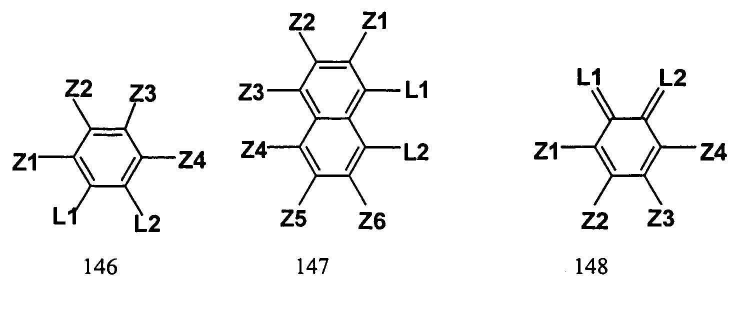 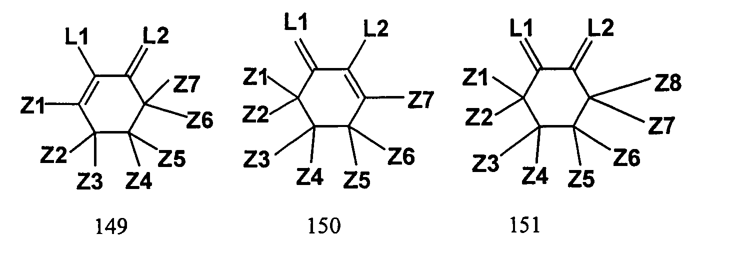 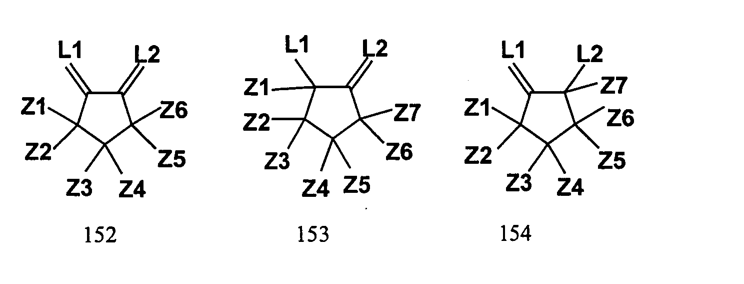 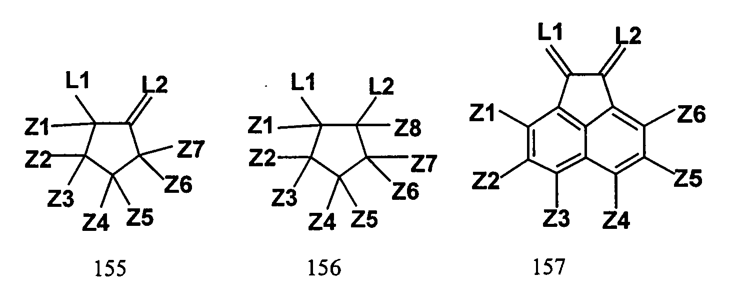 wobei A1 als verbrückendes Element von L1 oder L2 dargestellt ist; für A2 müssen L1 und L2 durch L3 und L4 ersetzt werden.

Bevorzugte heterocyclische Verbindungen mit 3 bis 20 Kohlenstoffatomen und einem oder mehreren Heteroatomen sind substituierte oder unsubstituierte Pyridin-, Chinolin-, Thiophen- und Furanringe der Formeln 158 bis 204 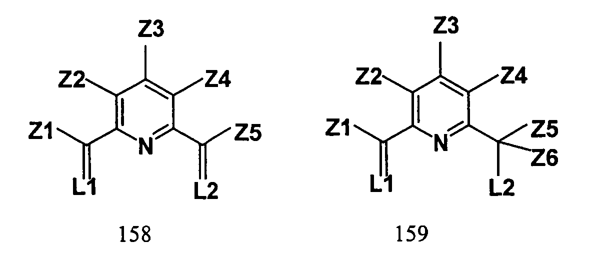 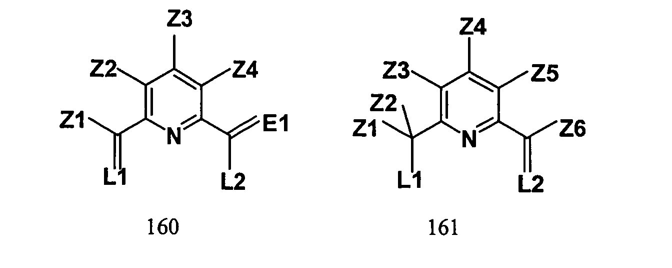 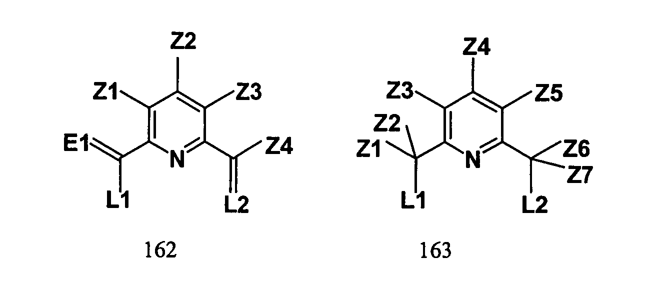 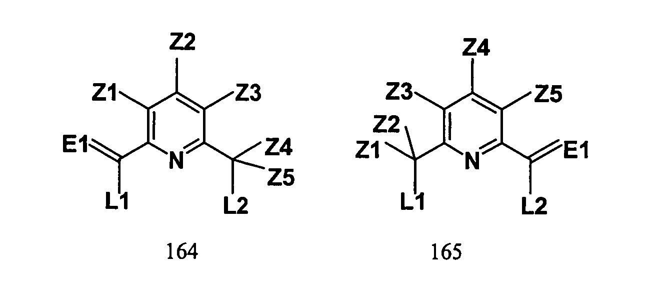 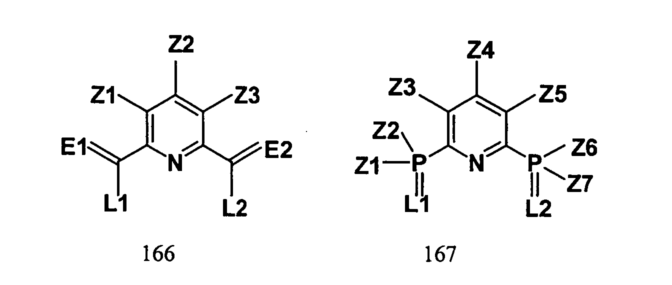 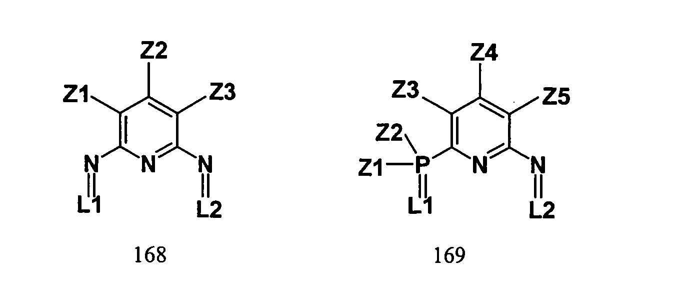 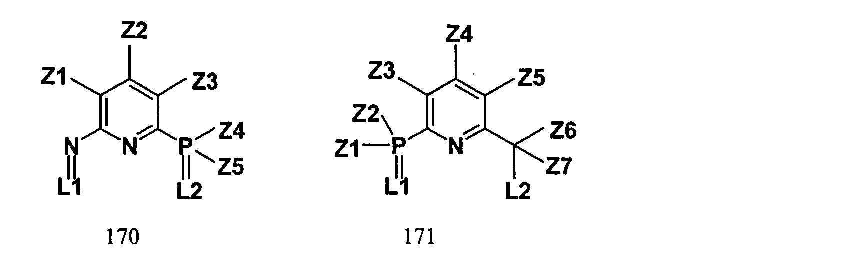 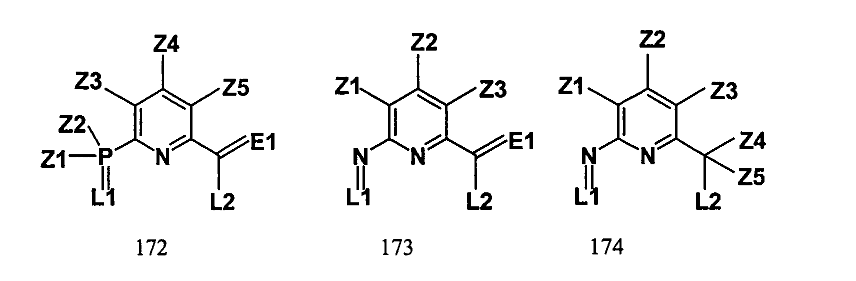 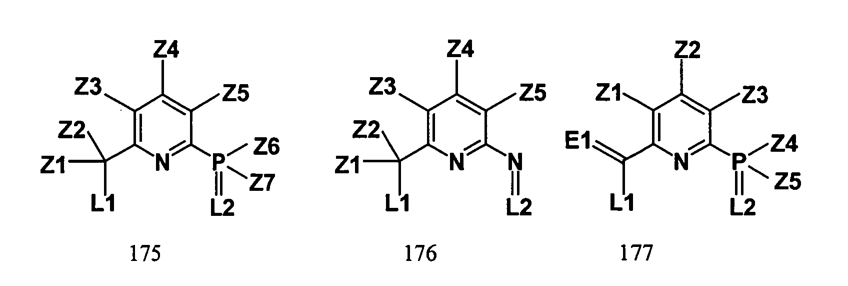 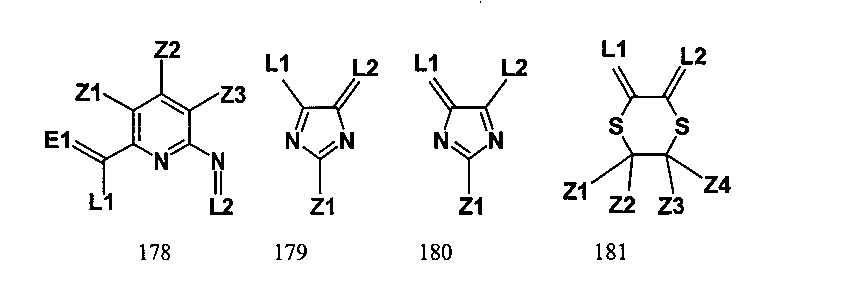 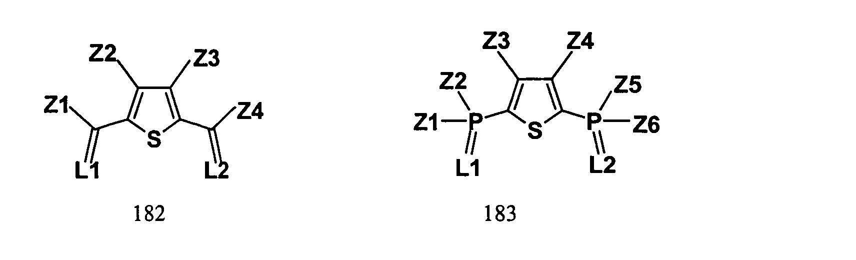 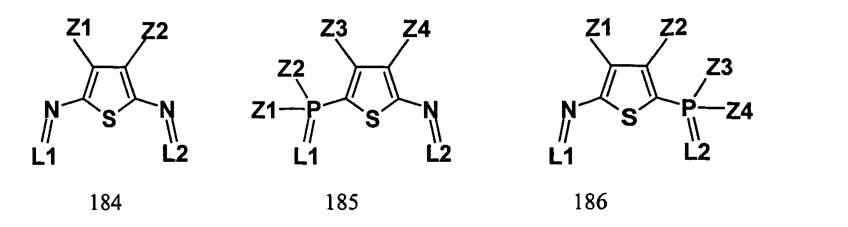 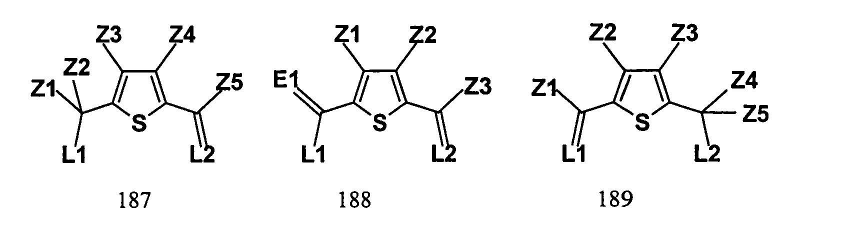 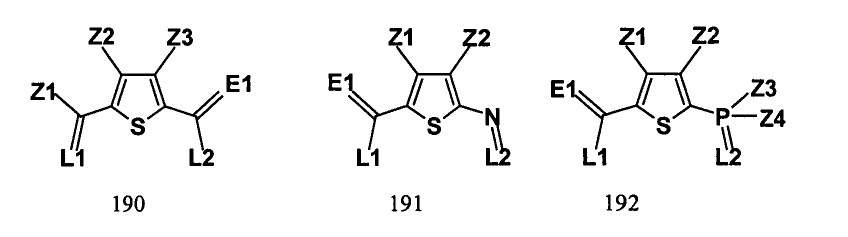 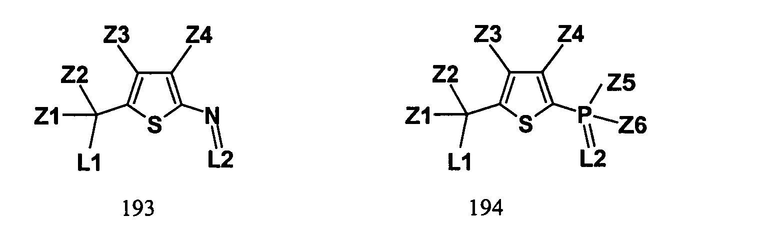 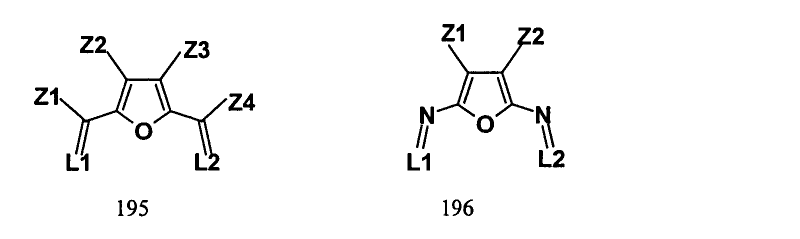 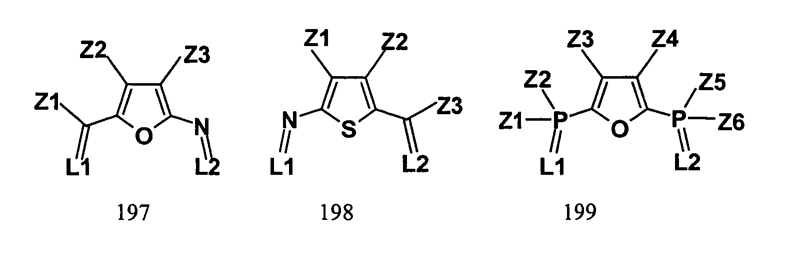 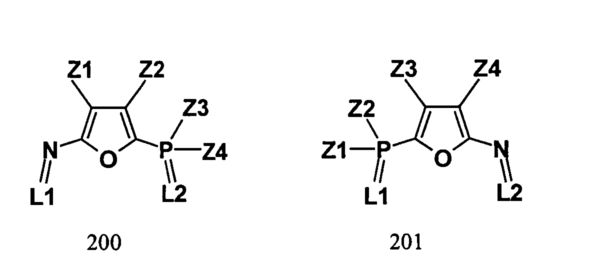 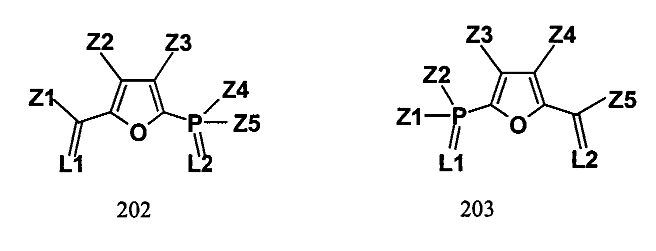 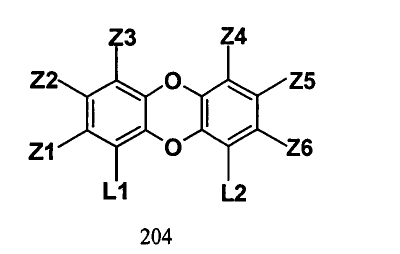 wobei A1 als verbrückendes Element von L1 oder L2 dargestellt ist; für A2 müssen L1 und L2 durch L3 und L4 ersetzt werden.

Bevorzugte Gruppen, die Stickstoff enthalten, sind die der folgenden Formeln 205 bis 221 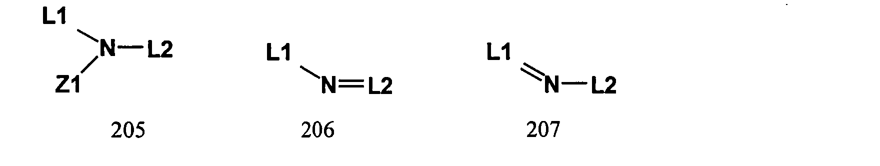 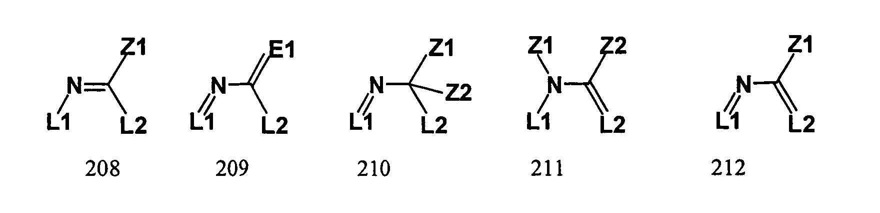 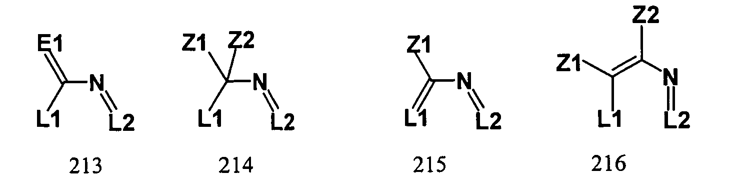 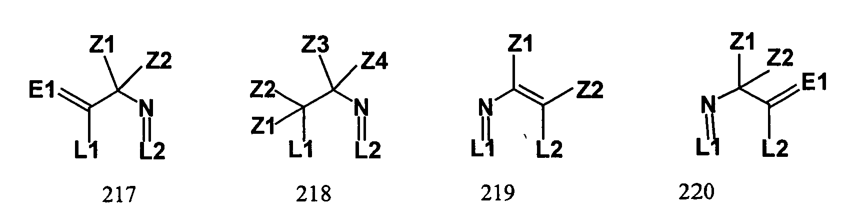 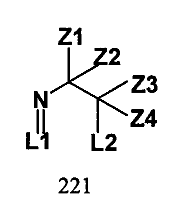 wobei A1 als verbrückendes Element von L1 oder L2 dargestellt ist; für A2 müssen L1 und L2 durch L3 und L4 ersetzt werden.

Bevorzugte Gruppen, die Phosphor enthalten, sind die der folgenden Formeln 222 bis 233 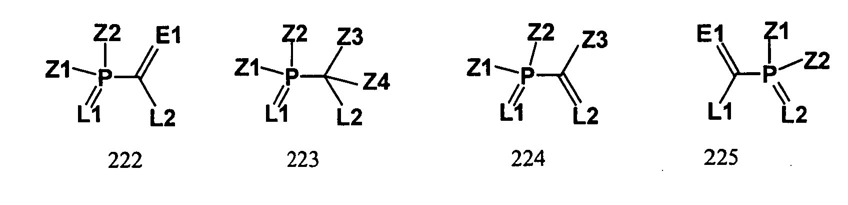 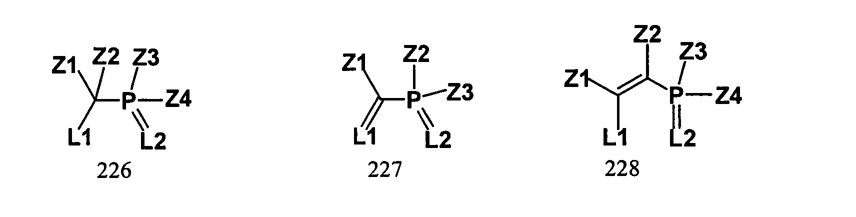 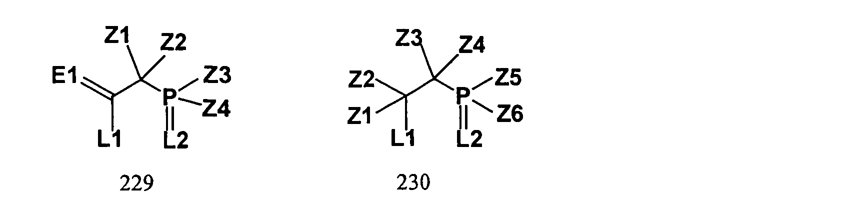 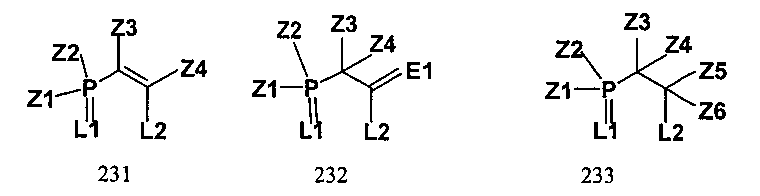 wobei A1 als verbrückendes Element von L1 oder L2 dargestellt ist; für A2 müssen L1 und L2 durch L3 und L4 ersetzt werden.

Bevorzugte Gruppen, die L1 mit L2 und/oder L3 mit L4 über ein oder mehrere Silizium-Zentren verbinden, sind die Formeln 234 bis 236 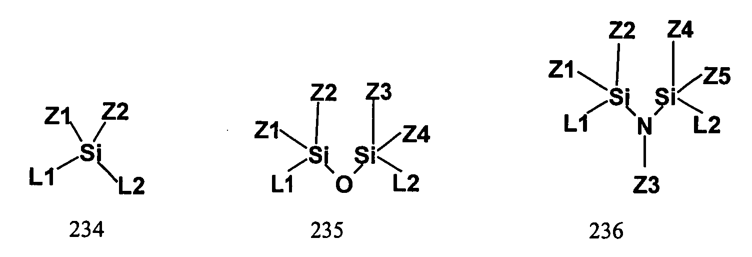 wobei A1 als verbrückendes Element von L1 oder L2 dargestellt ist; für A2 müssen L1 und L2 durch L3 und L4 ersetzt werden.

Bevorzugte Gruppen, die L1 mit L2 und/oder L3 mit L4 über ein oder mehrere Zinn-Zentren verbinden, sind die der folgenden Formeln 237 und 238 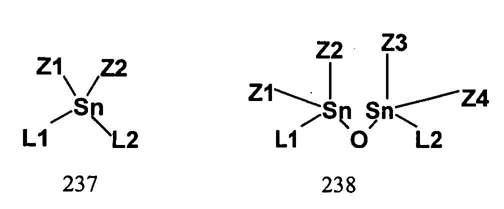 wobei A1 als verbrückendes Element von L1 oder L2 dargestellt ist; für A2 müssen L1 und L2 durch L3 und L4 ersetzt werden.

Bevorzugte Gruppe, die L1 mit L2 und/oder L3 mit L4 über ein Germanium-Zentren verbindet, ist die Formel 239 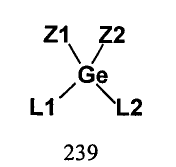 wobei A1 als verbrückendes Element von L1 oder L2 dargestellt ist; für A2 müssen L1 und L2 durch L3 und L4 ersetzt werden.

Bevorzugte Gruppen, die L1 mit L2 und/oder L3 mit L4 über ein Bor-Zentren verbinden, sind - BH-, -B(CH₃)-, -BPh-, -BF-, -BCl-.

Bevorzugte Gruppen, die L1 mit L2 und/oder L3 mit L4 über Phosphor-Zentren verbinden, sind - P(Ph)-P(Ph)-, -P(Me)-P(Me)-.

E₁ und E₂ stellen dabei doppelt gebundene Gruppen dar und können gleich oder verschieden sein und sind unabhängig voneinander ausgewählt aus der Gruppe bestehend aus S, O, CZ₁Z₂, NZ₁, OZ₁⁺, NZ₁Z₂⁺.

Z₁ bis Z₁₀ können dabei gleich oder verschieden sein und sind unabhängig voneinander ausgewählt sein aus der Gruppe bestehend aus Halogeniden, Hydrid, C₁₋₂₀-Alkyl-, C₁₋₂₀-Alkenyl-, C₅₋₂₀-Cycloalkyl-, C₆₋₂₀-Aryl-, Alkylarylgruppen mit C₁₋₂₀-Gruppierung im Alkylrest und C₆₋₂₀-Gruppierung im Arylrest, -OT¹, OT¹T², -NT³T⁴, NT⁵T⁶T⁷, -PT⁸T⁹, -PT¹⁰T¹¹T¹², und wobei T¹ bis T¹² gleich oder verscheiden sein können und unabhängig voneinander ausgewählt sind aus Gruppe bestehend aus H, C₁₋₂₀-Alkyl-, C₅₋₂₀-Cycloalkyl-, C₆₋₂₀-Aryl-, C₁₋₂₀-Heteroaryl-, Alkylarylgruppen mit C₁₋₂₀-Gruppierungen im Alkylrest und C₆₋₂₀-Gruppierungen im Arylrest und Arylalkylgruppen mit C₁₋₂₀-Gruppierungen im Alkylrest und C₆₋₂₀-Gruppierungen im Arylrest. Die bevorzugten Halogenide, C₁₋₂₀-Alkyl-, C₁₋₂₀-Alkenyl-, C₅₋₂₀-Cycloalkyl-, C₆₋₂₀-Aryl-, Alkylarylgruppen mit C₁₋₂₀-Gruppierung im Alkylrest und C₆₋₂₀-Gruppierung im Arylrest, -OT¹, OT¹T², -NT³T⁴, NT⁵T⁶T⁷, -PT⁸T⁹, -PT¹⁰T¹¹T¹² sind die gleichen wie für die Reste R beschrieben.

Unter B sind alle dem Fachmann bekannte Gruppe zu verstehen, die die Zentren L2 und L3 elektronisch miteinander verknüpfen können. Unter einer elektronischen Verknüpfung zwischen den Zentren L2 und L3 sind Gruppen zu verstehen, die durch Delokalisation ihrer π-Elektronen die Ladungen auch in die Ringe aus L1; A1; L2 und M₁ und den Substituenten dieses Ringes sowie L3; A2; L4 und M₂ und Substituenten dieses Ringes verschieben können.

Bevorzugt ist B eine aromatische oder heteroaromatische Gruppen, die ihrerseits Substituenten G₁ bis G₈ tragen kann.

Besonders bevorzugt ist B eine aromatische oder heteroaromatische Gruppe, deren Verknüpfungsstellen zu L2 und L3 nicht in ortho-Stellung zueinander liegen.

Ganz besonders bevorzugt sind die Gruppen der Formeln 240 bis 249

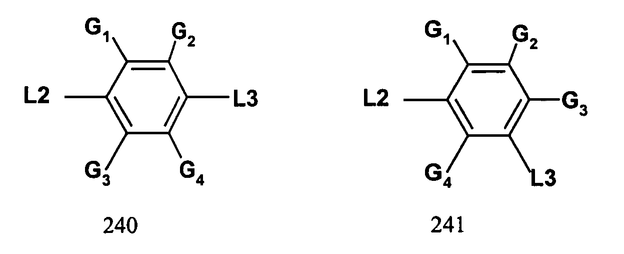

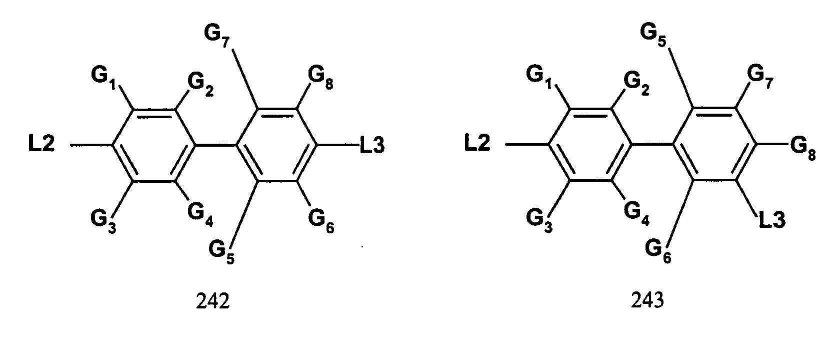

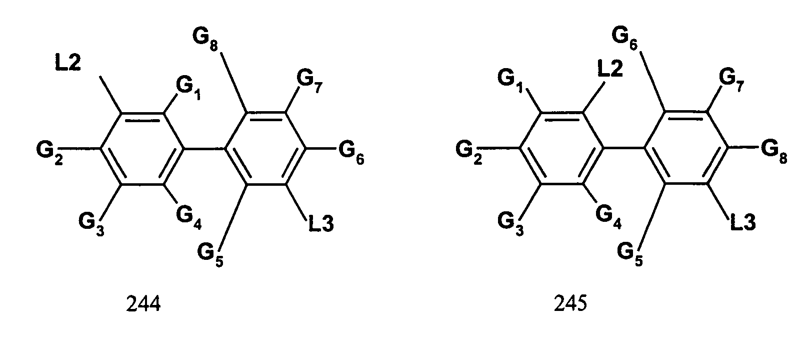

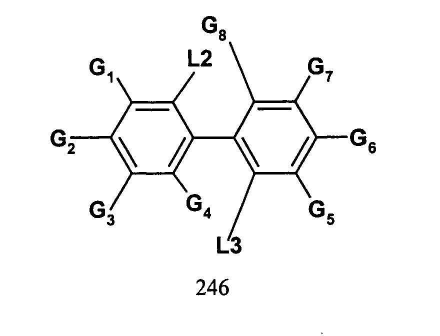

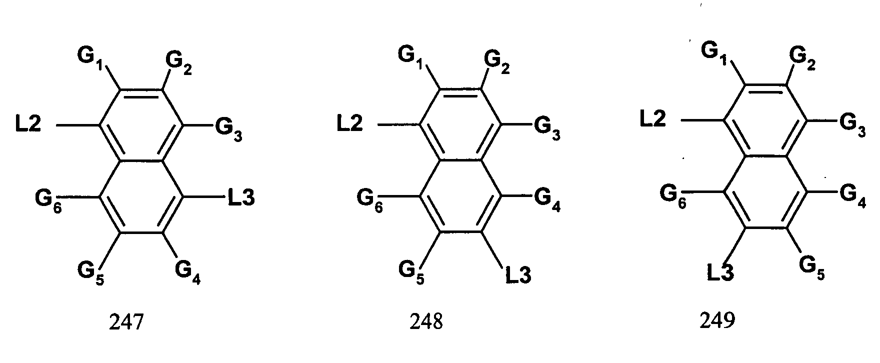

Hierbei werden die Substituenten G₁ bis G₈ gleich oder verschieden und unabhängig voneinander ausgewählt aus der Gruppe bestehend aus Halogenid, Hydrid, C₁₋₂₀-Alkyl-, C₁₋₂₀ -Alkenyl-, C₅₋₂₀-Cycloalkyl-, C₆₋₂₀-Aryl-, Alkylarylgruppen mit C₁₋₂₀-Gruppierung im Alkylrest und C₆₋₂₀-Gruppierung im Arylrest, -OT¹, OT¹T², -NT³T⁴, NT⁵T⁶T⁷, -PT⁸T⁹, -PT¹⁰T¹¹T¹², wobei T¹ bis T¹² gleich oder verschieden sind und unabhängig voneinander ausgewählt sind aus der Gruppe aus H, C₁₋₂₀-Alkyl-, C₅₋₂₀-Cycloalkyl-, C₆₋₂₀-Aryl-, C₁₋₂₀-Heteroaryl-, Alkylarylgruppen mit C₁₋₂₀-Gruppierungen im Alkylrest und C₆₋₂₀-Gruppierungen im Arylrest und Arylalkylgruppen mit C₁₋₂₀-Gruppierungen im Alkylrest und C₆₋₂₀-Gruppierungen im Arylrest.

Bevorzugte Grundstrukturen mit N-O-Liganden für L1 und L2 und/oder L3 und L4 sind die folgenden Formeln 250 bis 263

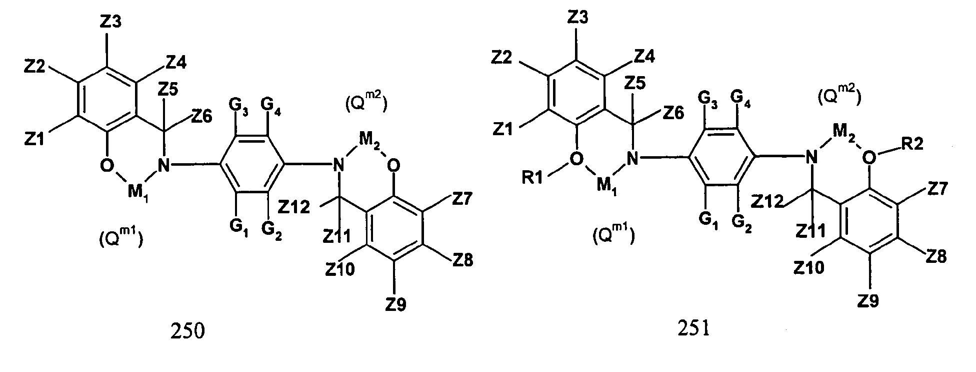

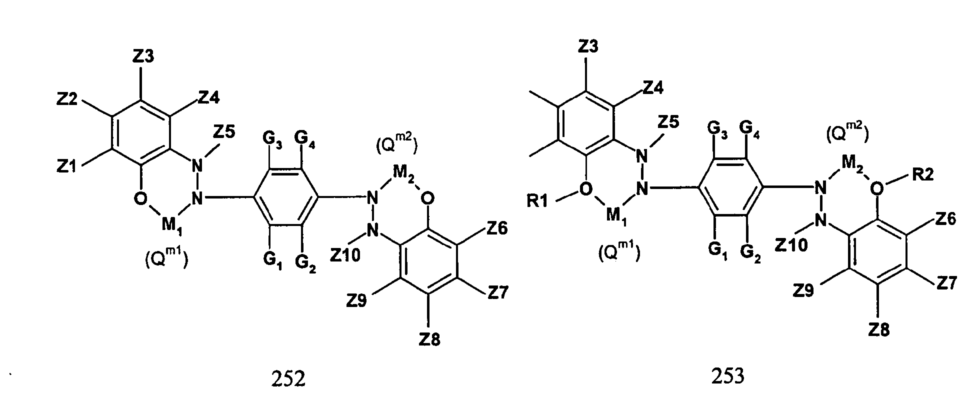

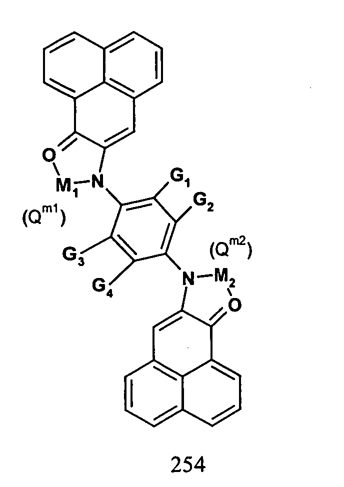

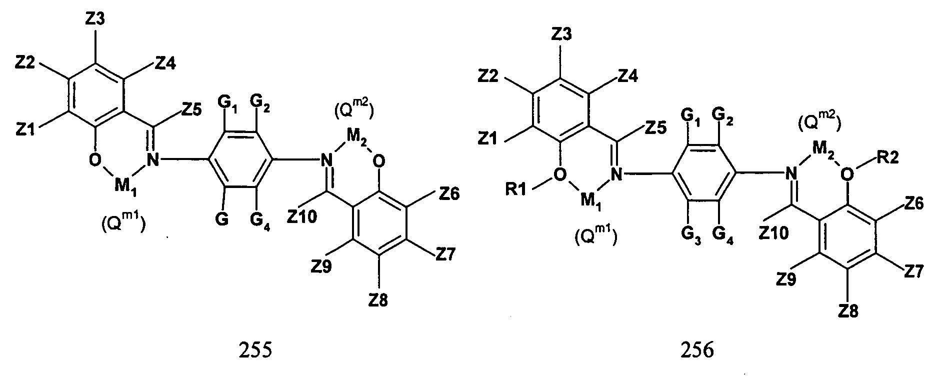

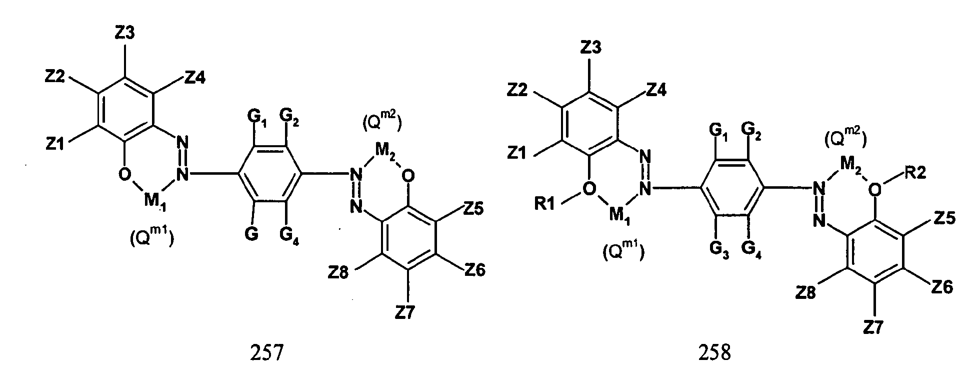

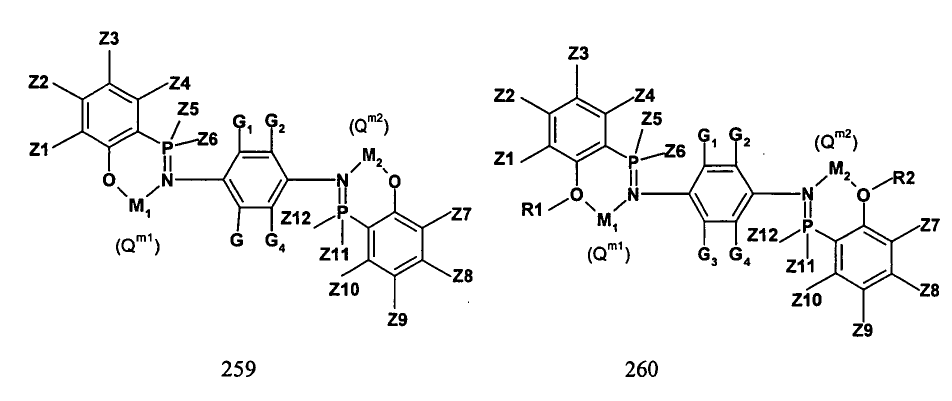

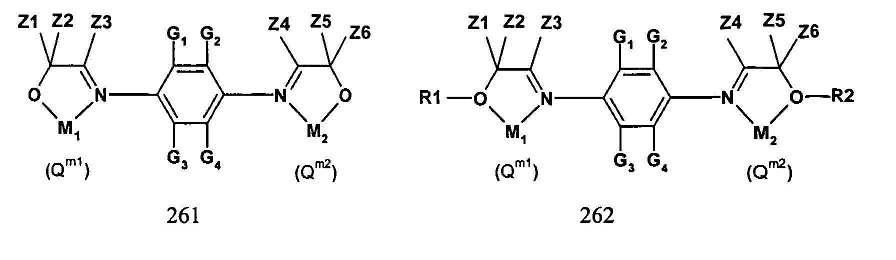

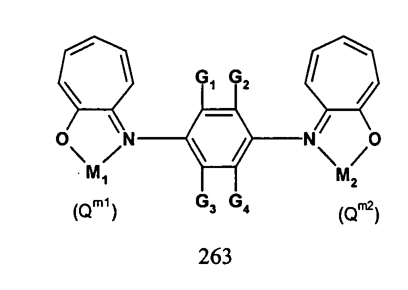

Besonders bevorzugte Grundstrukturen für Verbindungen mit N-O Liganden für L1 und L2 und/oder L3 und L4 sind die folgenden Formeln 255 bis 258, 264, 265, 261 bis 263

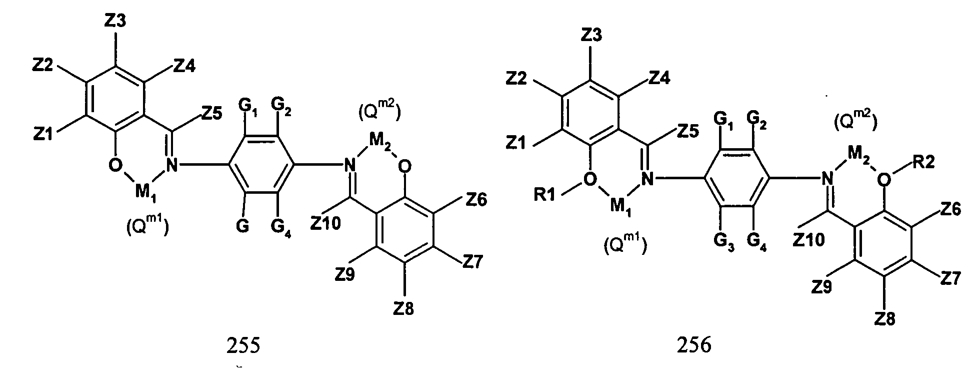

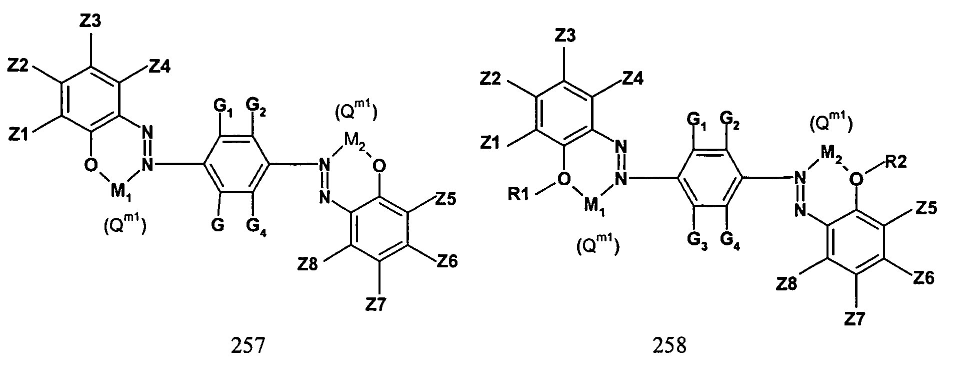

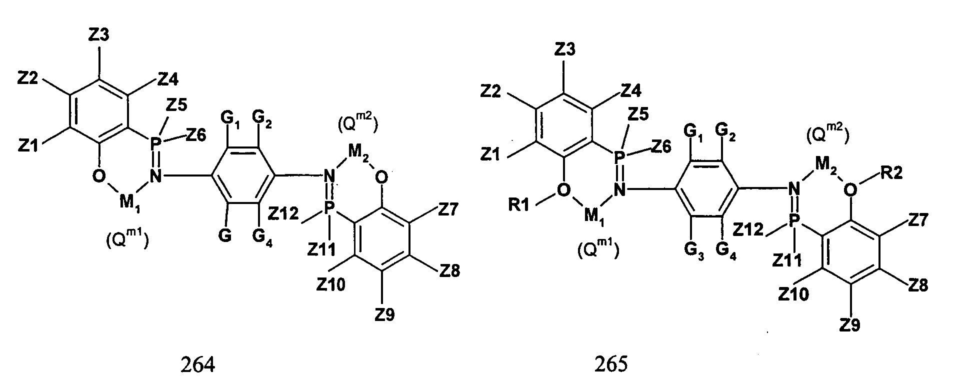

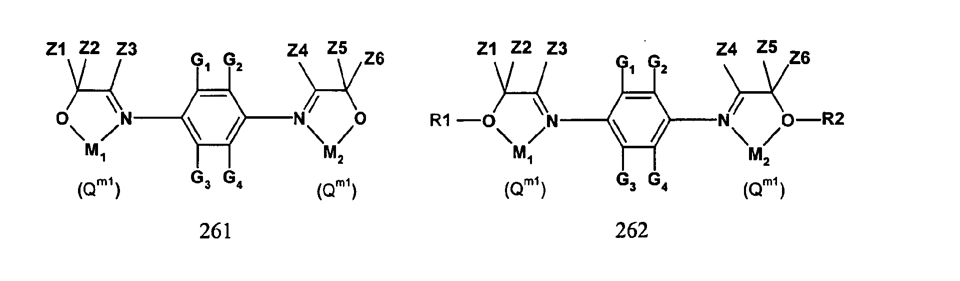

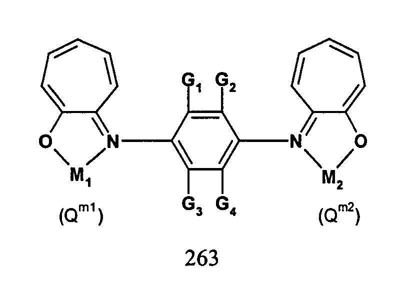

Bevorzugte Strukturen mit N-N-Liganden für L1 und L2 und/oder L3 und L4 sind die folgenden Formeln 266 bis 282

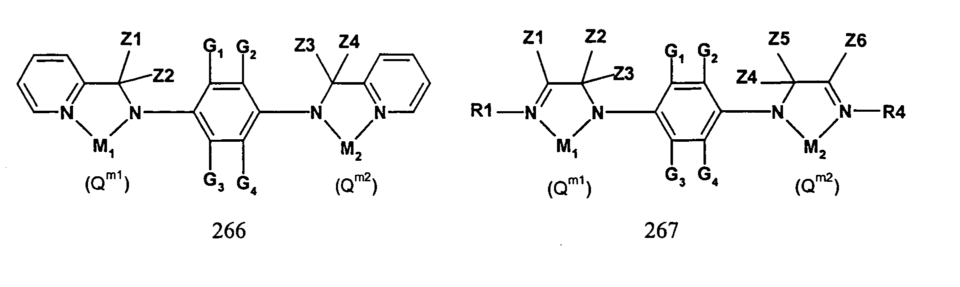

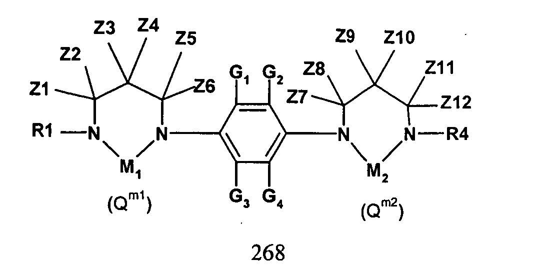

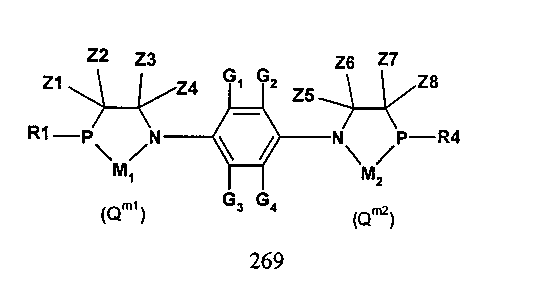

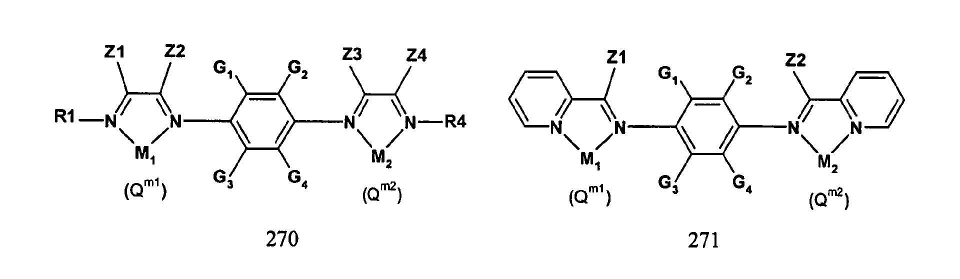

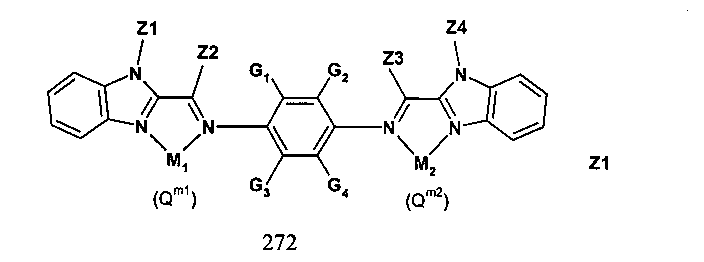

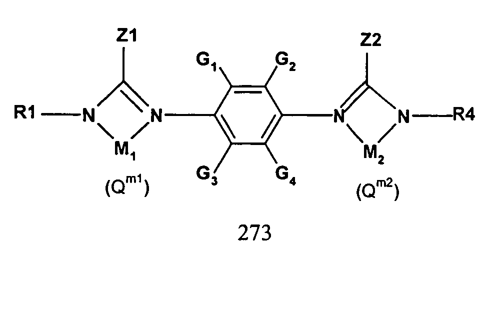

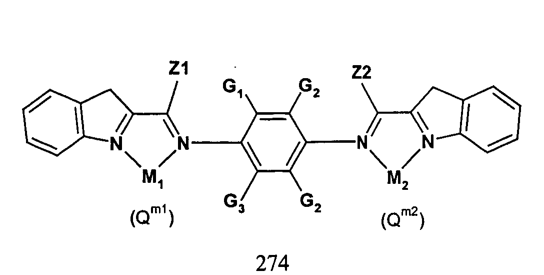

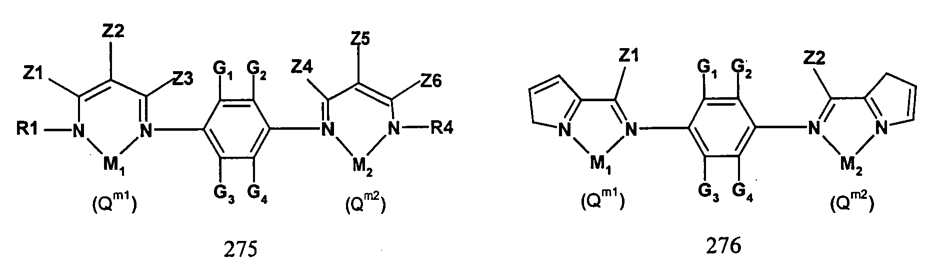

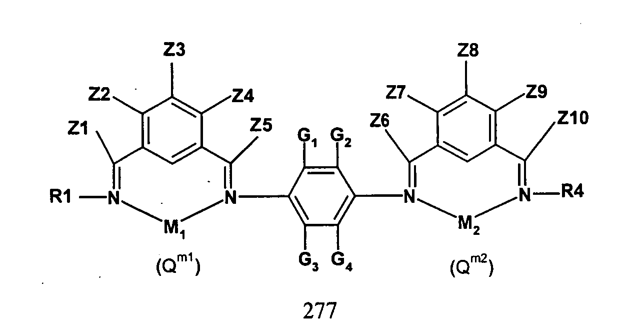

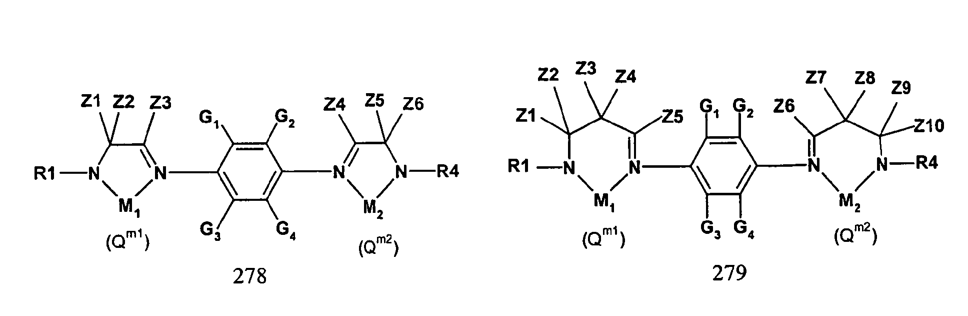

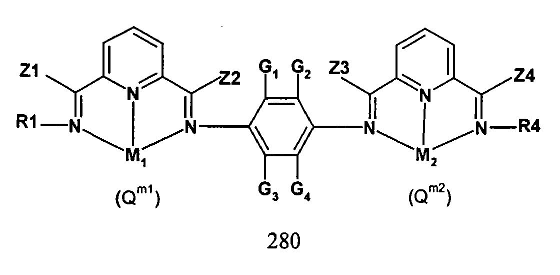

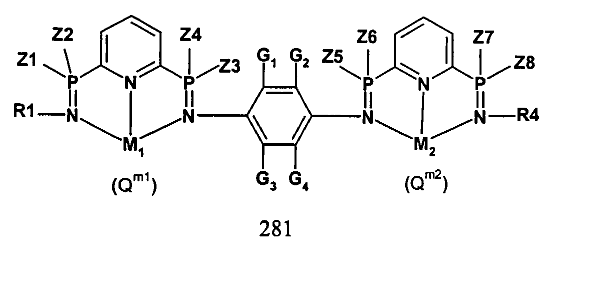

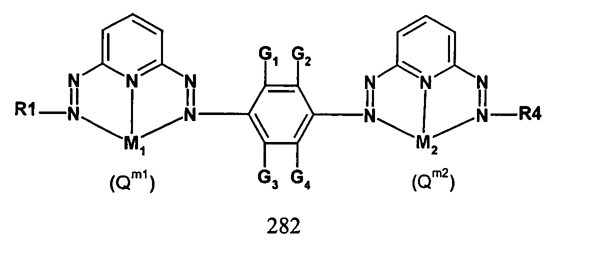

Besonders bevorzugte Grundstrukturen für N-N Liganden mit einem Heteroatomen in den Bausteine A1 und A2 sind:

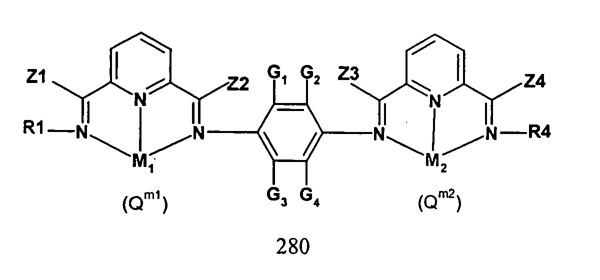

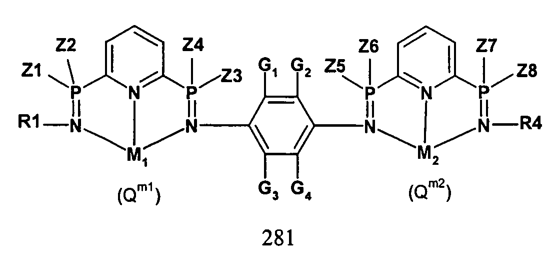

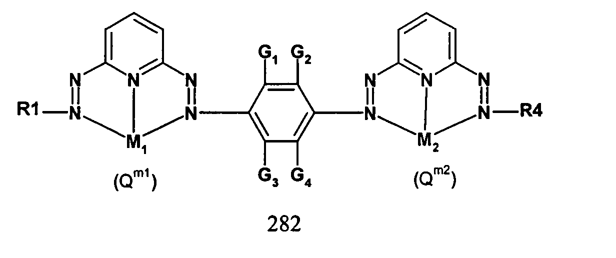

Eine besonders bevorzugte Struktur mit einem P-N Liganden für L1 und L2 und/oder L3 und L4 ist:

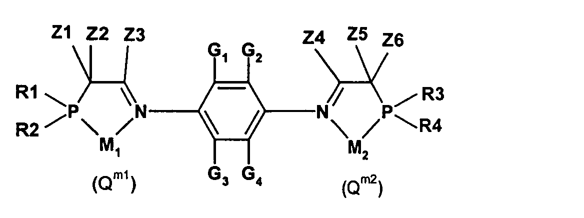

Besonders bevorzugte Grundstrukturen mit S-N Liganden für L1 und L2 und/oder L3 und L4 sind die folgenden Formeln 284 und 285

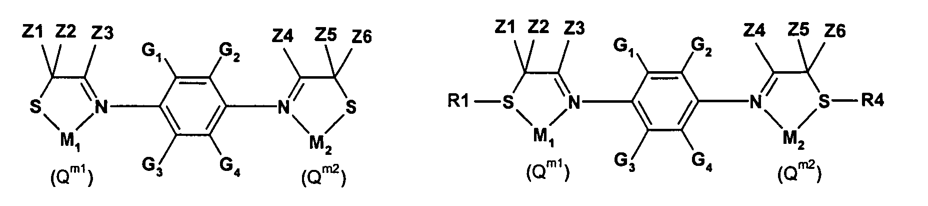

Insbesondere ganz besonders bevorzugt ist folgende Grundstruktur:

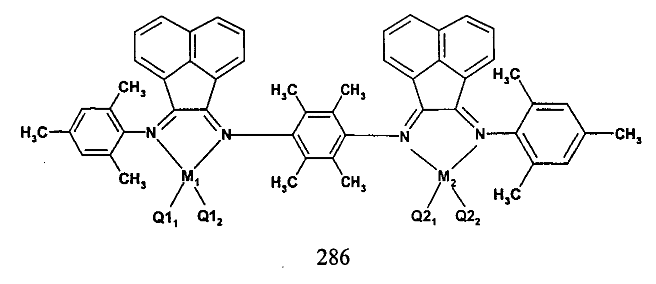

Die erfindungsgemäßen Verbindungen können nach unterschiedlichen Verfahren hergestellt werden.

So kann ein Verfahren zur Herstellung von Verbindungen des Typs (I) folgende Schritte umfassen:
a) Bereitstellung einer Verbindung der Formel (K-1), 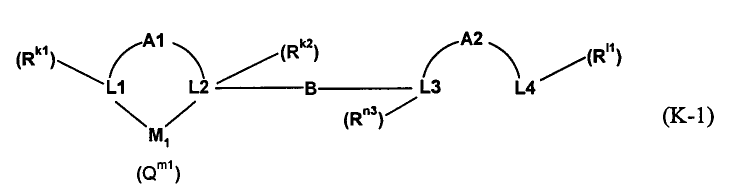 wobei m1 die gleiche Definition wie vorher hat, n3 größer oder gleich k3 ist und 14 größer oder gleich k4 ist.
b) Umsetzung einer Verbindung der Formel (K-1) mit einer Metallverbindung der Formel M₂(Q^{o2}), wobei o2 Werte zwischen 1 und 8 annehmen kann.

Ein weiteres Verfahren zur Herstellung der erfindungsgemäßen Verbindungen der Formel (I) umfasst die Schritte:
a) Bereitstellung einer Verbindung der Formel (K-1), 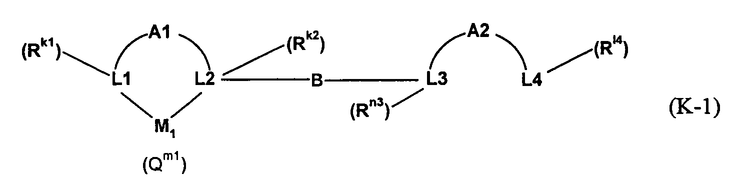 wobei m1 die gleiche Definition wie vorher hat, n3 größer oder gleich k3 ist und 14 größer oder gleich k4 ist.
b) Umsetzung einer Verbindung der Formel (K-1) mit einer Metallverbindung der Formel M₃(Q^{o3}), wobei o3 Werte zwischen 1 und 8 annehmen kann zu einer Verbindung der Formel (K-2), 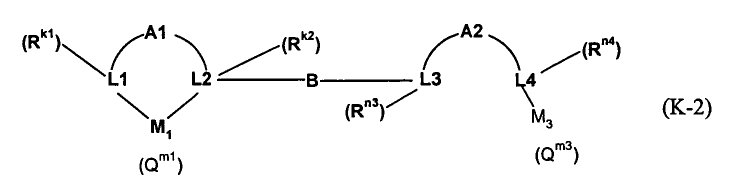 wobei n4 kleiner als 14 ist und anschließende
c) Umsetzung einer Verbindung der Formel (K-2) mit einer Metallverbindung der Formel M₂(Q^{o2}), wobei o2 Werte zwischen 1 und 8 annehmen kann.

Ein weiteres Verfahren zur Herstellung von erfindungsgemäßen Verbindungen der Formel (I) umfasst die Schritte:
a) Bereitstellung einer Verbindung der Formel (K-1), 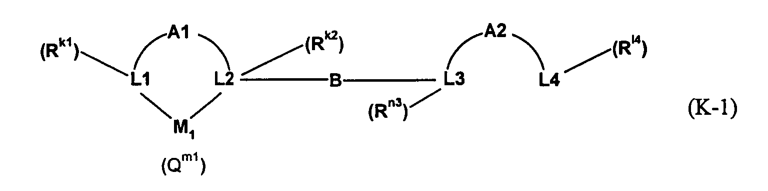 wobei m1 die gleiche Definition wie vorher hat, n3 größer oder gleich k3 ist und 14 größer oder gleich k4 ist
b) Umsetzung einer Verbindung der Formel (K-1) mit einer Metallverbindung der Formel M₃(Q^{o3}), wobei o3 Werte zwischen 1 und 8 annehmen kann zu einer Verbindung der Formel (K-3), 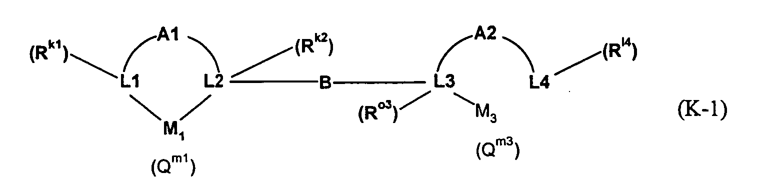 wobei o3 kleiner als n3 ist und anschließende
c) Umsetzung einer Verbindung der Formel (K-3) mit einer Metallverbindung der Formel M₂(Q^{o2}), wobei o2 Werte zwischen 1 und 8 annehmen kann.

Ein weiteres Verfahren zur Herstellung von erfindungsgemäßen Verbindungen der Formel (I) umfasst die Schritte:
a) Bereitstellung einer Verbindung der Formel (K-1), 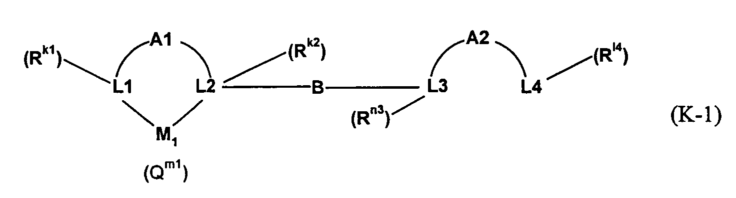 wobei m1 die gleiche Definition wie vorher hat, n3 größer oder gleich k3 ist und 14 größer oder gleich k4 ist,
b) Umsetzung einer Verbindung der Formel (K-1) mit einer Metallverbindung der Formel M₃(Q^{o3}), wobei o3 Werte zwischen 1 und 8 annehmen kann zu einer Verbindung der Formel (K-4), 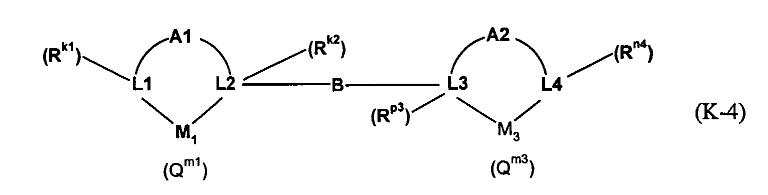 wobei p3 kleiner als n3 ist und n4 kleiner als 14, oder aber p3 kleiner als n3 ist und n4 gleich 14, oder aber n4 kleiner als 14 und p3 gleich n3 und anschließende
c) Umsetzung einer Verbindung der Formel (K-4) mit einer Metallverbindung der Formel M₂(Q^{o2}), wobei o2 Werte zwischen 1 und 8 annehmen kann.

Ein weiteres Verfahren zur Herstellung von erfindungsgemäßen Verbindungen der Formel (I) umfasst die Schritte:
a) Bereitstellung einer Verbindung der Formel (K-1), 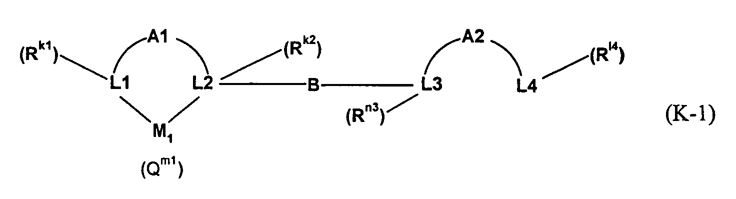 wobei m1 die gleiche Definition wie vorher hat, n3 größer oder gleich k3 ist und 14 größer oder gleich k4 ist,
b) Umsetzung einer Verbindung der Formel (K-1) mit einer Metallverbindung der Formel M₃(Q^{o3}), wobei o3 Werte zwischen 1 und 8 annehmen kann zu einer Verbindung der Formel (K-5a), 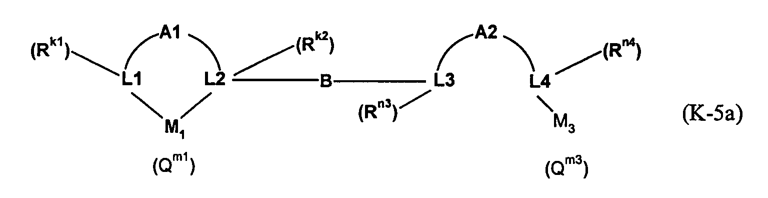 wobei n4 kleiner oder gleich 14 ist und anschließende
c) Umsetzung einer Verbindung der Formel (K-5a) mit einer Metallverbindung der Formel M₄(Q^{o4}), wobei o4 Werte zwischen 1 und 8 annehmen kann zu einer Verbindung der Formel (K-5b), 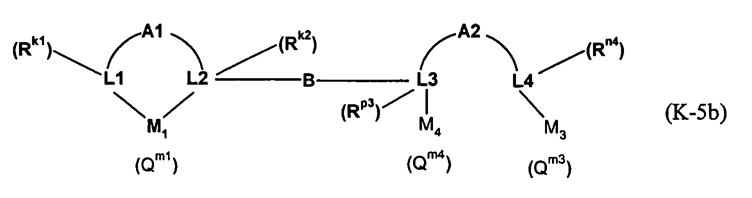 wobei p3 kleiner oder gleich n3 ist und anschließende
d) Umsetzung einer Verbindung der Formel (K-5b) mit einer Metallverbindung der Formel M₂(Q^{o2}), wobei o2 Werte zwischen 1 und 8 annehmen kann.

Ein weiteres Verfahren zur Herstellung von erfindungsgemäßen Verbindungen der Formel (I) umfasst die Schritte:
a) Bereitstellung einer Verbindung der Formel (K-1), 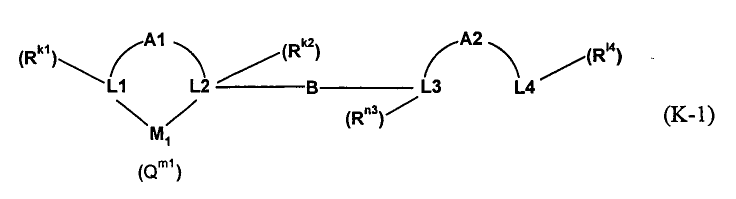 wobei m1 die gleiche Definition wie vorher hat, n3 größer oder gleich k3 ist und l4 größer oder gleich k4 ist.
b) Umsetzung einer Verbindung der Formel (K-1) mit einer Metallverbindung der Formel M₃(Q^{o3}), wobei o3 Werte zwischen 1 und 8 annehmen kann zu einer Verbindung der Formel (K-6a), 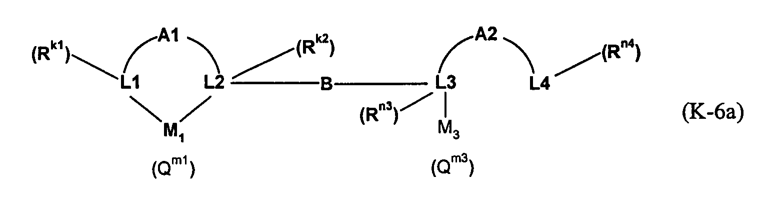 wobei n4 kleiner oder gleich 14 ist
c) Umsetzung einer Verbindung der Formel (K-6a) mit einer Metallverbindung der Formel M₄(Q^{o4}), wobei o4 Werte zwischen 1 und 8 annehmen kann zu einer Verbindung der Formel (K-6b), 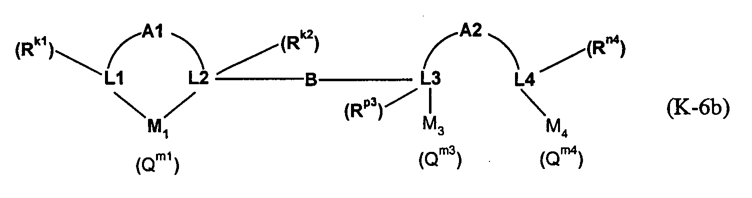 wobei p3 kleiner oder gleich n3 ist und anschließende
d) Umsetzung einer Verbindung der Formel (K-6b) mit einer Metallverbindung der Formel M₂(Q^{o2}), wobei o2 Werte zwischen 1 und 8 annehmen kann.

Auch für die Herstellung der Verbindung der Formel (K-1) gibt es mehrere Möglichkeiten.

Ein Verfahren zur Herstellung von Verbindungen der Formel (K-1) umfasst die Schritte:
a) Bereitstellung einer Verbindung der Formel (VII), 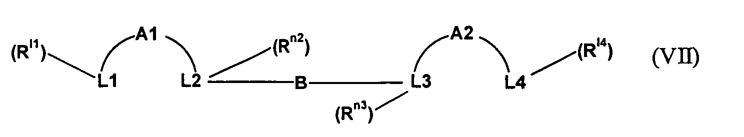 wobei l1 größer oder gleich k1 ist, n2 größer oder gleich k2 ist, n3 größer oder gleich k3 ist und 14 größer oder gleich k4 ist.
b) Umsetzung einer Verbindung der Formel (VII) mit einer Metallverbindung der Formel M₁(Q^{m1}), wobei ml die gleiche Definition wie vorher hat.

Ein weiteres Verfahren zur Herstellung von Verbindungen der Formel (K-1) umfasst die Schritte:
a) Bereitstellung einer Verbindung der Formel (VII), 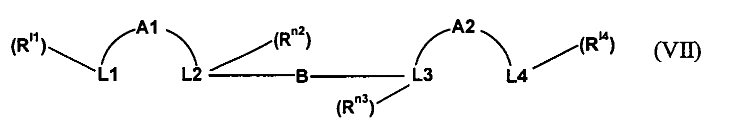 wobei l1 größer oder gleich k1 ist, n2 größer oder gleich k2 ist, n3 größer oder gleich k3 ist und 14 größer oder gleich k4 ist.
b) Umsetzung einer Verbindung der Formel (VII) mit einer Metallverbindung der Formel M₃(Q^{o3}), wobei o3 Werte zwischen 1 und 8 annehmen kann zu einer Verbindung der Formel (K-8), 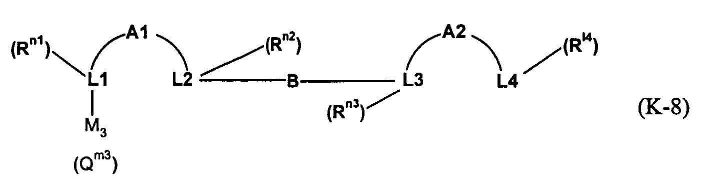 wobei n1 kleiner oder gleich l1 ist und anschließende
c) Umsetzung einer Verbindung der Formel (K-8) mit einer Metallverbindung der Formel M₁(Q^{m1}), wobei m1 die gleiche Definition wie vorher hat.

Ein weiteres Verfahren zur Herstellung von Verbindungen der Formel (K-1) umfasst die Schritte:
c) Bereitstellung einer Verbindung der Formel (VII), 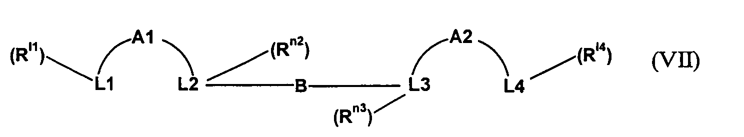 wobei l1 größer oder gleich k1 ist, n2 größer oder gleich k2 ist, n3 größer oder gleich k3 ist und 14 größer oder gleich k4 ist,
d) Umsetzung einer Verbindung der Formel (VII) mit einer Metallverbindung der Formel M₃(Q^{o3}), wobei o3 Werte zwischen 1 und 8 annehmen kann zu einer Verbindung der Formel (K-9), 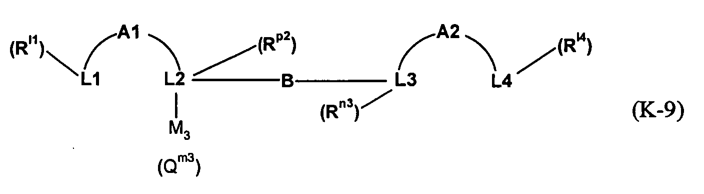 wobei p2 kleiner oder gleich n2 ist und anschließende
c) Umsetzung einer Verbindung der Formel (K-9) mit einer Metallverbindung der Formel M₁(Q^{m1}), wobei m1 die gleiche Definition wie vorher hat.

Ein weiteres Verfahren zur Herstellung von Verbindungen des Typs (K-1) umfasst die Schritte:
a) Bereitstellung einer Verbindung der Formel (VII), 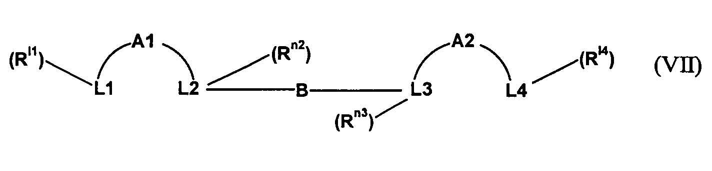 wobei l1 größer oder gleich k1 ist, n2 größer oder gleich k2 ist, n3 größer oder gleich k3 ist und l4 größer oder gleich k4 ist,
b) Umsetzung einer Verbindung der Formel mit einer Metallverbindung der Formel M₃(Q^{o3}),
   wobei o3 Werte zwischen 1 und 8 annehmen kann zu einer Verbindung der Formel (K-10a), 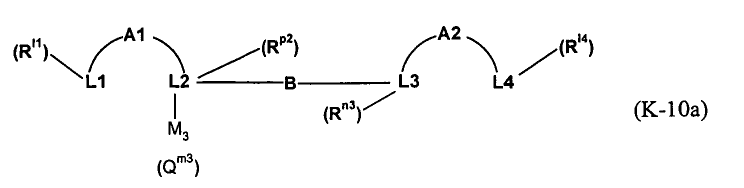 wobei p2 kleiner oder gleich n2 ist,
c) Umsetzung einer Verbindung der Formel (K10a) mit einer Metallverbindung der Formel M₄(Q^{o4}), wobei o4 Werte zwischen 1 und 8 annehmen kann zu einer Verbindung der Formel (K-10b), 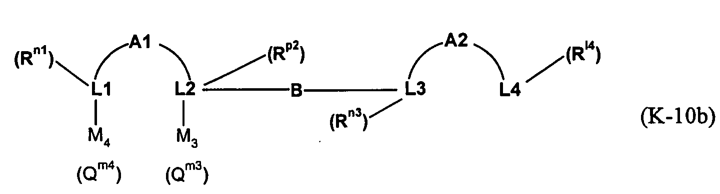 wobei n1 kleiner oder gleich l1 ist und anschließende.
d) Umsetzung einer Verbindung der Formel (K-10b) mit einer Metallverbindung des Typs M₁(Q^{m1}), wobei m1 die gleiche Definition wie vorher hat.

Ein weiteres Verfahren zur Herstellung von Verbindungen der Formel (K-1) umfasst die Schritte:
a) Bereitstellung einer Verbindung der Formel (VII), 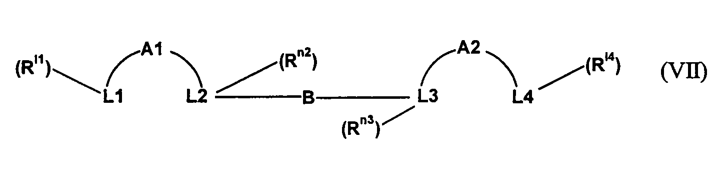 wobei l1 größer oder gleich k1 ist, n2 größer oder gleich k2 ist, n3 größer oder gleich k3 ist und l4 größer oder gleich k4 ist.
b) Umsetzung einer Verbindung der Formel (VII) mit einer Metallverbindung der Formel M₃(Q^{o3}), wobei o3 Werte zwischen 1 und 8 annehmen kann zu einer Verbindung der Formel (K-11a), 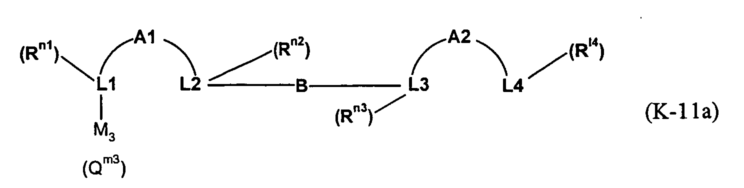 wobei n1 kleiner oder gleich 11 ist.
c) Umsetzung einer Verbindung der Formel (K- 11a) mit einer Metallverbindung der Formel M₄(Q^{o4}), wobei o4 Werte zwischen 1 und 8 annehmen kann zu einer Verbindung der Formel (K-11b), 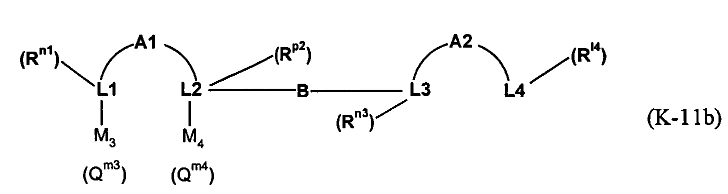 wobei p2 kleiner oder gleich n2 ist und anschließende
d) Umsetzung einer Verbindung der Formel (K-11b) mit einer Metallverbindung der Formel M₁(Q^{m1}), wobei m1 die gleiche Definition wie vorher hat.

Ein weiteres Verfahren zur Herstellung von Verbindungen des Typs (K-1) umfasst die Schritte:
a) Bereitstellung einer Verbindung der Formel (VII), 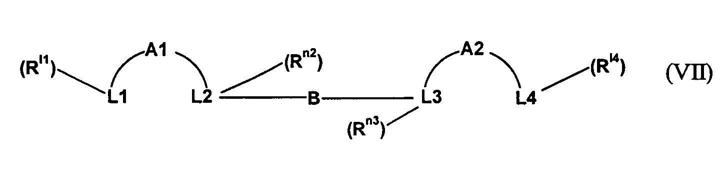 wobei l1 größer oder gleich k1 ist, n2 größer oder gleich k2 ist, n3 größer oder gleich k3 ist und l4 größer oder gleich k4 ist,
b) Umsetzung einer Verbindung der Formel (VII) mit einer Metallverbindung der Formel M₃(Q^{o3}), wobei o3 Werte zwischen 1 und 8 annehmen kann zu einer Verbindung der Formel (K-12), 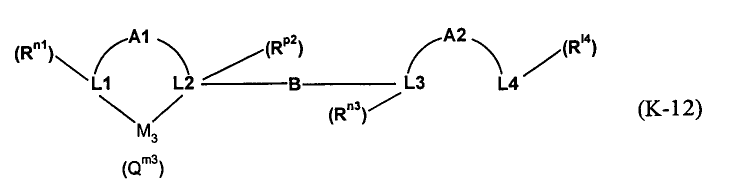 wobei p2 kleiner als n2 ist und n1 kleiner als l1, oder aber p2 kleiner als n2 ist und n1 gleich l1, oder aber n1 kleiner als l1 und p2 gleich n2 und anschließende
c) Umsetzung einer Verbindung der Formel (K-12) mit einer Metallverbindung der Formel M₁(Q^{m1}), wobei m1 die gleiche Definition wie vorher hat.

Auch für die Herstellung der Verbindung der Formel (VII) gibt es mehrere Möglichkeiten Ein Verfahren zur Herstellung von Verbindungen des Formel (VII) umfasst die Schritte:
a) Bereitstellung einer Verbindung des funktionalisierten Bausteins der Formel (S1-1), 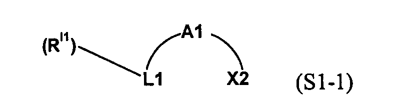 wobei X2 eine reaktive Gruppe darstellt und die Zahl l1 die Anzahl und die Unterschiede der einzelnen Substituenten der Gruppe R wiedergibt und für alle Werte zwischen 0 bis α-1 steht, wobei α der Valenz von L1 entspricht,
b) Bereitstellung einer Verbindung des funktionalisierten Bausteins der Formel (S1-2), 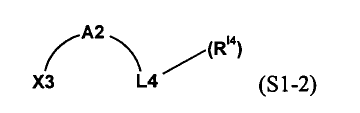 wobei X3 eine reaktive Gruppe darstellt und die Zahl 14 die Anzahl und die Unterschiede der einzelnen Substituenten aus der Gruppe von R wiedergibt und für alle Werte zwischen 0 bis δ-1 steht, wobei δ der Valenz von L4 entspricht,
c) Umsetzung einer Verbindung des Bausteins der Formel (S1-1) mit einer Verbindung des bifunktionellen Agens der Formel (S1-3), 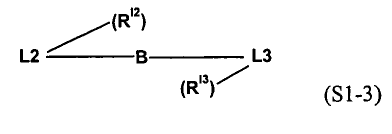 wobei die Zahl l2 der vorhandenen Anzahl und dem Unterschied der einzelnen Substituenten aus der Gruppe von R entspricht und für alle Werte zwischen 0 bis β-1 steht, wobei β der Valenz von L2 entspricht und die Zahl l3 der vorhandenen Anzahl und dem Unterschied der einzelnen Substituenten aus der Gruppe von R entspricht und für alle Werte zwischen 0 bis γ-1 steht, wobei γ der Valenz von L3 entspricht, zu einer Verbindung der Formel (S1-4), 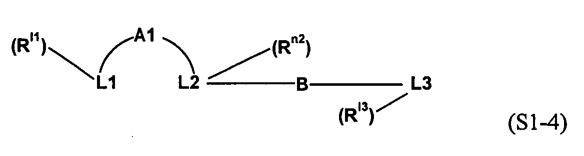 wobei n2 kleiner oder gleich l2 ist und anschließende
d) Umsetzung einer Verbindung der Formel (S1-4) mit einer Verbindung des Bausteins der Formel (S1-2) zu einer Verbindung der Formel (S1-5), 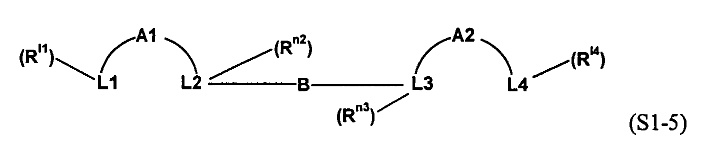
wobei n3 kleiner oder gleich 13 ist.

Ein weiteres Verfahren zur Herstellung von Verbindungen der Formel (VII) umfasst die Schritte:
a) Bereitstellung einer Verbindung eines funktionalisierten Bausteins der Formel (S2-1), 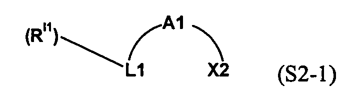 wobei X2 eine reaktive Gruppe darstellt und die Zahl l1 die Anzahl und die Unterschiede der einzelnen Substituenten der Gruppe R wiedergibt und für alle Werte zwischen 0 bis α-1 steht, wobei α der Valenz von L1 entspricht,
b) Bereitstellung einer Verbindung eines funktionalisierten Bausteins der Formel (S2-2), 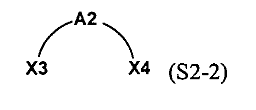 wobei X3 und X4 reaktive Gruppen darstellen,
c) Umsetzung einer Verbindung des funktionalisierten Bausteins der Formel (S2-1) mit einer Verbindung eines bifunktionellen Agens der Formel (S2-3), 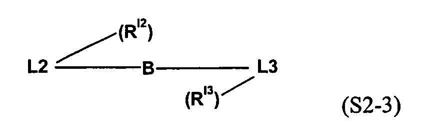 wobei die Zahl l2 der vorhandenen Anzahl und dem Unterschied der einzelnen Substituenten der Gruppe R entspricht und für alle Werte zwischen 0 bis β-1 steht, wobei β der Valenz von L2 entspricht und die Zahl l3 der vorhandenen Anzahl und dem Unterschied der einzelnen Substitueten der Gruppe R entspricht und für alle Werte zwischen 0 bis γ-1 steht, wobei γ der Valenz von L3 entspricht zu einer Verbindung der Formel (S2-4), 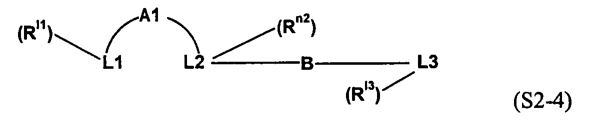 wobei n2 kleiner oder gleich l2 ist
d) Umsetzung einer Verbindung der Formel (S2-4) mit einer Verbindung eines funktionalisierten Bausteins der Formel (S2-2) zu einer Verbindung der Formel (S2-5), 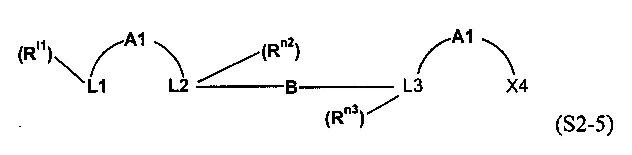 wobei n3 kleiner oder gleich l3 ist und anschließende
e) Umsetzung einer Verbindung der Formel (S2-5) mit einem Agens, das die Einführung von L4 erlaubt.

Ein weiteres Verfahren zur Herstellung von Verbindungen der Formel (VII) umfasst die Schritte:
a) Bereitstellung einer Verbindung eines funktionalisierten Bausteins der Formel (S3-1), 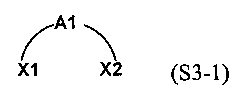 wobei X1 und X2 reaktive Gruppen darstellen,
b) Bereitstellung einer Verbindung eines funktionalisierten Bausteins der Formel (S3-2), 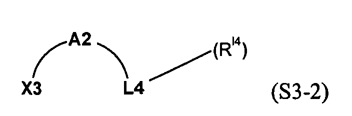 wobei X3 eine reaktive Gruppe darstellt und die Zahl 14 die Anzahl und die Unterschiede der Substituenten der Gruppe R wiedergibt und für alle Werte zwischen 0 bis δ-1 steht,
   wobei δ der Valenz von L4 entspricht,
c) Umsetzung einer Verbindung eines funktionalisierten Bausteines der Formel (S3-1) mit einer Verbindung eines bifunktionellen Agens der Formel (S3-3), 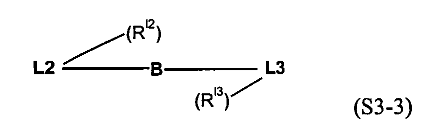 wobei die Zahl l2 der vorhandenen Anzahl und dem Unterschied der Substituenten der Gruppe von R entspricht und für alle Werte zwischen 0 bis β-1 steht, wobei β der Valenz von L2 entspricht und die Zahl l3 der Anzahl und dem Unterschied der Substituenten der Gruppe von R entspricht und für alle Werte zwischen 0 bis γ-1 steht, wobei γ der Valenz von L3 entspricht zu einer Verbindung der Formel (S3-4), 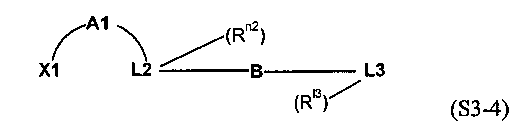 wobei n2 kleiner oder gleich l2 ist
d) Umsetzung einer Verbindung der Formel (S3-4) mit einem Agens, das die Einführung von L1 erlaubt zu einer Verbindung der Formel (S3-5) 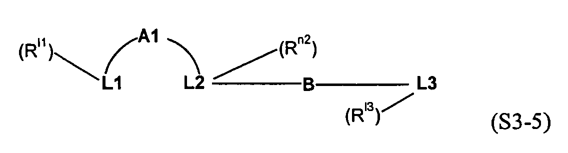 und anschließende
e) Umsetzung einer Verbindung der Formel (S3-5) mit einer Verbindung eines bifunktionellen Bausteins der Formel (S3-2).

Ein weiteres Verfahren zur Herstellung von Verbindungen der Formel (VII) umfasst die Schritte:
a) Bereitstellung einer Verbindung eines funktionalisierten Bausteins der Formel (S4-1), 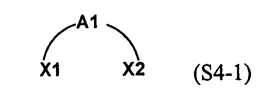 wobei X1 und X2 reaktive Gruppen darstellen,
b) Bereitstellung einer Verbindung eines funktionalisierten Bausteins der Formel (S4-2), 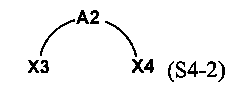 wobei X3 und X4 reaktive Gruppen darstellen,
c) Umsetzung einer Verbindung eines funktionalisierten Bausteins der Formel (S4-1) mit einer Verbindung eines bifunktionellen Agens der Formel (S4-3), 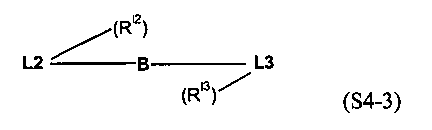 wobei die Zahl l2 der vorhandenen Anzahl und dem Unterschied der Substituenten der Gruppe von R entspricht und für alle Werte zwischen 0 bis β-1 steht, wobei β der Valenz von L2 entspricht und die Zahl l3 der vorhandenen Anzahl und dem Unterschied der substituenten der Gruppe R entspricht und für alle Werte zwischen 0 bis γ-1 steht, wobei γ der Valenz von L3 entspricht zu einer Verbindung der Formel (S4-4), 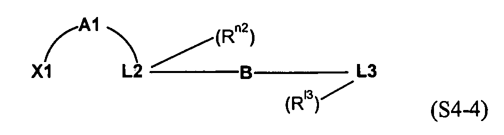 wobei n2 kleiner oder gleich 12 ist,
e) Umsetzung einer Verbindung der Formel (S4-4) mit einer Verbindung eines funktionalisierten Bausteins der Formel (S4-2), wobei eine Verbindung der Formel (S4-5) erhalten wird, 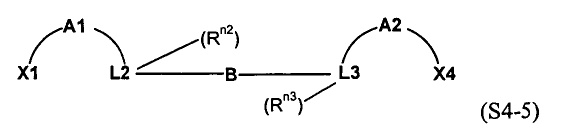 anschließende
f) Umsetzung einer Verbindung der Formel (S4-5) mit einem Agens, das die Einführung von L1 erlaubt zu einer Verbindung der Formel (S4-6) 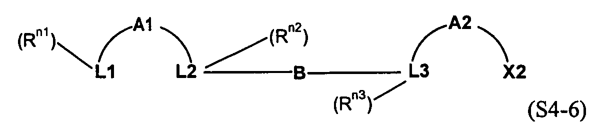 und anschließende
g) Umsetzung einer Verbindung der Formel (S4-6) mit einem Agens, das die Einführung von L4 erlaubt.

Ein weiteres Verfahren zur Herstellung von Verbindungen der Formel (VII) umfasst die Schritte:
a) Bereitstellung einer Verbindung eines funktionalisierten Bausteins der Formel (S5-1), 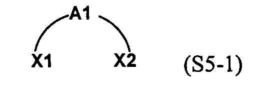 wobei X1 und X2 reaktive Gruppen darstellen,
b) Bereitstellung einer Verbindung eines funktionalisierten Bausteins der Formel (S5-2), 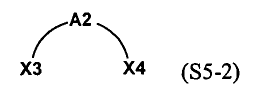 wobei X3 und X4 reaktive Gruppen darstellen,
c) Umsetzung einer Verbindung eines funktionalisierten Bausteines der Formel (S5-1) mit einer Verbindung eines bifunktionellen Agens der Formel (S5-3), 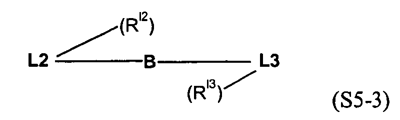 wobei die Zahl l2 der vorhandenen Anzahl und dem Unterschied der Substituenten der Gruppe R entspricht und für alle Werte zwischen 0 bis β-1 steht, wobei β der Valenz von L2 entspricht und die Zahl l3 der vorhandenen Anzahl und dem Unterschied der Substituenten von der Gruppe R entspricht und für alle Werte zwischen 0 bis γ-1 steht,
   wobei γ der Valenz von L3 entspricht zu einer Verbindung der Formel (S5-4), 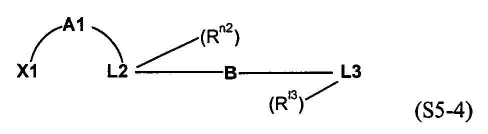 wobei n2 kleiner oder gleich l2 ist, dann
d) Umsetzung einer Verbindung der Formel (S5-4) mit einem Agens, das die Einführung von L1 erlaubt zu einer Verbindung der Formel (S5-5), 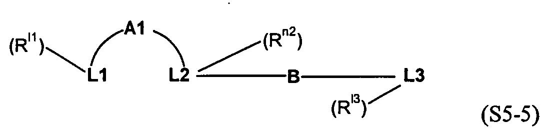
e) anschließende Umsetzung einer Verbindung der Formel (S5-5) mit einer Verbindung eines funktionalisierten Bausteins der Formel (S5-2) zu einer Verbindung der Formel (S5-6) 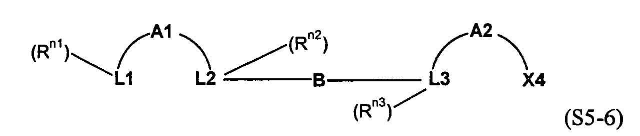 und anschließende
f) Umsetzung einer Verbindung der Formel (S4-6) mit einem Agens, das die Einführung von L4 erlaubt.

Ein weiteres Verfahren zur Herstellung von Verbindungen der Formel (VII) umfasst die Schritte:
a) Bereitstellung einer Verbindung der Formel (S6-1), 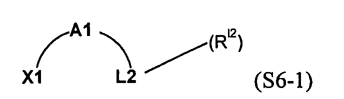 wobei l2 der Anzahl und dem Unterschied der Substituenten der Gruppe von R entspricht und alle Werte zwischen 0 bis β-1 steht, wobei β der Valenz von L2 entspricht und X1 eine reaktive Gruppe darstellt.
b) Bereitstellung einer Verbindung eines funktionalisierten Bausteins der Formel (S6-2), 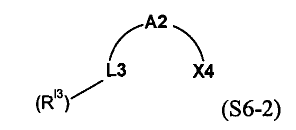 wobei l3 der Anzahl und dem Unterschie der Substituenten der Gruppe von R entspricht und alle Werte zwischen 0 bis γ-1 steht, wobei γ der Valenz von L3 entspricht und X4 eine reaktive Gruppe darstellt,
c) Umsetzung einer Verbindung der Formel (S6-1) mit einer Verbindung eines bifunktionellen Agens der Formel (S6-3),

   Y1―B―Y2 (S6-3)

   wobei Y1 und Y2 jeweils reaktive Gruppen darstellen und eine Verbindung der Formel (S6-4) erhalten wird 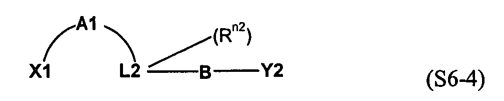
d) dann Umsetzung einer Verbindung der Formel (S6-4) mit einer Verbindung eines funktionalisierten Bausteines der Formel (S6-2), wobei eine Verbindung der Formel (S6-5) erhalten wird 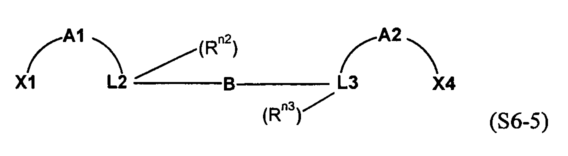
e) anschließende Umsetzung der Verbindung der Formel (S6-5) mit einem Agens, das die Einführung von L1 erlaubt zu einer Verbindung der Formel (S6-6) 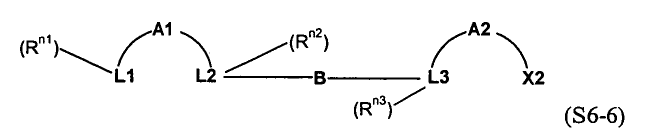 und anschließende
f) Umsetzung der Verbindung der Formel (S6-6) mit einem Agens, das die Einführung von L4 erlaubt.

Ein weiteres Verfahren zur Herstellung von Verbindungen der Formel (VII) umfasst die Schritte:
a) Bereitstellung einer Verbindung eines Bausteins der Formel (S7-1), 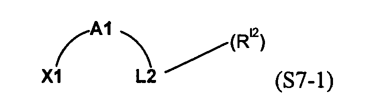 wobei l2 der Anzahl und dem Unterschied der Substituenten der Gruppe R entspricht und für alle Werte zwischen 0 bis β-1 steht, wobei β der Valenz von L2 entspricht und X1 eine reaktive Gruppe darstellt,
b) Bereitstellung einer Verbindung eines funktionalisierten Bausteins der Formel (S7-2), 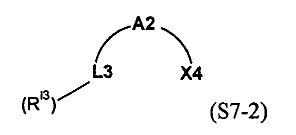 wobei l3 der Anzahl und dem Unterschied der Substituenten der Gruppe R entspricht und für alle Werte zwischen 0 bis γ-1 steht, wobei γ der Valenz von L3 und X4 eine reaktive Gruppe darstellt,
c) Umsetzung einer Verbindung des Bausteins der Formel (S7-1) mit einer Verbindung eines bifunktionellen Agens der Formel (S7-3),

   Y1―B―Y2 (S7-3)

   wobei Y1 und Y2 jeweils reaktive Gruppen darstellen und eine Verbindung der Formel (S7-4) erhalten wird: 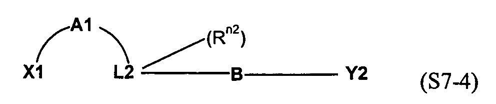
d) Umsetzung einer Verbindung der Formel (S7-4) mit einem Agens, das die Einführung von L1 erlaubt zu einer Verbindung der Formel (S7-5) 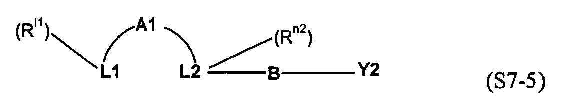
e) Umsetzung einer Verbindung der Formel (S7-5) mit einer Verbindung eines funktionalisierten Bausteins der Formel (S7-2) zu einer Verbindung der Formel (S7-6) 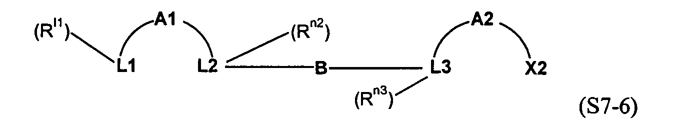 und anschließende
f) Umsetzung einer Verbindung der Formel (S7-6) mit einem Agens, das die Einführung von L4 erlaubt.

Ein weiteres Verfahren zur Herstellung von Verbindungen der Formel (VII) umfasst die Schritte:
a) Bereitstellung einer Verbindung eines Bausteins der Formel (S8-1), 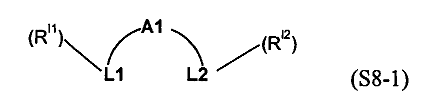 wobei die Zahl l1 der Anzahl und dem Unterschied der Substituenten der Gruppe R entspricht und für alle Werte zwischen 0 bis α-1 steht, wobei α der Valenz von L1 entspricht und die Zahl l2 der Anzahl und dem Unterschied der Substituenten der Gruppe R entspricht und für alle Werte zwischen 0 bis β-1 steht, wobei β der Valenz von L2 entspricht,
b) Bereitstellung einer Verbindung eines funktionalisierten Bausteins der Formel (S8-2), 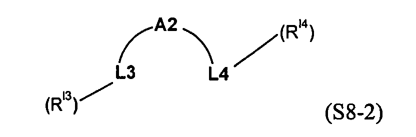 wobei die Zahl l3 der Anzahl und dem Unterschied der Substituenten der Gruppe R entspricht und für alle Werte zwischen 0 bis γ-1 steht, wobei γ der Valenz von L3 entspricht und die Zahl l4 der Anzahl und dem Unterschied der Substituenten der Gruppe R entspricht und für alle Werte zwischen 0 bis δ-1 steht, wobei δ der Valenz von L4 entspricht,
c) Umsetzung einer Verbindung eines Bausteines der Formel (S8-1) mit einer Verbindung eines bifunktionellen Agens der Formel (S8-3), 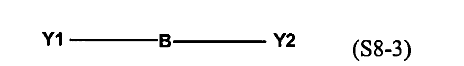 wobei Y1 und Y2 jeweils reaktive Gruppen darstellen zu einer Verbindung der Formel (S8-4),

   Y1―B―Y2 (S8-3)

   wobei n2 kleiner oder gleich l2 ist und anschließende
d) Umsetzung einer Verbindung der Formel (S8-4) mit einer Verbindung eines funktionalisierten Bausteins der Formel (S8-2).

Ein weiteres Verfahren zur Herstellung von Verbindungen der Formel (VII) umfasst die Schritte:
a) Bereitstellung einer Verbindung eines Bausteins der Formel (S9-1), 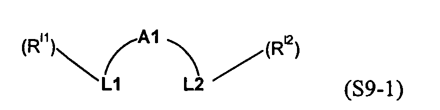 wobei die Zahl l1 der Anzahl und dem Unterschied der Substituenten der Gruppe R entspricht und für alle Werte zwischen 0 bis α-1 steht, wobei α der Valenz von L1 entspricht und die Zahl l2 der Anzahl und dem Unterschied der Substituenten der Gruppe R entspricht und für alle Werte zwischen 0 bis β-1 steht, wobei β der Valenz von L2 entspricht
b) Bereitstellung einer Verbindung eines funktionalisierten Bausteins der Formel (S9-2), 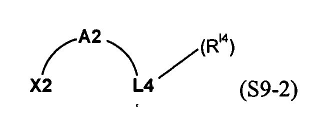 wobei X2 eine reaktive Gruppe darstellt und die Zahl l4 der Anzahl und dem Unterschied der Substituenten der Gruppe R entspricht und für alle Werte zwischen 0 bis δ-1 steht,
   wobei δ der Valenz von L4 entspricht,
c) Umsetzung einer Verbindung eines Bausteins der Formel (S9-1) mit einer Verbindung eines bifunktionellen Agens der Formel (S9-3) 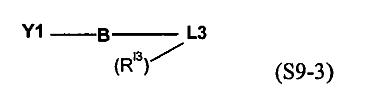 zu einer Verbindung der Formel (S9-4), 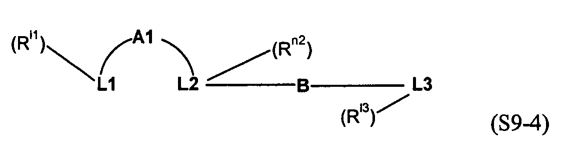 wobei n2 kleiner oder gleich l2 ist und anschließende
d) Umsetzung einer Verbindung der Formel (S9-4) mit einer Verbindung eines funktionalisierten Bausteins der Formel (S9-2).

Ein weiteres Verfahren zur Herstellung von Verbindungen der Formel (VII) umfasst die Schritte:
b) Bereitstellung einer Verbindung eines Bausteins der Formel (S10-1), 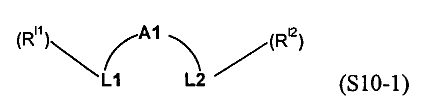 wobei die Zahl l1 der Anzahl und dem Unterschied der Substituenten der Gruppe R entspricht und für alle Werte zwischen 0 bis α-1 steht, wobei α der Valenz von L1 entspricht und die Zahl l2 der Anzahl und dem Unterschied der Substituenten der Gruppe R entspricht und für alle Werte zwischen 0 bis β-1 steht, wobei β der Valenz von L2 entspricht,
b) Bereitstellung einer Verbindung eines funktionalisierten Bausteins der Formel (S10-2), 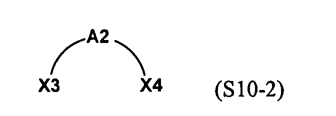 wobei X3 und X4 reaktive Gruppen darstellen,
c) Umsetzung einer Verbindung eines Bausteins der Formel (S10-1) mit einer Verbindung eines bifunktionellen Agens der Formel (S10-3) 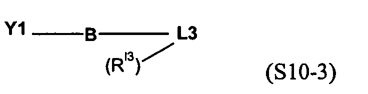 zu einer Verbindung der Formel (S10-4), 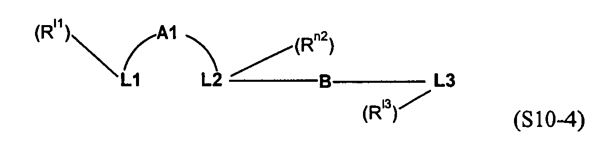 wobei n2 kleiner oder gleich l2 ist, anschließende
d) Umsetzung einer Verbindung der Formel (S10-4) mit einer Verbindung der Formel (S10-2) zu einer Verbindung der allgemeinen Formel (S10-5) 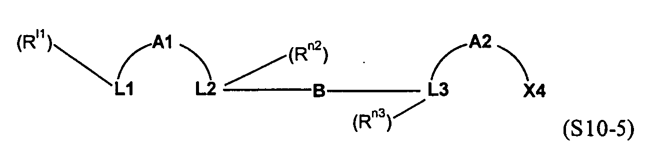 und anschließende
g) Umsetzung einer Verbindung der Formel (S10-5) mit einem Agens, das die Einführung von L4 erlaubt.

Ein weiteres Verfahren zur Herstellung von Verbindungen der Formel (VII) umfasst die Schritte:

Bereitstellung einer Verbindung eines Bausteins der Formel (S11-1), 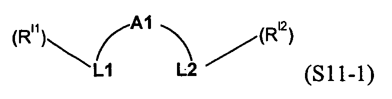 wobei die Zahl l1 der Anzahl und dem Unterschied der Substituenten der Gruppe R entspricht und für alle Werte zwischen 0 bis α-1 steht, wobei α der Valenz von L1 entspricht und die Zahl l2 der Anzahl und dem Unterschied der Substituenten der Gruppe R entspricht und für alle Werte zwischen 0 bis β-1 steht, wobei β der Valenz von L2 entspricht,
b) Bereitstellung einer Verbindung eines funktionalisierten Bausteins der Formel (S11-2), 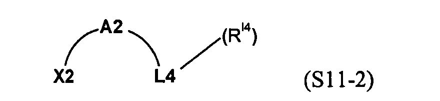 wobei X2 eine reaktive Gruppe darstellt und die Zahl l4 der Anzahl und dem Unterschied der Substituenten der Gruppe R entspricht und für alle Werte zwischen 0 bis δ-1 steht,
   wobei δ der Valenz von L4 entspricht,
c) Umsetzung einer Verbindung der Formel (S11-2) mit einer Verbindung eines bifunktionellen Agens der Formel (S11-3) 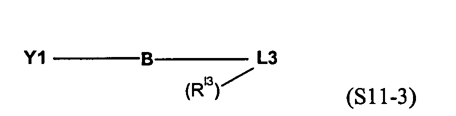 zu einer Verbindung der Formel (S11-4), 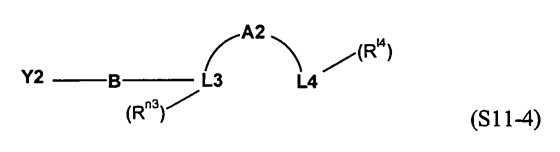 wobei n3 kleiner oder gleich l3 ist.
d) Umsetzung einer Verbindung der Formel (S11-4) mit einer Verbindung eines funktionalisierten Bausteins der Formel (S11-2).

Ein weiteres Verfahren zur Herstellung von Verbindungen der Formel (I) umfasst die Schritte:
a) Bereitstellung eines Bausteins der Formel (S12-1), 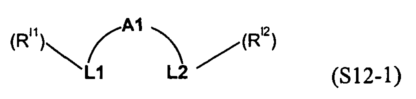 wobei die Zahl l1 der Anzahl und dem Unterschied der Substituenten der Gruppe R entspricht und für alle Werte zwischen 0 bis α-1 steht, wobei α der Valenz von L1 entspricht und die Zahl 12 der Anzahl und dem Unterschied der Substituenten der Gruppe R entspricht und für alle Werte zwischen 0 bis β-1 steht, wobei β der Valenz von L2 entspricht,
b) Bereitstellung einer Verbindung eines funktionalisierten Bausteins der Formel (S12-2), 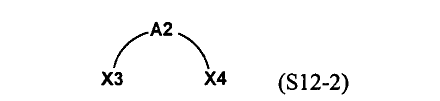 wobei X3 und X4 reaktive Gruppen darstellen
c) Umsetzung einer Verbindung eines funktionalisierten Bausteins der Formel (S12-2) mit einer Verbindung eines bifunktionellen Agens der Formel (S12-3) 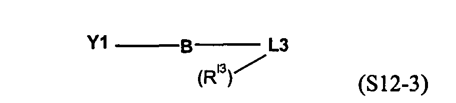 zu einer Verbindung der Formel (S12-4), 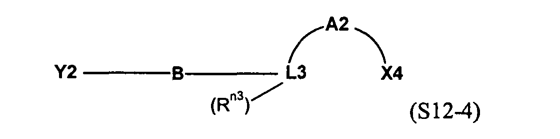 wobei n3 kleiner oder gleich 13 ist, anschließend
d) Umsetzung einer Verbindung der Formel (S12-4) mit einer Verbindung der Formel (S12-1) zu einer Verbindung der Formel (S12-5) 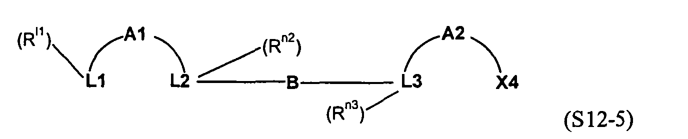 und anschließende
e) Umsetzung einer Verbindung der Formel (S12-5) mit einem Agens, das die Einführung von L4 erlaubt.

Ein weiteres Verfahren zur Herstellung von Verbindungen des Typs (VII) umfasst die Schritte:
a) Bereitstellung einer Verbindung eines Bausteins der Formel (S13-1), 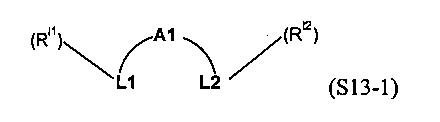 wobei die Zahl l1 der Anzahl und dem Unterschied der Substituenten der Gruppe R entspricht und für alle Werte zwischen 0 bis α-1 steht, wobei α der Valenz von L1 entspricht und die Zahl l2 der Anzahl und dem Unterschied der Substituenten der Gruppe R entspricht und für alle Werte zwischen 0 bis β-1 steht, wobei β der Valenz von L2 entspricht,
b) Bereitstellung einer Verbindung eines funktionalisierten Bausteins der Formel (S13-2), 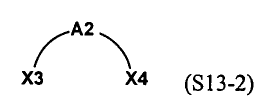 wobei X3 und X4 reaktive Gruppen darstellen,
c) Umsetzung einer Verbindung eines funktionalisierten Bausteins der Formel (S13-2) mit einer Verbindung eines bifunktionellen Agens der Formel (S13-3) 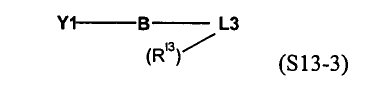 zu einer Verbindung der Formel (S13-4), 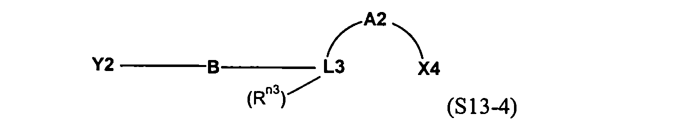 wobei n3 kleiner oder gleich l3 ist, anschließende
d) Umsetzung einer Verbindung der Formel (S13-4) mit einem Agens, das die Einführung von L4 erlaubt zu einer Verbindung der Formel (S13-5) 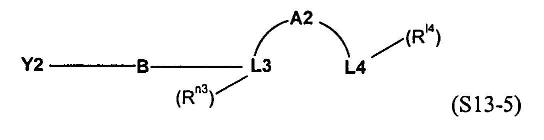 und anschließende
e) Umsetzung einer Verbindung der Formel (S13-5) mit einer Verbindung der Formel (S13-1).

Bevorzugt ist ein Verfahren zur Herstellung von Verbindungen, bei denen L3 und L4 Stickstoffatome sind umfassend die Schritte
a) Synthese eines α-Ketoimins oder α-Aldimins durch Umsetzung einer α,β-Dicarbonylverbindung mit einem primären Amin mit oder ohne Anwesenheit eines Katalysators basierend auf einer Verbindung des Typs

   M₃(Q^{o3})

   und anschließender Isolierung des entstehenden Produktes; wobei
   - M₃: ein Übergangsmetall, Bor, Aluminium, Silicium, Germanium, ein Alkali-oder Erdalkalimetall darstellt und
   - Q: ausgewählt werden aus der Gruppe bestehend aus monoanionischen, dianionischen und neutralen Liganden und
   - o3: in Abhängigkeit von der Ladung von M₃ die Werte 0, 1, 2, 3, 4, 5, 6, 7 und 8 annehmen kann
b) Umsetzung des Produktes aus Schritt a) mit einem Diamin, insbesondere einem aromatischen Diamin, sowie Isolierung des erhaltenen Produktes und
c) Umsetzung des Produktes aus Schritt b) mit M₁(Q^{m1}) und/oder M₂(Q^{m2}) und anschließender Isolierung des Produktes.

Besonders bevorzugt ist ein Verfahren zur Herstellung von Verbindungen des Typs (V), umfassend die Schritte
a) Synthese eines α-Ketoimins oder α-Aldimins durch Umsetzung einer α,β-Dicarbonylverbindung mit einem primären Amin und anschließender Isolierung des entstehenden Produktes
b) Umsetzung des Produktes aus Schritt a) mit einem Diamin, insbesondere einem aromatischen Diamin in Gegenwart von mit M₁(Q^{m1}) und/oder M₂(Q^{m2}) und anschließender Isolierung des Produktes.

Ganz besonders bevorzugt ist ein Verfahren zur Herstellung von Verbindungen der Formel (V), umfassend die Schritte
a) Synthese einer Verbindung der Formel (VIII) 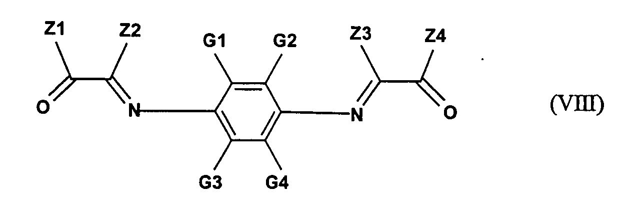 durch Umsetzung eines Paraphenylendiamins mit 2 Äquivalenten einer Dicarbonylverbindung mit oder ohne Anwesenheit eines Katalysators basierend auf einer Verbindung des Typs M₃(Q^{o3}), wobei
   - M₃: ein Übergangsmetall, Bor, Aluminium, Silicium, Germanium, ein Alkali-oder Erdalkalimetall darstellt und
   - Q: ausgewählt werden aus der Gruppe bestehend aus monoanionischen, dianionischen und neutralen Liganden und
   - o3: in Abhängigkeit von der Ladung von M₁ die Werte 0, 1, 2, 3, 4, 5, 6, 7 und 8 annehmen kann
   und anschließender Isolierung des entstehenden Produktes,
b) Umsetzung des Produktes aus Schritt a) mit einem primären Amin, insbesondere einem aromatischen Amin mit oder ohne Anwesenheit eines Katalysators basierend auf einer Verbindung des Typs M₄(Q^{o4}), wobei
   - M₄: ein Übergangsmetall, Bor, Aluminium, Silicium, Germanium, ein Alkali-oder Erdalkalimetall darstellt und
   - Q: ausgewählt werden aus der Gruppe bestehend aus monoanionischen, dianionischen und neutralen Liganden und
   - o4: in Abhängigkeit von der Ladung von M₁ die Werte 0, 1, 2, 3, 4, 5, 6, 7 und 8 annehmen kann
   sowie Isolierung des erhaltenen Produktes.
c) Umsetzung des Produktes aus Schritt b) mit M₁(Q^{m1}) und/oder M₂(Q^{m2}) und anschließender Isolierung des Produktes.

Insbesondere ganz besonders bevorzugt ist ein Verfahren zur Herstellung von Verbindungen der Formel (V), umfassend die Schritte
a) Synthese einer Verbindung der Formel (VIII) 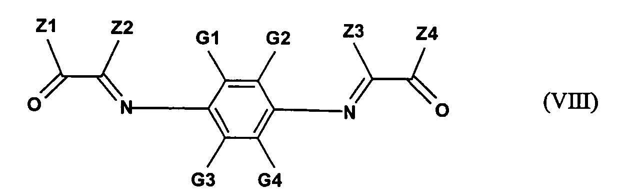 durch Umsetzung eines Paraphenylendiamins mit 2 Äquivalenten einer Dicarbonylverbindung mit oder ohne Anwesenheit eines Katalysators basierend auf einer Verbindung des Typs M₃(Q^{o3}), wobei
   - M₃: ein Übergangsmetall, Bor, Aluminium, Silicium, Germanium, ein Alkali-oder Erdalkalimetall darstellt und
   - Q: ausgewählt werden aus der Gruppe bestehend aus monoanionischen, dianionischen und neutralen Liganden und
   - o3: in Abhängigkeit von der Ladung von M₁ die Werte 0, 1, 2, 3, 4, 5, 6, 7 und 8 annehmen kann

Umsetzung des Produktes aus Schritt a) mit einem Diamin, insbesondere einem aromatischen Diamin in Gegenwart von M₁(Q^{m1}) und/oder M₂(Q^{m2}) und anschließender Isolierung.

Die erfindungsgemäßen Verbindungen werden als Katalysatoren verwendet.

Bevorzugt werden Sie als Katalysator in der Olefin-Polymerisation eingesetzt.

Besonders bevorzugt werden die erfindungsgemäßen Verbindungen alleine oder in Verbindung mit Säuren und Basen wie Lewis-Säuren, Brönstedt-Säuren, oder Pearson Säure oder Lewis Basen als Katalysator für die Homo-, Co- und Oligo-Polymerisation von Olefinen eingesetzt.

Bevorzugte Lewis-Säuren sind Borane oder Alane wie Aluminiumalkyle, Aluminiumhalogenide, Aluminiumalkylhalogenide, Aluminiumalkoholate, Bororganyle, Borhalogenide, Borsäureester, oder Bor beziehungsweise Aluminiumverbindungen, die sowohl Halogenid- als auch Alkyl- beziehungsweise Aryl- oder Alkoholat-Substituenten enthalten oder das Triphenylmethyl-Kation, sowie Mischungen derselben.

Besonders bevorzugt sind Aluminoxane oder Mischungen von Aluminium-haltigen Lewis-Säuren mit Wasser und Aluminiumalkylhalogenide, die dem Fachmann allgemein bekannt sind.

Die erfindungsgemäßen Verbindungen bilden in Gegenwart dieser Säuren oder Basen Zwischenprodukte, die als aktive Katalysatorlösung entweder vor der eigentlichen Polymerisation oder auch (in situ) in Gegenwart der zu polymerisierenden Monomere hergestellt werden können.

Die erfindungsgemäßen Katalysatoren werden bevorzugt zur Homo-, Co- und/oder Oligo-Polymerisation von olefinischen Monomeren eingesetzt. Unter olefinischen Monomeren sind alle dem Fachmann bekannten olefinischen Monomere zu verstehen. Bevorzugt sind Monomere ausgewählt aus der Gruppe bestehend aus Ethen, Propen, 1-Buten, 2-Buten, Isobuten, 1-Penten, 2-Penten, 1-Hexen, 2-Hexen, 3-Hexen, 1-Hepten, 1-Octen, 1-Decen, 1-Dodecen, Cyclopenten, Norbomen, Ethylidennorbornen, Styrol, p-Methylstyrol, Methylacrylat, Methylmethacrylat, Vinylacetat, Acrylnitril, Methacrylnitril sowie Mischungen derselben. Besonders bevorzugt sind Ethen, Propen, 1-Buten, 2-Buten, 1-Hexen, 1-Okten und Cyclopenten.

Bevorzugt werden diese Monomere zur Herstellung von Homo-Polymereren eingesetzt. Ganz besonders bevorzugt ist die Polymerisation von Ethen, Propen oder 2-Buten.

Die erhaltenen Polymere werden zur Herstellung von Formkörpern aller Art nach dem Fachmann bekannten üblichen Methoden wie Extrudieren, Spritzgießen, Schäumen, Folienblasen, Kalandrieren verwendet.

### Beispiele

### Beispiel 1: Bis(2,4,6-Trimethylanilino)zinkchlorid (Verbindung 1)

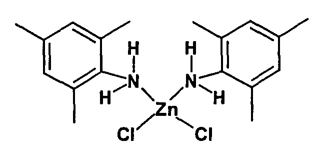

1,99g Zinkchlorid werden in 20ml Toluol suspendiert und mit 4,02g 2,4,6-Trimethylanilin versetzt. Es wird 20min. gerührt, dann werden weitere 20ml Toulol zugesetzt. Nach 35min. werden 100ml n-Hexan zugegeben und anschließend wird 1h gerührt. Das Produkt wird abfiltriert und mit 10ml Toluol gewaschen. Anschließend wird im Vakuum bis zur Gewichtskonstanz getrocknet. Ausbeute: 5,53g (92%)

### Beispiel 2: Verbindung 2

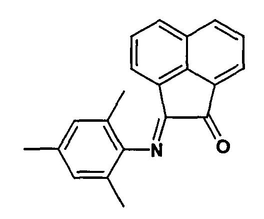

18,18g Acenaphthochinon und 61 mg Bis(2,4,6-Trimethylanilino)zinkchlorid werden in einem offenen Rundkolben mit N₂-Überlagerung auf 100°C erhitzt. Dann werden 13,49g 2,4,6-Trimethylanilin zugegeben und der Ansatz für 1h auf 160°C erhitzt. Anschließend wird auf Raumtemperatur abgekühlt und mit 220ml Dichlormethan versetzt. Es wird filtriert und das Filtrat am Rotationsverdampfer zur Trockene eingeengt. Das Produkt wird abschließend aus 300ml Methanol umkristallisiert.
Ausbeute: 11,95g (40%)

### Beispiel 3: Verbindung 3

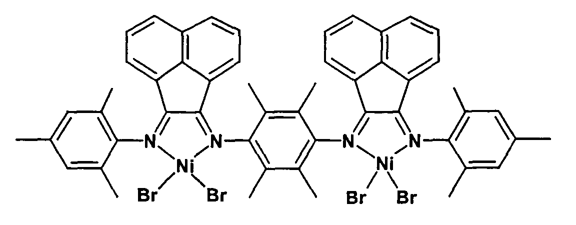

5,62 g der Verbindung 2, 1,24g 2,3,5,6-Tetramethyl-para-phenylendiamin und 3,31g Nickeldibromid werden in einem Kolben mit Rückflußkühler vorgelegt und mit 150ml Eisessig versetzt. Es wird 2 Tage unter Rückfluß gekocht und dann wird der Ansatz abgekühlt und nach weiteren 4 Tagen bei Raumtemperatur wird das Produkt abfiltriert. Der Filterrückstand wird zweimal mit je 40ml Eisessig und anschließend viermal mit je 40ml Diethylether gewaschen und anschließend bis zur Gewichtskonstanz im Ölpumpenvakuum getrocknet.
Ausbeute: 6,8g (73%)
Ni-Gehalt: 10,1% (ber.: 10.1%)

### Beispiel 4:

Polymerisation von Ethen, Cokatalysator: Methylaluminoxan (von Firma Crompton GmbH/Bergkamen als 10%ige Lösung in Toluol: Eurecen A15100/10T mit Molmasse 900g/mol, CH3/Al: 1.97, Hydrolysegas: 85 Nml/g, 5.2 %m/m Al, 34.2 %m/m TMA)

Ein inertisierter 11 Autoklav wird mit 380ml Toluol und 2,6ml einer 10%iger Lösung von Methylaluminoxan in Toluol gefüllt und auf die Polymerisationstemperatur von 30°C aufgeheizt. Dann wird mit Ethen ein Druck von 3,4 bar eingestellt und die Lösung mit Ethen gesättigt.

7,6 mg Verbindung 3 werden in 32,6 ml Methylenchlorid gelöst und von dieser Lösung wird 1ml (entspricht 0,233mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 3,4 bar polymerisiert. Die Regelung erfolgt durch Dosierung von Ethen.

Nach 101min. wird der Versuch beendet indem die Zufuhr von Ethen unterbrochen wird und der Reaktorinhalt in einen mit 21 Ethanol gefüllten Behälter überführt wird.

Das Polymer wird abfiltriert und bei 80°C im Vakuumtrockenschrank getrocknet.

Es werden 16,6g Polyethylen erhalten, dies entspricht einer katalytischen Aktivität von 24653 kg Polymer pro mol Nickel und Stunde.

Schmelzpunkt: 132°C (DSC-2.Aufheizung), Schmelzenthalpie: 148J/g

GPC: Mz: 1516000 Mw: 535000 Mn: 183000 Mw/Mn: 2,9

(Die Proben wurden jeweils in ortho-Dichlorbenzol (o-DCB) bei 140°C gelöst und mit einer Hochtemperatur-GPC-Anlage (Waters 150C) auf einer Kombination aus 4 20 µm-Styroldivinylbenzol-Linearsäulen (L=300 mm, d=8mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Vergleichsbeispiel 1: Verbindung 4

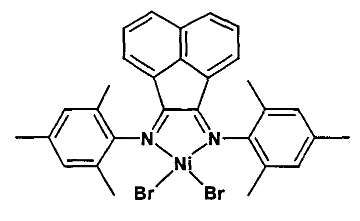

Der Nickeldibromid-Komplex des Acenaphthochinon 2.4.6-Trimethylphenylimin wird wie folgt synthetisiert:
3,66g Acenaphtochinon und 4,37g Nickeldibromid werden in 75ml Eisessig vorgelegt und unter Stickstoffatmosphäre mit 5,41g 2.4.6-Trimethylanilin versetzt. Es wird 7,5 Stunden unter Rückfluss gekocht und dann abgekühlt. Das ausgefallene Produkt wird zweimal mit je 30 ml Eisessig und viermal mit 25ml Diethylether gewaschen und anschließend bis zur Gewichtskonstanz im Ölpumpenvakuum getrocknet.
Ausbeute: 10.4g (78%)
Ni-Gehalt: 9.0% (ber.:9.1%)

### Vergleichsbeispiel 2:

Polymerisation von Ethen, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierter 1l Autoklav wird mit 380ml Toluol und 2,6ml einer 10%iger Lösung von Methylaluminoxan in Toluol gefüllt und auf die Polymerisationstemperatur von 30°C aufgeheizt. Dann wird mit Ethen ein Druck von 3,4 bar eingestellt und die Lösung mit Ethen gesättigt.

14 mg Verbindung 4 werden in 54,9 ml Methylenchlorid gelöst und von dieser Lösung wird 1ml (entspricht 0,255mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 3,4 bar polymerisiert. Die Regelung erfolgt durch Dosierung von Ethen.

Nach 101min. wird der Versuch beendet indem die Zufuhr von Ethen unterbrochen wird und der Reaktorinhalt in einen mit 2l Ethanol gefüllten Behälter überführt wird.

Das Polymer wird abfiltriert und bei 80°C im Vakuumtrockenschrank getrocknet.

Es werden 10.05g Polyethylen erhalten, dies entspricht einer katalytischen Aktivität von 14927kg Polymer pro mol Ni und Stunde.

### Schmelzpunkt: 125°C, Schmelzenthalpie: 125 J/g

Der Vergleich der katalytischen Aktivität mit der aus Beispiel 4 zeigt, daß der zweikernige Komplex deutlich aktiver ist als der einkernige.

### Beispiel 5

Polymerisation von Ethen, Cokatalysator: Ethylaluminiumsesquichlorid (Crompton GmbH/Bergkamen)

Ein inertisierter 1l Autoklav wird mit 380ml Toluol und 0,4ml Ethylaluminiumsequichlorid gefüllt und auf die Polymerisationstemperatur von 30°C aufgeheizt. Dann wird mit Ethen ein Druck von 3,4 bar eingestellt und die Lösung mit Ethen gesättigt.

7,6 mg Verbindung 3 werden in 32,6 ml Methylenchlorid gelöst und von dieser Lösung wird 1ml (entspricht 0,233mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 3,4 bar polymerisiert. Die Regelung erfolgt durch Dosierung von Ethen.

Nach 90min. wird der Versuch beendet indem die Zufuhr von Ethen unterbrochen wird und der Reaktorinhalt in einen mit 21 Ethanol gefüllten Behälter überführt wird.

Das Polymer wird abfiltriert und bei 80°C im Vakuumtrockenschrank getrocknet.

Es werden 9,6g Polyethylen erhalten.

Schmelzpunkt: 128°C, Schmelzenthalpie: 101 kJ/g

GPC: Mz: 1375000 Mw: 550000 Mn: 205000 Mw/Mn: 2,7

(Die Proben wurden jeweils in ortho-Dichlorbenzol (o-DCB) bei 140°C gelöst und mit einer Hochtemperatur-GPC-Anlage (Waters 150C) auf einer Kombination aus 4 20µm-Styroldivinylbenzol-Linearsäulen (L=300 mm, d=8mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Beispiel 6:

Polymerisation von Ethen, Cokatalysator: Diethylaluminiumchlorid (Crompton GmbH/Bergkamen)

Ein inertisierte 1l Autoklav wird mit 380ml Toluol und 0,33ml einer 20%iger Diethylaluminiumchloridlösung gefüllt und auf die Polymerisationstemperatur von 30°C aufgeheizt. Dann wird mit Ethen ein Druck von 3,4 bar eingestellt und die Lösung mit Ethen gesättigt.

7,6 mg Verbindung 3 werden in 32,6 ml Methylenchlorid gelöst und von dieser Lösung wird 1ml (entspricht 0,233mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 3,4 bar polymerisiert. Die Regelung erfolgt durch Dosierung von Ethen.

Nach 90min. wird der Versuch beendet indem die Zufuhr von Ethen unterbrochen wird und der Reaktorinhalt in einen mit 2l Ethanol gefüllten Behälter überführt wird.

Das Polymer wird abfiltriert und bei 80°C im Vakuumtrockenschrank getrocknet.

Es werden 5,8g Polyethylen erhalten.

Schmelzpunkt: 137°C, Schmelzenthalpie: 126 kJ/g

GPC: Mz: 2316000 Mw: 682000 Mn: 209000 Mw/Mn: 3,3

(Die Proben wurden jeweils in ortho-Dichlorbenzol (o-DCB) bei 140°C gelöst und mit einer Hochtemperatur-GPC-Anlage (Waters 150C) auf einer Kombination aus 4 20µm-Styroldivinylbenzol-Linearsäulen (L=300 mm, d=8mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Beispiel 7:

Polymerisation von Propen, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierte 1l Autoklav wird mit 380ml Toluol und 26,4ml einer 10%iger Lösung von Methylaluminoxan in Toluol gefüllt und auf die Polymerisationstemperatur von 30°C aufgeheizt. Dann wird mit Propen ein Druck von 6 bar eingestellt und die Lösung mit Propen gesättigt.

320 mg Verbindung 3 werden in 68,8 ml Methylenchlorid gelöst und von dieser Lösung werden 5ml (entspricht 23,3mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 6 bar polymerisiert. Die Regelung erfolgt durch Dosierung von Propen.

Nach 90min. wird der Versuch beendet indem die Zufuhr von Propen unterbrochen wird und der Reaktorinhalt in einen mit 21 Ethanol gefüllten Behälter überführt wird.

Das Polymer wird abfiltriert und bei 80°C im Vakuumtrockenschrank getrocknet.

Es werden 10,2g Polymer erhalten.

Glasübergangstemperatur: -36°C (DSC 2.Aufheizung)

¹H-NMR(in C2D2C14 bei 66°C): 250 CH/1000C.

GPC: Mz: 213000 Mw: 132000 Mn: 56000 Mw/Mn: 2,4

(Die Proben wurden jeweils in ortho-Dichlorbenzol (o-DCB) bei 140°C gelöst und mit einer Hochtemperatur-GPC-Anlage (Waters 150C) auf einer Kombination aus 4 20µm-Styroldivinylbenzol-Linearsäulen (L=300 mm, d=8mm) gemessen. Als interner Standard zur Flusskorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Beispiel 8:

Polymerisation von Propen, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierte 1l Autoklav wird mit 380ml Toluol und 26,4ml einer 10%iger Lösung von Methylaluminoxan in Toluol gefüllt und auf die Polymerisationstemperatur von 30°C aufgeheizt. Dann wird mit Propen ein Druck von 3 bar eingestellt und die Lösung mit Propen gesättigt.

320 mg Verbindung 3 werden in 68,8 ml Methylenchlorid gelöst und von dieser Lösung werden 5ml (entspricht 23,3mg) über eine Druckbürette in den Reaktor gegeben. Die Druckbürette wird mit 20ml Toluol nachgespült um eine Überführung der gesamten Katalysatormenge in den Reaktor sicherzustellen. Dann wird bei einem Druck von 3 bar polymerisiert. Die Regelung erfolgt durch Dosierung von Propen.

Nach 90min. wird der Versuch beendet indem die Zufuhr von Propen unterbrochen wird und der Reaktorinhalt in einen mit 2l Ethanol gefüllten Behälter überführt wird.

Das Polymer wird abfiltriert und bei 80°C im Vakuumtrockenschrank getrocknet.

Es werden 10,4g Polymer erhalten.

Glasübergangstempersatur: -38°C (DSC, 2.Aufheizung)

¹H-NMR(in C₂D₂Cl₄ bei 76°C): 262 CH/1000C.

GPC: Mz: 126000 Mw: 79000 Mn: 40000 Mw/Mn: 2,0

(Die Proben wurden jeweils in ortho-Dichlorbenzol (o-DCB) bei 140°C gelöst und mit einer Hochtemperatur-GPC-Anlage (Waters 150C) auf einer Kombination aus 4 20µm-Styroldivinylbenzol-Linearsäulen (L=300 mm, d=8mm) gemessen. Als interner Standard zur Flusskorrektur diente Jonol. Zur Detektion der Polymerkonzentration im Eluat wird ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Beispiel 9:

Polymerisation von Hexen, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierte Glasreaktor wird mit 50ml Toluol, 50ml 1-Hexen und 26,4ml einer 10%iger Lösung von Methylaluminoxan in Toluol gefüllt.

320 mg Verbindung 3 werden in 68,8 ml Methylenchlorid gelöst und von dieser Lösung werden 5ml (entspricht 23,3mg) in den Reaktor gegeben.

Nach 90min. wird der Versuch beendet indem der Reaktorinhalt in einen mit 21 Ethanol gefüllten Behälter überführt wird.

Das Polymer wird abfiltriert und bei 80°C im Vakuumtrockenschrank getrocknet.

Es werden 15,1 g Polymer erhalten.

Glasübergangstemperatur: -54°C (DSC, 2.Aufheizung)

¹H-NMR(in C₂D₂Cl₄ bei 76°C): 149 CH/1000C.

GPC: Mz: 172000 Mw: 99000 Mn: 38000 Mw/Mn: 2,6

(Die Proben wurden jeweils in ortho-Dichlorbenzol (o-DCB) bei 140°C gelöst und mit einer Hochtemperatur-GPC-Anlage (Waters 150C) auf einer Kombination aus 4 20µm-Styroldivinylbenzol-Linearsäulen (L=300 mm, d=8mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-DCB.)

### Beispiel 10:

Polymerisation von 2-Buten, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierte Glasreaktor wird mit 100ml 1-Hexan, 8.5g trans-2-Buten und 12,1ml einer 10%iger Lösung von Methylaluminoxan in Toluol gefüllt. 187,8 mg Verbindung 3 werden in 40,3 ml Methylenchlorid gelöst und von dieser Lösung werden 10ml (entspricht 46,6mg) in den Reaktor gegeben.

Nach 240min. wird der Versuch beendet indem der Reaktorinhalt mit 40ml Ethanol versetzt und dann zweimal mit je 100 ml destilliertem Wasser gewaschen. Das Lösungsmittel wird am Rotationsverdampfer abgezogen.

Das Polymer wird bei 80°C im Vakuumtrockenschrank getrocknet.

Es werden 6,4g Polymer erhalten.

Glasübergangstemperatur: -53°C (DSC, 2.Aufheizung)

¹H-NMR(in C₂D₂Cl₄ bei 76°C): 247 CH/1000C.

Mw: 216000 Mn: 187000 Mw/Mn: 1.15

(Die Proben wurden jeweils in Tetrahydrofuran bei 40°C gelöst und mit einer GPC-Anlage (Waters) auf einer Kombination aus 3 20µm-Styroldivinylbenzol-Linearsäulen (L=300 mm, d=7,5mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polystyrol).

### Vergleichsbeispiel 3:

Polymerisation von 2-Buten, Cokatalysator: Methylaluminoxan (von Firma Crompton GmbH/Bergkamen als 10%ige Lösung in Toluol: Eurecen A15100/10T mit Molmasse 900g/mol, CH₃/Al: 1.97, Hydrolysegas: 85 Nml/g, 5.2 %m/m Al, 34.2 %m/m TMA)

Ein inertisierte Glasreaktor wird mit 100ml 1-Hexan, 8.7g trans-2-Buten und 12,1ml einer 10%iger Lösung von Methylaluminoxan in Toluol gefüllt.

43,8 mg Verbindung 4 werden in 10 ml Methylenchlorid gelöst und von dieser Lösung wird in den Reaktor gegeben.

Nach 240min. wird der Versuch beendet indem der Reaktorinhalt mit 40ml Ethanol versetzt und dann zweimal mit je 100 ml destilliertem Wasser gewaschen. Das Lösungsmittel wird am Rotationsverdampfer abgezogen.

Das Polymer wird bei 80°C im Vakuumtrockenschrank getrocknet.

Es werden 4,4g Polymer erhalten.

Glasübergangstemperatur: -52°C (DSC, 2.Aufheizung)

¹H-NMR(in C₂D₂Cl₄ bei 76°C): 247 CH/1000C.

Mw: 231000 Mn: 166000 Mw/Mn: 1.39

(Die Proben wurden jeweils in Tetrahydrofuran bei 40°C gelöst und mit einer GPC-Anlage (Waters) auf einer Kombination aus 3 20µm-Styroldivinylbenzol-Linearsäulen (L=300 mm, d=7,5mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polystyrol).

## Patentansprüche

1. Verbindungen der Formel (I), 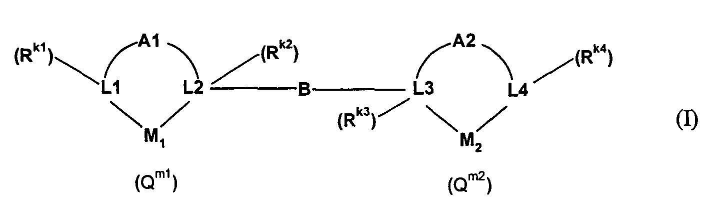 worin
M₁ und M₂ gleich oder verschieden sein können und unabhängig voneinander ausgewählt sind aus der Gruppe bestehend aus Übergangsmetallen der 3. bis 11. Gruppe des Periodensystems, Al und B und
L1, L2, L3, L4 gleich oder verschieden sein können und unabhängig voneinander ausgewählt sind aus der Gruppe bestehend aus N, P, S, O, C, Si, Se, As und Sb und
A1 und A2 gleich oder verschieden sein können und unabhängig voneinander ausgewählt sind aus Gruppen und/oder Atomen, die die Zentren L1 mit L2 und L3 mit L4 über eine kovalente Bindung verbrücken können und optional weitere koordinierende Gruppen für M₁ und M₂ enthalten können und
B eine Gruppe ist, die die Zentren L2 mit L3 elektronisch über kovalente Bindungen miteinander verknüpft und
m1 die Anzahl und die Unterschiede der einzelnen Liganden Q wiedergibt und für alle Werte zwischen 1 bis 6 steht, und
m2 die Anzahl und die Unterschiede der einzelnen Liganden Q wiedergibt und für alle Werte zwischen 1 bis 6 steht, und
Q für eine Gruppe von 1 bis 6 Liganden steht, die an M₁ gebunden sind und für eine Gruppe von 1 bis 6 Liganden steht, die an M₂ gebunden sind, wobei sowohl die Q-Liganden, die an M₁ als auch die Q-Liganden die an M₂ gebunden sind, gleich oder verschieden sein können und unabhängig voneinander ausgewählt werden aus der Gruppe bestehend aus monoanionischen, dianionischen und neutralen Liganden und
k1 die Anzahl und die Unterschiede der einzelnen Substituenten R, die an L1 gebunden sind, wiedergibt und für alle Werte zwischen 0 bis s¹-1 steht, wobei s¹ die Valenz von L1 ist und
k2 die Anzahl und die Unterschiede der einzelnen Substituenten R, die an L2 gebunden sind, wiedergibt und für alle Werte zwischen 0 bis s²-2 steht, wobei s² die Valenz von L2 ist und
k3 die Anzahl und die Unterschiede der einzelnen Substituenten R, die an L3 gebunden sind, wiedergibt und für alle Werte zwischen 0 bis s³-2 steht, wobei s³ die Valenz von L3 ist und
k4 die Anzahl und die Unterschiede der einzelnen Substituenten R, die an L4 gebunden sind, wiedergibt und für alle Werte zwischen 0 bis s⁴-1 steht, wobei s⁴ die Valenz von L4 ist und
R für eine Gruppe von 0 bis s¹-1 Substituenten, die an L1 gebunden sind, eine Gruppe von 0 bis s²-2 Substituenten, die an L2 gebunden sind, eine Gruppe von 0 bis s³-2 Substituenten, die an L3 gebunden sind und für eine Gruppe von 0 bis s⁴-1 Substituenten, die an L4 gebunden sind, steht, wobei diese gleich oder verschieden sein können und unabhängig voneinander ausgewählt sind aus der Gruppe bestehend aus Hydrid, C₁₋₂₀-Alkyl-, C₁₋₂₀-Alkenyl-, C₅₋₂₀-Cycloalkyl, C₆₋₂₀-Aryl-, C₁₋₂₀-Heteroaryl-, Alkylaryl-gruppen mit C₁₋₂₀-Gruppierungen im Alkylrest und C₆₋₂₀-Gruppierungen im Arylrest, -OD¹, -ND²D³, PD⁶D⁷D⁸ und -BD⁹D¹⁰,
wobei D¹ bis D¹⁰ gleich oder verschieden sein kann und unabhängig voneinander ausgewählt ist aus der Gruppe bestehend aus H, C₁₋₂₀ -Alkyl-, C₅₋₂₀-Cycloalkyl-, C₆₋₂₀-Aryl-, Alkylarylgruppen mit C₁₋₂₀-Gruppierungen im Alkylrest und C₆₋₂₀-Gruppierungen im Arylrest und Arylalkylgruppen mit C₁₋₂₀-Gruppierungen im Alkylrest und C₆₋₂₀-Gruppierungen im Arylrest.

2. Verbindungen nach Anspruch 1, wobei
L1, L2, L3 und L4 gleich oder verschieden sind und unabhängig voneinander ausgewählt sind aus der Gruppe bestehend aus N, O, P und S.

3. Verbindungen der Formel (II) nach einem der Ansprüche 1 bis 2, 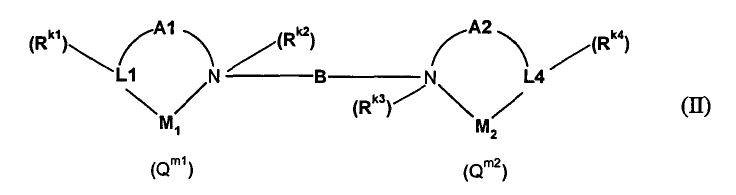 wobei L2 und L3 Stickstoffzentren sind.

4. Verbindungen nach einem der Ansprüche 1 bis 3, wobei
A1 und A2 gleich oder verschieden sind und unabhängig voneinander ausgewählt sind aus der Gruppe bestehend aus gesättigten oder ungesättigten Kohlenwasserstoffresten mit 1 bis 20 C-Atomen, cyclischen gesättigten oder ungesättigten Kohlenwasserstoffresten mit 4 bis 20 C-Atomen, heterocyclischen gesättigten oder ungesättigen Verbindungen mit 3 bis 20 C-Atomen, stickstoffhaltigen Gruppen, phosphorhaltigen Gruppen, siliziumhaltigen Gruppen, zinnhaltigen Gruppen, germaniumhaltigen Gruppen und borhaltigen Gruppen , wobei all diese Gruppen noch weitere Substituenten tragen können.

5. Verbindungen gemäß einem der Ansprüche 1 bis 4 bei denen B eine aromatische oder heteroaromatische Gruppe ist, die weitere Substituenten tragen kann.

6. Verbindungen der Formel (IV) nach einem der Ansprüche 1 bis 5, 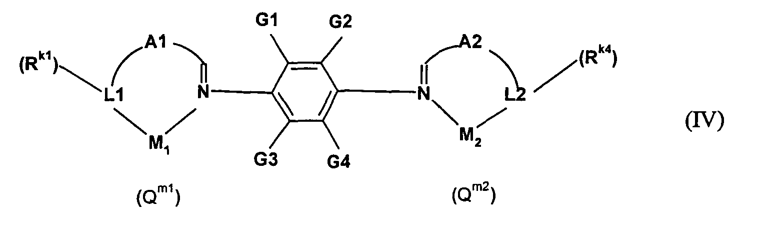 wobei L2 und L3 Stickstoffzentren sind, die zu A1 und A2 über eine Doppelbindung verknüpft sind und wobei B ein para-substituierter aromatischer Sechsring ist, der mit Substituenten
G1, G2, G3, G4 die gleich oder verschieden sind und ausgewählt sind aus der Gruppe bestehend aus Halogenid, Hydrid, C₁₋₂₀-Alkyl-, C₁₋₂₀-Alkenyl-, C₅₋₂₀-Cycloalkyl-, C₆₋₂₀-Aryl-, Alkylarylgruppen mit C₁₋₂₀-Gruppierungen im Alkylrest und C₆₋₂ Gruppierungen im Arylrest, -OT¹, -OT¹T², -NT³T⁴, -NT⁵T⁶T⁷, -PT⁸T⁹, -PT¹⁰T¹¹T¹², wobei T'bis T¹² gleich oder verschieden sind und unabhängig voneinander ausgewählt sind aus der Gruppe bestehend aus H, C₁₋₂₀-Alkyl-, C₅₋₂₀-Cycloalkyl-, C₆₋₂₀-Aryl-, C₁₋₂₀-Heteroaryl-, Alkylarylgruppen mit C₁₋₂₀Gruppierungen im Alkylrest und C₆₋₂₀-Gruppierungen im Arylrest und Arylalkylgruppen mit C₁₋₂₀-Gruppierungen im Alkylrest und C₆₋₂₀-Gruppierungen im Arylrest

7. Verbindungen nach einem der Ansprüche 1 bis 6, wobei
L1 gleich L4 ist und das unsubstituierte Grundgerüst von A1 gleich dem unsubstituierten Grundgerüst von A2 ist.

8. Verbindungen nach einem der Ansprüche 1 bis 7, wobei
R^{k1} und R^{k4} für eine Gruppe von 1 bis s¹-2 Substituenten steht, die an L1 gebunden sind und für eine Gruppe von 1 bis s⁴-2 Substituenten, die an L4 gebunden sind, wobei diese gleich oder verschieden sind und unabhängig voneinander ausgewählt sind aus der Gruppe bestehend aus ungesättigten C₆₋₂₀ Ringsystemen, die weitere Substituenten enthalten können, die gleich oder verschieden sein können und unabhängig voneinander ausgewählt sind aus der Gruppe bestehend aus Halogenid, Hydrid, C₁₋₂₀-Alkyl-, C₁₋₂₀-Alkenyl-, C₅₋₂₀-Cycloalkyl-, C₆₋₂₀-Alkylarylgruppen mit C₁₋₂₀-Gruppierungen im Alkylrest und C₆₋₂₄-Gruppierungen im Arylrest, -OT¹, -OT¹T², -NT³T⁴, -NT⁵T⁶T⁷, -PT⁸T⁹ und -PT¹⁰T¹¹T¹² und zwei benachbarte Substituenten gemeinsam einen gesättigten oder ungesättigten Ring bilden können, der weitere Substituenten tragen kann.

9. Verbindungen nach einem der Ansprüche 1 bis 8, wobei die Substituenten R der Gruppen R^{k1} und R^{k4} jeweils ausgewählt sind aus der Gruppe von substituierten Aryl- und/oder Heteroarylgruppen.

10. Verbindungen nach einem der Ansprüche 1 bis 9, wobei
M₁ und M₂ gleich oder verschieden sind und unabhängig voneinander ausgewählt sind aus der Gruppe bestehend aus Ti, Zr, Hf, V, Cr, Mo, W, Mn, Fe, Ru, Co, Rh, Ni, Pd, Pt, Cu, Zn, Al und B
Q für eine Gruppe steht von 1 bis r¹-2 Liganden die an M₁ gebunden sind und für eine Gruppe von 1 bis r²-2 Liganden, die an M₂ gebunden sind, wobei sowohl die Q-Liganden, die an M₁ als auch die Q-Liganden die an M₂ gebunden sind gleich oder verschieden sind und unabhängig voneinander ausgewählt aus der Gruppe bestehend aus Halogenid, Hydrid, C₁₋₁₀-Alkyl-, C₁₋₂₀-Alkenyl-, C₅₋₂₀-Cycloalkyl-, C₆₋₂₀-Aryl-, C₁₋₂₀-Heteroaryl-, Alkylarylgruppen mit C₁₋₂₀-Gruppierungen im Alkyrest und C₆₋₁₄ -Gruppierungen im Arylrest, OT¹, OT¹T², -NT³T⁴, -NT⁵T⁶T⁷, -PT⁸T⁹, -PT¹⁰T¹¹T¹², 1,2-Alkandiyl-Verbindungen, 1,4-Alkaniyl-Verbindungen, 1,5-Alkandiyl-Verbindungen, 1,ω-Alkandiyl-Verbindungen, Dialkoholate, Dithiolate, Diamide, Ether, Amine, Phosphine, Phosphinoxide, Olefine, Acetylene, Kohlenmonoxid, Stickstoff, Wasserstoff, Carbene, Stickstoff-,
Kohlenstoff- und Phosphorylide.

11. Verbindungen nach einem der Ansprüche 1 bis 10, wobei
M₁ und M₂ gleich oder verschieden sind und unabhängig voneinander ausgewählt aus der Gruppe bestehend aus Ti, Zr, Hf, Fe, Ru, Co, Ni und Pd.

12. Die Verbindung gemäß Formel (VI)

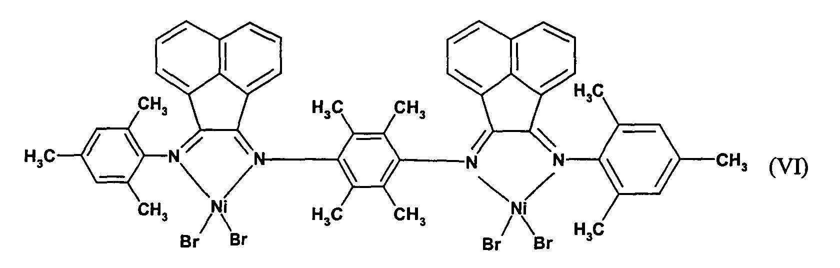

13. Verfahren zur Herstellung der Verbindungen nach einem der Ansprüche 1 bis 12, umfassend die Schritte
Herstellung einer Verbindung der Formel (VII) 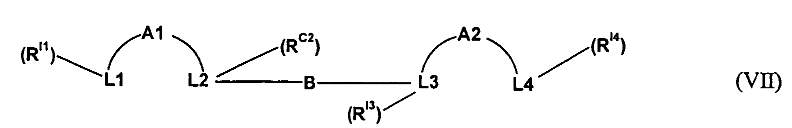 anschließende Umsetzung der Verbindung der Formel (VII) entweder
I) mit einer metallischen Verbindung der Formel M₁(Q^{m1}) und weitere Umsetzung mit einer metallischen Verbindung der Formel M₂(Q^{m2}) oder
II) mit einer metallischen Verbindung der Formel M₃(Q^{o3}), dann Umsetzung mit einer metallischen Verbindung der Formel M₁(Q^{m1}) und weitere Umsetzung mit einer metallischen Verbindung der Formel M₂(Q^{m2}) oder
III) mit einer metallischen Verbindung der Formel M₁(Q^{m1}), dann Umsetzung mit einer metallischen Verbindung der Formel M₃(Q^{o3}) und weitere Umsetzung mit einer metallischen Verbindung der Formel M₂(Q^{m2}) oder
IV) mit einer metallischen Verbindung der Formel M₃(Q^{o3}), dann Umsetzung mit einer metallischen Verbindung der Formel M₁(Q^{m1}), dann wiederum einer Umsetzung mit einer metallischen Verbindung der Formel M₃(Q^{o3}) und weitere Umsetzung mit einer metallischen Verbindung der Formel M₂(Q^{m2}) oder
V) mit einer mehreren metallischen Verbindungen der Formel M₃(Q^{o3}), dann Umsetzung mit einer metallischen Verbindung der Formel M₄(Q^{o4}), anschließender Umsetzung mit einer metallischen Verbindung der Formel M₁(Q^{m1}) und anschließende Umsetzung mit einer metalischen Verbindung der Formel M₂(Q^{m2}) oder
VI) mit einer metallischen Verbindung der Formel M₁(Q^{m1}), dann Umsetzung mit einer metallischen Verbindung der Formel M₃(Q^{o3}), anschließende Umsetzung mit einer metallischen Verbindungen der Formel M₄(Q^{o4}) und anschließende Umsetzung mit einer metallischen Verbindung der Formel M₂(Q^{m2}) oder
VII) mit einer metallischen Verbindung der Formel M₃(Q^{o3}), dann Umsetzung mit einer metallischen Verbindung der Formel M₄(Q^{o4}), dann Umsetzung mit einer metallischen Verbindung der Formel M₁(Q^{m1}), anschließend wieder Umsetzung mit einer metallischen Verbindung der Formel M₃(Q^{o3}), dann wieder Umsetzung mit einer metallischen Verbindung M₄(Q^{o4}) und anschließende Umsetzung mit einer metallischen Verbindung der Formel M₂(Q^{m2}),
wobei o3 und o4 die Anzahl und die Unterschiede der einzelnen Liganden Q wiedergeben und für alle Werte zwischen 1 bis 8 für die Q-Liganden, die an M₃ gebunden sind, stehen und für alle Werte zwischen 1 bis 8 für die Q-Liganden, die an M₄ gebunden sind, stehen und wobei
M₃ und M₄ gleich oder verschieden sein können und unabhängig von einander ausgewählt sind aus der Gruppe von bestehend aus Übergangsmetallen der 3. bis 11. Gruppe des Periodensystems, A1 und B

14. Verwendung der Verbindungen nach einem der Ansprüche 1 bis 12 als Katalysator.

15. Verwendung der Verbindungen nach einem der Ansprüche 1 bis 12, wobei die Verbindungen in Gegenwart von Säuren oder Basen umgesetzt werden.

16. Zwischenprodukt erhältlich durch Umsetzung einer der Verbindungen nach einem der Ansprüche 1 bis 12 mit einer Säure oder einer Base.

17. Verfahren zur Herstellung von Homo-, Co- und/oder Oligo-Polymeren, wobei Verbindungen nach einem der Ansprüche 1 bis 12 oder Zwischenprodukte nach Anspruch 16 mit olefinischen Monomeren umgesetzt werden.

18. Verfahren nach Anspruch 17, wobei die olefinischen Monomere ausgewählt sind aus der Gruppe bestehend aus Ethen, Propen, 1-Buten, 2-Buten, Isobuten, 1-Penten, 2-Penten, 1-Hexen, 2-Hexen, 3-Hexen, 1-Hepten, 1-Octen, 1-Decen, 1-Dodecen, Cyclopenten, Norbornen, Styrol, p-Methylstyrol, Methylacrylat, Methylmethacrylat, Vinylacetat, Acrylnitril und Methacrylnitril oder Mischungen derselben.

19. Polymere erhältlich durch das Verfahren nach einem der Ansprüche 17 bis 18.

20. Verwendung der Polymere nach Anspruch 19 zur Herstellung von Formteilen aller Art.

21. Formteile erhältlich durch Verarbeitung der Polymere nach Anspruch 19.
